(19) Europäisches Patentamt
European Patent Office
Office européen des brevets

(11) **EP 4 235 246 A1**

(12) **EUROPEAN PATENT APPLICATION**

(43) Date of publication:
**30.08.2023 Bulletin 2023/35**

(21) Application number: **23156644.9**

(22) Date of filing: **14.02.2023**

(51) International Patent Classification (IPC):
**G02B 7/02** *(2021.01)*        **G03B 17/12** *(2021.01)*

(52) Cooperative Patent Classification (CPC):
**G02B 7/021; G02B 13/0045;** G03B 17/12

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.02.2022 TW 111107152**

(71) Applicant: **Largan Precision Co. Ltd.
Taichung City 408 (TW)**

(72) Inventors:
• **CHANG, Pei-Chi
  408 Taichung City (TW)**
• **SU, Heng-Yi
  408 Taichung City (TW)**
• **HUANG, Hsuan-Chin
  408 Taichung City (TW)**

(74) Representative: **Jakelski & Althoff
Patentanwälte PartG mbB
Patentanwälte
Partnerschaftsgesellschaft
Mollenbachstraße 37
71229 Leonberg (DE)**

(54) **IMAGING LENS ASSEMBLY, CAMERA MODULE AND ELECTRONIC DEVICE**

(57)    An imaging lens assembly includes a plurality of optical elements, an optical axis passing through the optical elements is defined, and the optical elements include at least one mixing optical element. The mixing optical element includes a glass effective optical portion and a plastic outer peripheral portion. The optical axis passes through the glass effective optical portion. The plastic outer peripheral portion surrounds and physically contacts the glass effective optical portion, and forms an aperture hole. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an outer surface, an inner surface and two side surfaces.

Fig. 1E

## Description

## BACKGROUND

Technical Field

The present disclosure relates to an imaging lens assembly and a camera module. More particularly, the present disclosure relates to an imaging lens assembly and a camera module with compact size applicable to electronic devices.

Description of Related Art

In recent years, portable electronic devices have developed rapidly. For example, intelligent electronic devices and tablets have been filled in the lives of modern people, and camera modules and imaging lens assemblies thereof mounted on portable electronic devices have also prospered. However, as technology advances, the quality requirements of the imaging lens assemblies are becoming higher and higher. Therefore, an imaging lens assembly, which can balance the compact size and the image quality, needs to be developed.

## SUMMARY

According to one aspect of the present disclosure, an imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The glass effective optical portion includes an object-side surface, an image-side surface and a connecting surface. The object-side surface faces towards an object side of the imaging lens assembly. The image-side surface faces towards an image side of the imaging lens assembly, and is disposed opposite to the object-side surface. The connecting surface surrounds the optical axis and connects the object-side surface and the image-side surface. The plastic outer peripheral portion surrounds and physically contacts the glass effective optical portion, and forms an aperture hole. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an outer surface, an inner surface and two side surfaces. The inner surface is disposed opposite to the outer surface and closer to the optical axis than the outer surface to the optical axis. The two side surfaces connect the outer surface and the inner surface. The connecting surface of the glass effective optical portion is closer to the optical axis than the inner surface of each of the recess structures to the optical axis. The connecting surface of the glass effective optical portion overlaps with the inner surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: 0.1 < D/T < 0.8.

According to the aforementioned imaging lens assembly, wherein each of the recess structures is formed by the outer surface, the inner surface and the two side surfaces connecting to each other and surrounding an inner space.

According to the aforementioned imaging lens assembly, wherein a connecting position of the object-side surface and the connecting surface of the glass effective optical portion has an object-side edge line, and the object-side edge line defines a maximum contour of the object-side surface.

According to the aforementioned imaging lens assembly, wherein a connecting position of the image-side surface and the connecting surface of the glass effective optical portion has an image-side edge line, and the image-side edge line defines a maximum contour of the image-side surface.

According to the aforementioned imaging lens assembly, wherein the object-side edge line and the image-side edge line are shaded by the plastic outer peripheral portion corresponding to observations on the at least one mixing optical element from both of the object side and the image side of the imaging lens assembly along the direction parallel to the optical axis.

According to the aforementioned imaging lens assembly, wherein a bottom surface is exposed from the inner space corresponding to an observation on the inner space of each of the recess structures from the object side or the image side of the imaging lens assembly along the direction parallel to the optical axis.

According to the aforementioned imaging lens assembly, wherein both of the object-side surface and the image-side surface of the glass effective optical portion physically contact the plastic outer peripheral portion.

According to the aforementioned imaging lens assembly, wherein both of the object-side surface and the image-side surface of the glass effective optical portion overlap with the plastic outer peripheral portion along the direction parallel to the optical axis.

According to the aforementioned imaging lens assembly, wherein a linear expansion coefficient of the glass effective optical portion is CTEg, a linear expansion coefficient of the plastic outer peripheral portion is CTEp, and the following condition is satisfied: 1 < CTEp/CTEg < 50.

According to the aforementioned imaging lens assembly, wherein a linear expansion coefficient of the glass effective optical portion is CTEg, a linear expansion coefficient of the plastic outer peripheral portion is CTEp, and the following condition is satisfied: 5 < CTEp/CTEg < 25.

According to another aspect of the present disclosure, an imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The glass effective optical portion includes an object-side surface, an image-side surface and a connecting surface. The object-side surface faces towards an object side of the imaging lens assembly. The image-side surface faces towards an image side of the imaging lens assembly and is disposed opposite to the object-side surface. The connecting surface surrounds the optical axis and connects the object-side surface and the image-side surface. The plastic outer peripheral portion surrounds and physically contacts the glass effective optical portion, and forms an aperture hole. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an outer surface and two side surfaces. The two side surfaces connect the outer surface and the aperture hole. The connecting surface of the glass effective optical portion is closer to the optical axis than the outer surface of each of the recess structures to the optical axis. The connecting surface of the glass effective optical portion overlaps with the outer surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: 0.1 < D/T < 0.95.

According to the aforementioned imaging lens assembly, wherein each of the recess structures is formed by the outer surface and the two side surfaces connecting to each other and surrounding an inner space.

According to the aforementioned imaging lens assembly, wherein a connecting position of the object-side surface and the connecting surface of the glass effective optical portion has an object-side edge line, and the object-side edge line defines a maximum contour of the object-side surface.

According to the aforementioned imaging lens assembly, wherein a connecting position of the image-side surface and the connecting surface of the glass effective optical portion has an image-side edge line, and the image-side edge line defines a maximum contour of the image-side surface.

According to the aforementioned imaging lens assembly, wherein corresponding to an observation on each of the recess structures from the object side or the image side along the direction parallel to the optical axis, an arc length of a part of the object-side edge line exposed from the inner space of each of the recess structures is Ao, a sum of the arc lengths of the object-side edge line exposed from the inner space of each of the recess structures is $\Sigma$Ao, an arc length of a part of the image-side edge line exposed from the inner space of each of the recess structures is Ai, a sum of the arc lengths of the image-side edge line exposed from the inner space of each of the recess structures is $\Sigma$Ai, a shading ratio of the object-side edge line shaded by the plastic outer peripheral portion is Ro, a shading ratio of the image-side edge line shaded by the plastic outer peripheral portion is Ri, a maximum diameter of the connecting surface of the glass effective optical portion is $\psi$Do, and at least one of the following conditions is satisfied: 30% < Ro, wherein Ro = 1 - $\Sigma$Ao/($\psi$Do$\times\pi$) and 10% < Ri < 95%, wherein Ri = 1 - $\Sigma$Ai/($\psi$Do$\times\pi$).

According to the aforementioned imaging lens assembly, wherein a part of the object-side edge line, a part of the image-side edge line and an air gap are exposed from the inner space of each of the recess structures corresponding to observations on each of the recess structures from both of the object side and the image side of the imaging lens assembly along the direction parallel to the optical axis.

According to the aforementioned imaging lens assembly, wherein a part of the object-side edge line and a bottom surface are exposed from the inner space of each of the recess structures corresponding to an observation on each of the recess structures from the object side of the imaging lens assembly along the direction parallel to the optical axis.

According to the aforementioned imaging lens assembly, wherein a part of the image-side edge line and a bottom surface are exposed from the inner space of each of the recess structures corresponding to an observation on each of the recess structures from the image side of the imaging lens assembly along the direction parallel to the optical axis.

According to the aforementioned imaging lens assembly, wherein both of the object-side surface and the image-side surface of the glass effective optical portion physically contact the plastic outer peripheral portion.

According to the aforementioned imaging lens assembly, wherein both of the object-side surface and the image-side surface of the glass effective optical portion overlap with the plastic outer peripheral portion along the direction parallel to the optical axis.

According to the aforementioned imaging lens assembly, wherein the plastic outer peripheral portion further includes at least one bearing structure and at least one optical aligning structure. The bearing structure is used to bear at least one of the optical elements adjacent to the bearing structure. The optical aligning structure is used to align the at least one optical element adjacent to the optical aligning structure.

According to the aforementioned imaging lens assembly, wherein a maximum diameter of the connecting surface of the glass effective optical portion is $\psi$Do, a minimum diameter of the optical aligning structure of the plastic outer peripheral portion is $\psi$Da, a maximum diameter of the at least one bearing structure of the plastic outer peripheral portion is $\psi$Dp, and the following condition is satisfied: $\psi$Do < $\psi$Da < $\psi$Dp.

According to the aforementioned imaging lens assembly, wherein a coaxality of the maximum diameter $\psi$Do of the connecting surface of the glass effective optical portion and the maximum diameter $\psi$Dp of the at least one bearing structure of the plastic outer peripheral portion is Co, and the following condition is satisfied: 0 mm < Co < 0.005 mm.

According to the aforementioned imaging lens assembly, wherein a coaxality of the maximum diameter $\psi$Do of the connecting surface of the glass effective optical portion and the minimum diameter qjDa of the optical aligning structure of the plastic outer peripheral portion is Co1, and the following condition is satisfied: 0 mm < Co1 < 0.003 mm.

According to the aforementioned imaging lens assembly, wherein the at least one mixing optical element has at least three gate traces.

According to further another aspect of the present disclosure, an imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The glass effective optical portion includes an object-side surface, an image-side surface and a connecting surface. The object-side surface faces towards an object side of the imaging lens assembly. The image-side surface faces towards an image side of the imaging lens assembly, and is disposed opposite to the object-side surface. The connecting surface surrounds the optical axis and connects the object-side surface and the image-side surface. The plastic outer peripheral portion surrounds and physically contacts the glass effective optical portion and forms an aperture hole. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an inner surface and two side surfaces. The two side surfaces connect the inner surface and the aperture hole. The connecting surface of the glass effective optical portion is closer to the optical axis than the inner surface of each of the recess structures to the optical axis. The connecting surface of the glass effective optical portion overlaps with the inner surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: 0.1 < D/T < 1.

According to the aforementioned imaging lens assembly, wherein each of the recess structures is formed by the inner surface and the two side surfaces connecting to each other and surrounding an outer space.

According to the aforementioned imaging lens assembly, wherein a connecting position of the object-side surface and the connecting surface of the glass effective optical portion has an object-side edge line, and the object-side edge line defines a maximum contour of the object-side surface.

According to the aforementioned imaging lens assembly, wherein a connecting position of the image-side surface and the connecting surface of the glass effective optical portion has an image-side edge line, and the image-side edge line defines a maximum contour of the image-side surface.

According to the aforementioned imaging lens assembly, wherein the object-side edge line and the image-side edge line are shaded by the plastic outer peripheral portion corresponding to an observation on the at least one mixing optical element from one of the object side and the image side of the imaging lens assembly along the direction parallel to the optical axis.

According to the aforementioned imaging lens assembly, wherein a bottom surface is exposed from the outer space corresponding to an observation on the outer space of each of the recess structures from the object side or the image side of the imaging lens assembly along the direction parallel to the optical axis.

According to the aforementioned imaging lens assembly, wherein an air gap is exposed from the outer space corresponding to observations on the outer space of each of the recess structures from both of the object side and the image side of the imaging lens assembly along the direction parallel to the optical axis.

According to the aforementioned imaging lens assembly, wherein both of the object-side surface and the image-side surface of the glass effective optical portion physically contact the plastic outer peripheral portion.

According to the aforementioned imaging lens assembly, wherein both of the object-side surface and the image-side surface of the glass effective optical portion overlap with the plastic outer peripheral portion along the direction parallel to the optical axis.

According to further another aspect of the present disclosure, a camera module includes the imaging lens assembly of the aforementioned aspect.

According to further another aspect of the present disclosure, an electronic device includes the aforementioned camera module and an image sensor. The image sensor is disposed on an image surface of the camera module.

## BRIEF DESCRIPTION OF THE DRAWINGS

The present disclosure can be more fully understood by reading the following detailed description of the embodiment, with reference made to the accompanying drawings as follows:

Fig. 1A is a three-dimensional schematic view of an imaging lens assembly according to the 1st example of the 1st embodiment of the present disclosure.

Fig. 1B is a schematic view of an image side of the imaging lens assembly according to Fig. 1A.

Fig. 1C is a cross-sectional view of Fig. 1B along line 1C-1C.

Fig. 1D is an exploded view of the imaging lens assembly according to Fig. 1A.

Fig. 1E is a three-dimensional view of the mixing optical element of the imaging lens assembly according to the 1st example of the 1st embodiment in Fig. 1A.

Fig. 1F is a plan view of an image side of the mixing optical element according to Fig. 1E.

Fig. 1G is a side view of the mixing optical element according to Fig. 1E.

Fig. 1H is a plan view of the object side of the mixing optical element according to Fig. 1E.

Fig. 1I is a cross-sectional view of Fig. 1F along line 11-11.

Fig. 1J is a cross-sectional view of Fig. 1F along line 1J-1J.

Fig. 1K is a partial cross-sectional view of the mixing optical element according to Fig. 1E.

Fig. 1L is an exploded view of the mixing optical element according to Fig. 1E.

Fig. 1M is a schematic view of a plastic outer peripheral portion of the mixing optical element according to Fig. 1E.

Fig. 1N is a three-dimensional view of a mixing optical element of the imaging lens assembly according to the 2nd example of the 1st embodiment in Fig. 1A.

Fig. 1O is a plan view of an image side of the mixing optical element according to Fig. 1N.

Fig. 1P is a side view of the mixing optical element according to Fig. 1N.

Fig. 1Q is a plan view of an object side of the mixing optical element according to Fig. 1N.

Fig. 1R is a cross-sectional view of Fig. 1O along line 1R-1R.

Fig. 1S is a cross-sectional view of Fig. 1O along line 1S-1S.

Fig. 1T is a schematic view of a plastic outer peripheral portion of the mixing optical element according to Fig. 1N.

Fig. 2A is a three-dimensional schematic view of an imaging lens assembly according to the 1st example of the 2nd embodiment of the present disclosure.

Fig. 2B is a schematic view of an image side of the imaging lens assembly according to Fig. 2A.

Fig. 2C is a cross-sectional view of Fig. 2B along line 2C-2C.

Fig. 2D is an exploded view of the imaging lens assembly according to Fig. 2A.

Fig. 2E is a three-dimensional view of the mixing optical element of the imaging lens assembly according to the 1st example of the 2nd embodiment in Fig. 2A.

Fig. 2F is a plan view of an image side of the mixing optical element according to Fig. 2E.

Fig. 2G is a side view of the mixing optical element according to Fig. 2E.

Fig. 2H is a plan view of the object side of the mixing optical element according to Fig. 2E.

Fig. 2I is a cross-sectional view of Fig. 2F along line 2I-2I.

Fig. 2J is a cross-sectional view of Fig. 2F along line 2J-2J.

Fig. 2K is a partial cross-sectional view of the mixing optical element according to Fig. 2E.

Fig. 2L is an exploded view of the mixing optical element according to Fig. 2E.

Fig. 2M is a schematic view of a plastic outer peripheral portion of the mixing optical element according to Fig. 2E.

Fig. 2N is a three-dimensional view of a mixing optical element of the imaging lens assembly according to the 2nd example of the 2nd embodiment in Fig. 2A.

Fig. 2O is a plan view of an image side of the mixing optical element according to Fig. 2N.

Fig. 2P is a side view of the mixing optical element according to Fig. 2N.

Fig. 2Q is a plan view of an object side of the mixing optical element according to Fig. 2N.

Fig. 2R is a cross-sectional view of Fig. 2O along line 2R-2R.

Fig. 2S is a cross-sectional view of Fig. 2O along line 2S-2S.

Fig. 2T is a schematic view of a plastic outer peripheral portion of the mixing optical element according to Fig. 2N.

Fig. 3A is a three-dimensional schematic view of an imaging lens assembly according to the 1st example of the 3rd embodiment of the present disclosure.

Fig. 3B is a schematic view of an image side of the imaging lens assembly according to Fig. 3A.

Fig. 3C is a cross-sectional view of Fig. 3B along line 3C-3C.

Fig. 3D is an exploded view of the imaging lens assembly according to Fig. 3A.

Fig. 3E is an exploded view of the mixing optical element of the imaging lens assembly according to Fig. 3D.

Fig. 3F is a schematic view of an image side of the mixing optical element of the imaging lens assembly according to Fig. 3D.

Fig. 3G is a cross-sectional view of Fig. 3F along line 3G-3G.

Fig. 3H is a partial cross-sectional view of the mixing optical element of the imaging lens assembly according to Fig. 3D.

Fig. 3I is a three-dimensional view of the mixing optical element of the imaging lens assembly according to the 1st example of the 3rd embodiment in Fig. 3A.

Fig. 3J is a plan view of an image side of the mixing optical element according to Fig. 3I.

Fig. 3K is a side view of the mixing optical element according to Fig. 3I.

Fig. 3L is a plan view of an object side of the mixing optical element according to Fig. 3I.

Fig. 3M is a cross-sectional view of Fig. 3J along line 3M-3M.

Fig. 3N is a cross-sectional view of Fig. 3J along line 3N-3N.

Fig. 3O is a partial cross-sectional view of the mixing optical element according to Fig. 3I.

Fig. 3P is an exploded view of the mixing optical element according to Fig. 3I.

Fig. 3Q is a schematic view of a plastic outer peripheral portion of the mixing optical element according to Fig. 3I.

Fig. 3R is a three-dimensional view of a mixing optical element of the imaging lens assembly according to the 2nd example of the 3rd embodiment in Fig. 3A.

Fig. 3S is a plan view of an image side of the mixing optical element according to Fig. 3R.

Fig. 3T is a side view of the mixing optical element according to Fig. 3R.

Fig. 3U is a plan view of an object side of the mixing optical element according to Fig. 3R.

Fig. 3V is a cross-sectional view of Fig. 3S along line 3V-3V.

Fig. 3W is a cross-sectional view of Fig. 3S along line 3W-3W.

Fig. 3X is a partial cross-sectional view of the mixing optical element according to Fig. 3R.

Fig. 3Y is an exploded view of the mixing optical element according to Fig. 3R.

Fig. 3Z is a schematic view of a plastic outer peripheral portion of the mixing optical element according to Fig. 3R.

Fig. 4A is a three-dimensional view of a mixing optical element of an imaging lens assembly according to the 1st example of the 4th embodiment of the present disclosure.

Fig. 4B is a plan view of an image side of the mixing optical element according to Fig. 4A.

Fig. 4C is a side view of the mixing optical element according to Fig. 4A.

Fig. 4D is a plan view of the object side of the mixing optical element according to Fig. 4A.

Fig. 4E is a cross-sectional view of Fig. 4B along line 4E-4E.

Fig. 4F is a cross-sectional view of Fig. 4B along line 4F-4F.

Fig. 4G is a partial cross-sectional view of the mixing optical element according to Fig. 4A.

Fig. 4H is an exploded view of the mixing optical element according to Fig. 4A.

Fig. 5A is a three-dimensional view of a mixing optical element of an imaging lens assembly according to the 1st example of the 5th embodiment of the present disclosure.

Fig. 5B is a plan view of an image side of the mixing optical element according to Fig. 5A.

Fig. 5C is a side view of the mixing optical element according to Fig. 5A.

Fig. 5D is a plan view of the object side of the mixing optical element according to Fig. 5A.

Fig. 5E is a cross-sectional view of Fig. 5B along line 5E-5E.

Fig. 5F is a cross-sectional view of Fig. 5B along line 5F-5F.

Fig. 5G is a partial cross-sectional view of the mixing optical element according to Fig. 5A.

Fig. 5H is an exploded view of the mixing optical element according to Fig. 5A.

Fig. 5I is a three-dimensional view of a mixing optical element of an imaging lens assembly according to the 2nd example of the 5th embodiment of the present disclosure.

Fig. 5J is a plan view of an image side of the mixing optical element according to Fig. 5I.

Fig. 5K is a side view of the mixing optical element according to Fig. 5I.

Fig. 5L is a plan view of the object side of the mixing optical element according to Fig. 5I.

Fig. 5M is a cross-sectional view of Fig. 5J along line 5M-5M.

Fig. 5N is a cross-sectional view of Fig. 5J along line 5N-5N.

Fig. 6A is a schematic view of an electronic device according to the 6th embodiment of the present disclosure.

Fig. 6B is a block diagram of the electronic device according to the 6th embodiment of Fig. 6A.

Fig. 6C is a schematic view of selfie scene according to the 6th embodiment of Fig. 6A.

Fig. 6D is a schematic view of shot image according to the 6th embodiment of Fig. 6A.

## DETAILED DESCRIPTION

According to one aspect of the present disclosure, an imaging lens assembly is provided. The imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The plastic outer peripheral portion surrounds and physically contacts the glass effective optical portion, and forms an aperture hole. The glass effective optical portion includes an object-side surface, an image-side surface and a connecting surface. The object-side surface faces towards an object side of the imaging lens assembly. The image-side surface faces towards an image side of the imaging lens assembly, and is disposed opposite to the object-side surface. The connecting surface surrounds the optical axis and connects the object-side surface and the image-side surface. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an outer surface, an inner surface and two side surfaces. The inner surface is disposed opposite to the outer surface and closer to the optical axis than the outer surface to the optical axis. The side surfaces connect the outer surface and the inner surface. The connecting surface of the glass effective optical portion is closer to the optical axis than the inner surface of each of the recess structures to the optical axis. The connecting surface of the glass effective optical portion overlaps with the inner surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: $0.1 < D/T < 0.8$. Therefore, the plastic outer peripheral portion is used to fix the glass effective optical portion at a geometrical central axis, and a tolerance between the mixing optical element and the adjacent optical elements is absorbed by the plastic outer peripheral portion, so that the assembling accuracy of the mixing optical element can be improved.

Each of the recess structures can be formed by the outer surface, the inner surface and the two side surfaces connecting to each other and surrounding an inner space. Therefore, the design margin of the mold can be enhanced so as to correspond with different types of jig center alignment.

A connecting position of the object-side surface and the connecting surface of the glass effective optical portion can have an object-side edge line, and the object-side edge line defines a maximum contour of the object-side surface. Therefore, by configuring a clear edge line, the inspection efficiency can be improved to enhance a quality control of the glass effective optical portion.

A connecting position of the image-side surface and the connecting surface of the glass effective optical portion can have an image-side edge line, and the image-side edge line defines a maximum contour of the image-side surface. Therefore, by configuring a clear edge line, the inspection efficiency can be improved to enhance a quality control of the glass effective optical portion.

The object-side edge line and the image-side edge line of the glass effective optical portion can be shaded by the plastic outer peripheral portion corresponding to observations on the mixing optical element from both of the object side and the image side of the imaging lens assembly along the direction parallel to the optical axis. Therefore, the size matching degree between the glass effective optical portion and the plastic outer peripheral portion can be ensured.

A bottom surface can be exposed from the inner space corresponding to an observation on the inner space of each of the recess structures from the object side or the image side of the imaging lens assembly along the direction parallel to the optical axis. In detail, the bottom surface exposed from the inner space is favorable for the flowing continuity of plastic material during the process of forming the plastic outer peripheral portion. Therefore, the uniformity of plastic fluid filling blocked by excessive depth of the recess structures can be avoided, and the yield rate of product can be improved.

Both of the object-side surface and the image-side surface of the glass effective optical portion can physically contact the plastic outer peripheral portion. That is, there is no gap at the physically contact position of the object-side surface and the image-side surface of the glass effective optical portion and the plastic outer peripheral portion, such that there is no relative displacement between the glass effective optical portion and the plastic outer peripheral portion. Therefore, it is favorable for fixing the glass effective optical portion and the plastic outer peripheral portion at an ideal relative position.

Both of the object-side surface and the image-side surface of the glass effective optical portion can physically contact the plastic outer peripheral portion. It can be known that the mixing optical element is manufactured integrally. Therefore, it is favorable for retain the size consistency between the glass effective optical portion and the plastic outer peripheral portion.

When a linear expansion coefficient of the glass effective optical portion is CTEg, and a linear expansion coefficient of the plastic outer peripheral portion is CTEp, the following condition is satisfied: $1 < CTEp/CTEg < 50$. Therefore, it is favorable for providing a material characteristic selecting range of better product quality. Further, the following condition can be satisfied: $5 < CTEp/CTEg < 25$.

According to another aspect of the present disclosure, an imaging lens assembly is provided. The imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The plastic outer peripheral portion surrounds and physically contacts the glass effective optical portion, and forms an aperture hole. The glass effective optical portion includes an object-side surface, an image-side surface and a connecting surface. The object-side surface faces towards an object side of the imaging lens assembly. The image-side surface faces towards an image side of the imaging lens assembly and is disposed opposite to the object-side surface. The connecting surface surrounds the optical axis and connects the object-side surface and the image-side surface. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an outer surface and two side surfaces. The two side surfaces connect the outer surface and the aperture hole. The connecting surface of the glass effective optical portion is closer to the optical axis than the outer surface of each of the recess structures to the optical axis. The connecting surface of the glass effective optical portion overlaps with the outer surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: $0.1 < D/T < 0.95$. Therefore, the plastic outer peripheral portion is used to fix the glass effective optical portion at a geometrical central axis, and a tolerance between the mixing optical element and the adjacent optical elements is absorbed by the plastic outer peripheral portion, so that the assembling accuracy of the mixing optical element can be improved.

Each of the recess structures can be formed by the outer surface and the two side surfaces connecting to each other and surrounding an inner space. Therefore, the design margin of the mold can be enhanced so as to correspond with different types of jig center alignment.

A connecting position of the object-side surface and the connecting surface of the glass effective optical portion can have an object-side edge line, and the object-side edge line defines a maximum contour of the object-side surface. Therefore, by configuring a clear edge line, the inspection efficiency can be improved to enhance quality control of the glass effective optical portion.

A connecting position of the image-side surface and the connecting surface of the glass effective optical portion can have an image-side edge line, and the image-side edge line defines a maximum contour of the image-side surface. Therefore, by configuring a clear edge line, the inspection efficiency can be improved to enhance quality control of the glass effective optical portion.

Corresponding to an observation on each of the recess structures from the object side or the image side along the direction parallel to the optical axis, an arc length of a part of the object-side edge line exposed from the inner space of each of the recess structures is Ao, a sum of the arc lengths of the object-side edge line exposed from the inner space of each of the recess structures is $\Sigma$Ao, an arc length of a part of the image-side edge line exposed from the inner space of each of the recess structures is Ai, a sum of the arc lengths of the image-side edge line exposed from the inner space of each of the recess structures is $\Sigma$Ai, a shading ratio of the object-side edge line shaded by the plastic outer peripheral portion is Ro, a shading ratio of the image-side edge line shaded by the plastic outer peripheral portion is Ri, a maximum diameter of the connecting surface of the glass effective optical portion is $\psi$Do, and at least one of the following conditions is satisfied: 30% < Ro, wherein Ro = 1 - $\Sigma$Ao/($\psi$Do$\times\pi$); and 10% < Ri < 95%, wherein Ri = 1 - LAi/($\psi$Do$\times\pi$). Therefore, the accuracy of center alignment as well as uniformity of plastic fluid filling can be ensured at the same time by disposing a better shading range.

A part of the object-side edge line, a part of the image-side edge line and an air gap can be exposed from the inner space of each of the recess structures corresponding to observations on each of the recess structures from both of the object side and the image side of the imaging lens assembly along the direction parallel to the optical axis. Therefore, by disposing a gas leaking channel at the mixing optical element, the failure rate of assembling can be reduced.

A part of the object-side edge line and a bottom surface can be exposed from the inner space of each of the recess structures corresponding to an observation on each of the recess structures from the object side of the imaging lens assembly along the direction parallel to the optical axis. Therefore, the uniformity of plastic fluid filling blocked by excessive depth of the recess structures can be avoided, and the yield rate of product can be improved.

A part of the image-side edge line and a bottom surface can be exposed from the inner space of each of the recess structures corresponding to an observation on each of the recess structures from the image side of the imaging lens assembly along the direction parallel to the optical axis. Therefore, the uniformity of plastic fluid filling blocked by excessive depth of the recess structures can be avoided, and the yield rate of product can be improved.

Both of the object-side surface and the image-side surface of the glass effective optical portion can physically contact the plastic outer peripheral portion. That is, there is no gap at the physically contact position of the object-side surface and the image-side surface of the glass effective optical portion and the plastic outer peripheral portion, such that there is no relative displacement between the glass effective optical portion and the plastic outer peripheral portion. Therefore, it is favorable for fixing the glass effective optical portion and the plastic outer peripheral portion at an ideal relative position. It should be mentioned that, "no gap" is a description for the physically contact position, and does not conflict with the aforementioned air gap exposed by the inner space.

Both of the object-side surface and the image-side surface of the glass effective optical portion can overlap with the plastic outer peripheral portion along the direction parallel to the optical axis. It can be known that the mixing optical element is manufactured integrally. Therefore, it is favorable for retain the size consistency between the glass effective optical portion and the plastic outer peripheral portion.

The plastic outer peripheral portion can further include at least one bearing structure and at least one optical aligning structure. The bearing structure is used to bear the optical elements adjacent to the bearing structure. The optical aligning structure is used to align the optical element adjacent to the optical aligning structure. Therefore, by embedding the bearing structure and the optical aligning structure to each other, it is favorable for center alignment and increasing the resolution of the imaging lens assembly.

When a maximum diameter of the connecting surface of the glass effective optical portion is $\psi$Do, a minimum diameter of the optical aligning structure of the plastic outer peripheral portion is $\psi$Da, and a maximum diameter of the bearing structure of the plastic outer peripheral portion is $\psi$Dp, the following condition is satisfied: $\psi$Do < $\psi$Da < $\psi$Dp. Therefore, by configuring better sizes, it is favorable for improving the center aligning effectiveness of the mixing optical element itself and with the adjacent optical elements.

When a coaxality of the maximum diameter $\psi$Do of the connecting surface of the glass effective optical portion and the maximum diameter $\psi$Dp of the bearing structure of the plastic outer peripheral portion is Co, the following condition is satisfied: 0 mm < Co < 0.005 mm. Therefore, the range of coaxality can be further controlled to improve the quality of product assembling.

When a coaxality of the maximum diameter $\psi$Do of the connecting surface of the glass effective optical portion and the minimum diameter $\psi$Da of the optical aligning structure of the plastic outer peripheral portion is Co1, the following condition is satisfied: 0 mm < Co1 < 0.003 mm. Therefore, the range of coaxality can be further controlled to improve the quality of product assembling.

The mixing optical element can have at least three gate traces. Therefore, it is favorable for corresponding to more complex mold design.

According to further another aspect of the present disclosure, an imaging lens assembly is provided. The imaging lens assembly includes a plurality of optical elements, and an optical axis passing through the optical elements is defined. The optical elements include at least one mixing optical element. The mixing optical element includes a glass effective optical portion and a plastic outer peripheral portion. The optical axis passes through the glass effective optical portion. The plastic outer peripheral portion surrounds and physically contacts the glass effective optical portion and forms an aperture hole. The glass effective optical portion includes an object-side surface, an image-side surface and a connecting surface. The object-side surface faces towards an object side of the imaging lens assembly. The image-side surface faces towards an image side of the imaging lens assembly, and is disposed opposite to the object-side surface. The connecting surface surrounds the optical axis and connects the object-side surface and the image-side surface. The plastic outer peripheral portion has at least three recess structures arranged and disposed along a circumference direction around the optical axis. The recess structures extend from one of the object side and the image side of the imaging lens assembly to the other thereof along a direction parallel to the optical axis. Each of the recess structures includes an inner surface and two side surfaces. The side surfaces connect the inner surface and the aperture hole. The connecting surface of the glass effective optical portion is closer to the optical axis than the inner surface of each of the recess structures to the optical axis. The connecting surface of the glass effective optical portion overlaps with the inner surface of each of the recess structures along a direction perpendicular to the optical axis. When a maximum thickness of the plastic outer peripheral portion along the direction parallel to the optical axis is T, and a maximum depth of at least one of the recess structures extending along the direction parallel to the optical axis is D, the following condition is satisfied: $0.1 < D/T \leq 1$. Therefore, the plastic outer peripheral portion is used to fix the glass effective optical portion at a geometrical central axis, and a tolerance between the mixing optical element and the adjacent optical elements is absorbed by the plastic outer peripheral portion, so that the assembling accuracy of the mixing optical element can be improved.

Each of the recess structures can be formed by the inner surface and the two side surfaces connecting to each other and surrounding an outer space. Therefore, the design margin of the mold can be enhanced so as to correspond with different types of jig center alignment.

A connecting position of the object-side surface and the connecting surface of the glass effective optical portion can have an object-side edge line, and the object-side edge line defines a maximum contour of the object-side surface. Therefore, by configuring a clear edge line, the inspection efficiency can be improved to enhance quality control of the glass effective optical portion.

A connecting position of the image-side surface and the connecting surface of the glass effective optical portion can have an image-side edge line, and the image-side edge line defines a maximum contour of the image-side surface. Therefore, by configuring a clear edge line, the inspection efficiency can be improved to enhance quality control of the glass effective optical portion.

The object-side edge line and the image-side edge line can be shaded by the plastic outer peripheral portion corresponding to an observation on the mixing optical element from one of the object side and the image side of the imaging lens assembly along the direction parallel to the optical axis. Therefore, size matching degree between the glass effective optical portion and the plastic outer peripheral portion can be ensured.

A bottom surface can be exposed from the outer space corresponding to an observation on the outer space of each of the recess structures from the object side or the image side of the imaging lens assembly along the direction parallel to the optical axis. Therefore, the uniformity of plastic fluid filling blocked by excessive depth of the recess structures can be avoided, and the yield rate of product can be improved.

An air gap can be exposed from the outer space corresponding to observations on the outer space of each of the recess structures from both of the object side and the image side of the imaging lens assembly along the direction parallel to the optical axis. Therefore, by disposing a gas leaking channel at the mixing optical element, the failure rate of assembling can be reduced.

Both of the object-side surface and the image-side surface of the glass effective optical portion physically can contact the plastic outer peripheral portion. That is, there is no gap at the physically contact position of the object-side surface and the image-side surface of the glass effective optical portion and the plastic outer peripheral portion, such that there is no relative displacement between the glass effective optical portion and the plastic outer peripheral portion. Therefore, it is favorable for fixing the glass effective optical portion and the plastic outer peripheral portion at an ideal relative position. It should be mentioned that, "no gap" is a description for the physically contact position, and does not conflict the aforementioned air gap exposed by the inner space.

Both of the object-side surface and the image-side surface of the glass effective optical portion can overlap with the plastic outer peripheral portion along the direction parallel to the optical axis. It can be known that the mixing optical element is manufactured integrally. Therefore, it is favorable for retain the size consistency between the glass effective optical portion and the plastic outer peripheral portion.

In the imaging lens assemblies provided by the aforementioned embodiment, the optical elements can be lens barrels, lens, light block elements, optical filters, reflecting elements, lens spacers, etc., and the mixing optical element can be formed integrally of a glass lens and the plastic outer peripheral portion, by insert molding, for example, but the present disclosure is not limited thereto.

In the imaging lens assemblies provided by the aforementioned embodiment, the outer surface, the inner surface and the side surfaces of the recess structures can be flat surface, stripping surface, arc surface, step surface, etc. arbitrary forms of surfaces, but the present disclosure is not limited thereto.

In the imaging lens assemblies provided by the aforementioned embodiment, by measuring the deviation between the geometric central axis of the object-side edge line and the image-side edge line and the optical axis, the eccentricity of the glass effective optical portion relative to the optical axis can be determined. While the plastic outer peripheral portion surrounds and physically contacts the glass effective optical portion, the eccentricity of the mixing optical element relative to the optical axis can be consistent to the eccentricity of the glass effective optical portion relative to the optical axis.

According to further another aspect of the present disclosure, a camera module is provided. The camera module includes any one of the imaging lens assemblies as the aforementioned embodiment. Therefore, good imaging quality can be provided.

According to further another aspect of the present disclosure, an electronic device is provided. The electronic device includes the aforementioned camera module and an image sensor. The image sensor is disposed on an image surface of the camera module. Therefore, the imaging quality can be improved. Preferably, all of the aforementioned electronic devices can further include a controlling unit, a display unit, a memory unit, a temporary memory unit or the combination thereof.

According to the aforementioned embodiment, specific examples are provided, and illustrated in detail with the drawings.

<1st embodiment>

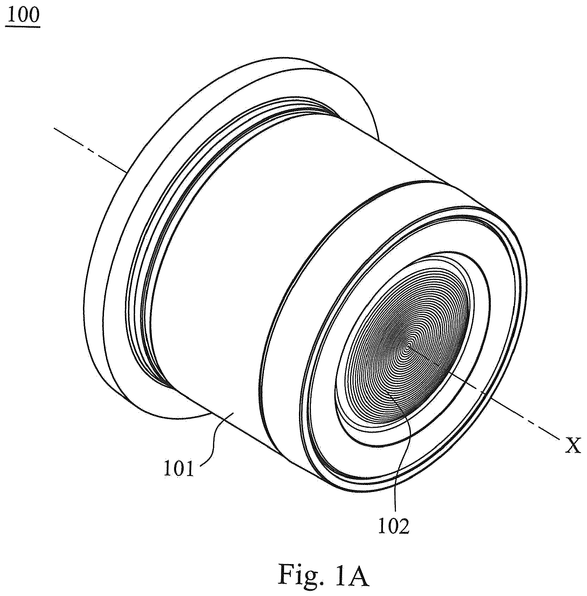

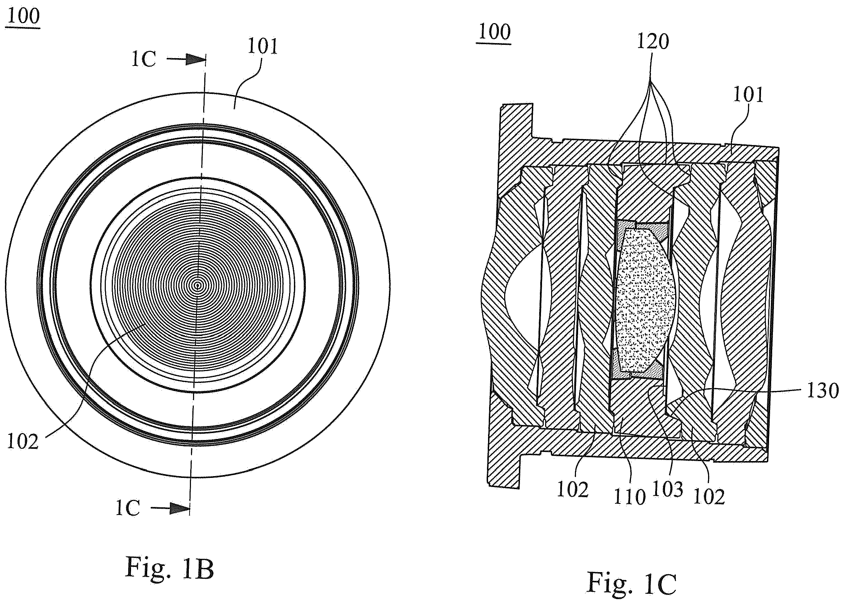

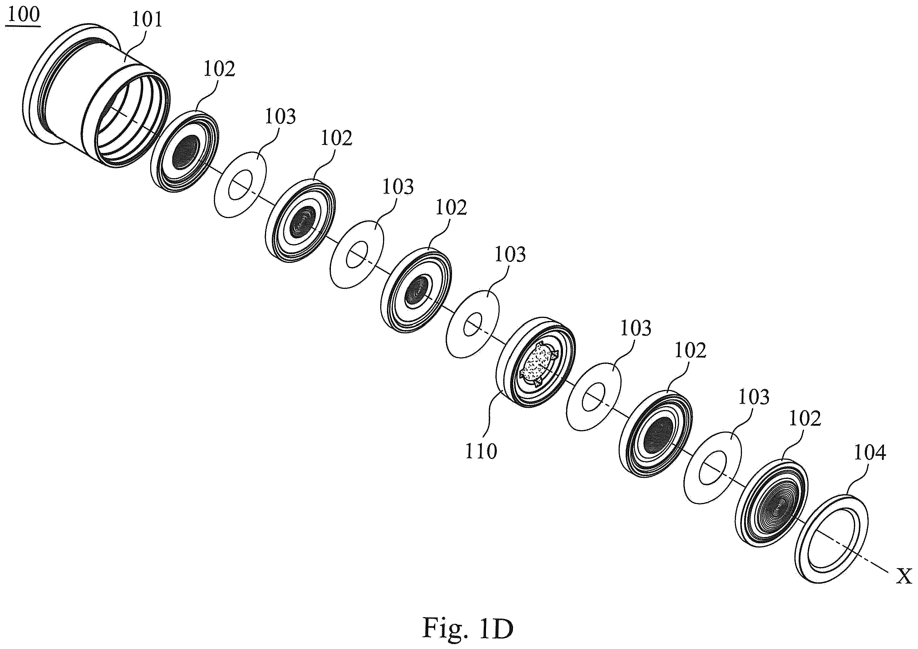

Fig. 1A is a three-dimensional schematic view of an imaging lens assembly 100 according to the 1st example of the 1st embodiment of the present disclosure. Fig. 1B is a schematic view of an image side of the imaging lens assembly 100 according to Fig. 1A. Fig. 1C is a cross-sectional view of Fig. 1B along line 1C-1C. Fig. 1D is an exploded view of the imaging lens assembly 100 according to Fig. 1A. In Figs. 1A to 1D, the imaging lens assembly 100 includes a plurality of optical elements, and an optical axis X passing through the optical elements is defined. In the 1st example of the 1st embodiment, the optical elements includes a lens barrel 101, five lens elements 102, a mixing optical element 110, five light blocking sheets 103 and a retainer 104. The lens elements 102, the mixing optical element 110, the light blocking sheets 103 and the retainer 104 are disposed in the lens barrel 101 along the optical axis X. In order from an object side to the image side, the imaging lens assembly 100 includes the lens element 102, the light blocking sheet 103, the lens element 102, the light blocking sheet 103, the lens element 102, the light blocking sheet 103, the mixing optical element 110, the light blocking sheet 103, the lens element 102, the light blocking sheet 103, the lens element 102 and the retainer 104. The lens barrel 101, each of the lens elements 102, each of the light blocking sheets 103 and the retainer 104 can be disposed in different structures and types according to achieve the desired optical effects, and is not described herein. Further, the optical elements in the imaging lens assembly 100 can otherwise be lens barrel, lens element, light block element, optical filter, reflecting element, lens spacer, etc., and will not be limited to the present disclosure.

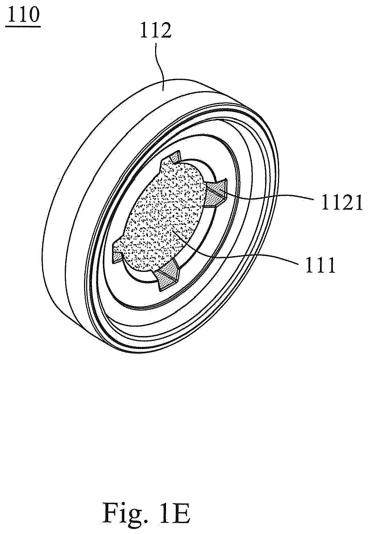

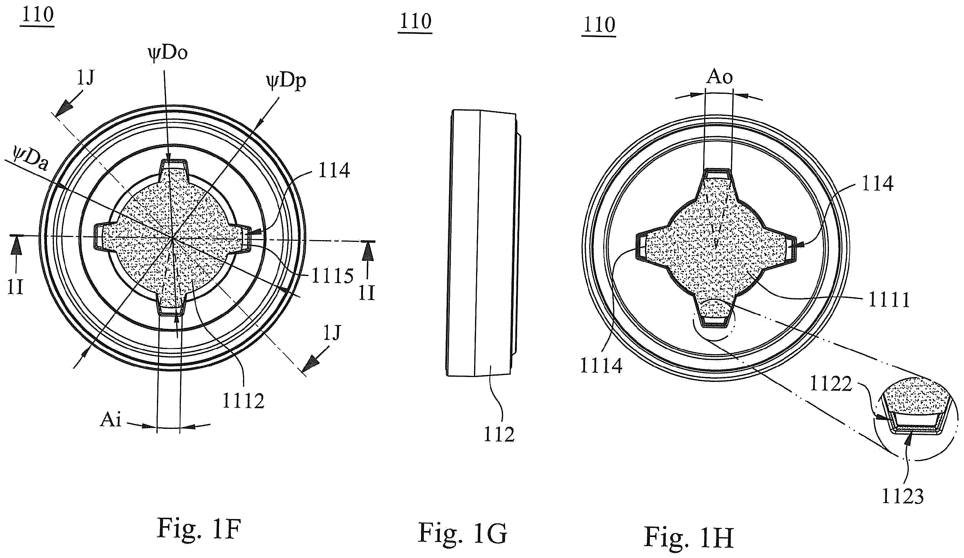

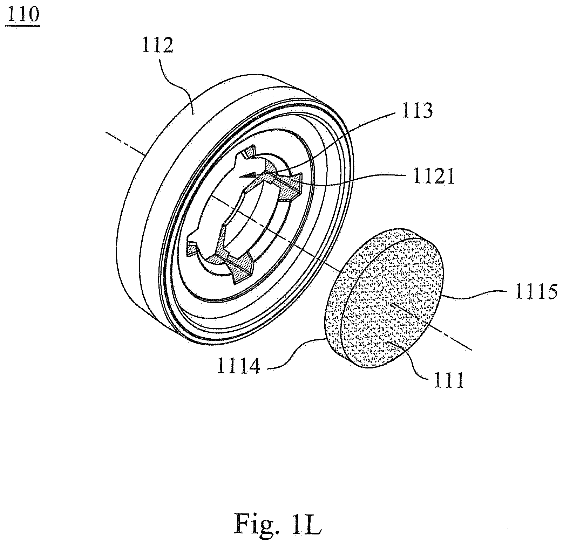

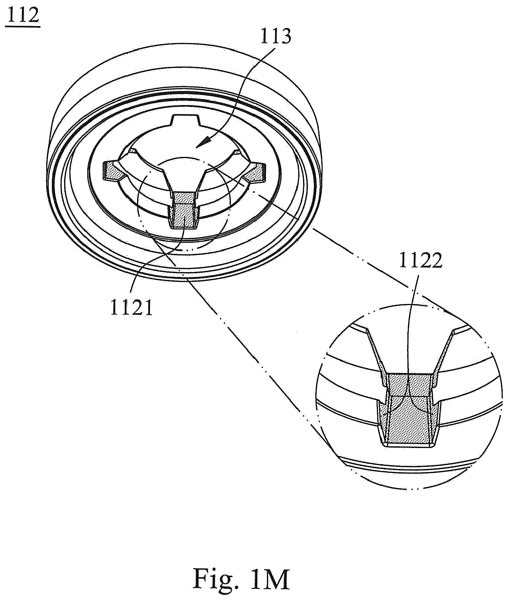

Fig. 1E is a three-dimensional view of the mixing optical element 110 of the imaging lens assembly 100 according to the 1st example of the 1st embodiment in Fig. 1A. Fig. 1F is a plan view of an image side of the mixing optical element 110 according to Fig. 1E. Fig. 1G is a side view of the mixing optical element 110 according to Fig. 1E. Fig. 1H is a plan view of the object side of the mixing optical element 110 according to Fig. 1E. The mixing optical element 110 includes a glass effective optical portion 111 and a plastic outer peripheral portion 112. The optical axis X passes through the glass effective optical portion 111. The plastic outer peripheral portion 112 surrounds and physically contacts the glass effective optical portion 111 and forms an aperture hole 113 (labelled in Figs. 1L and 1M).

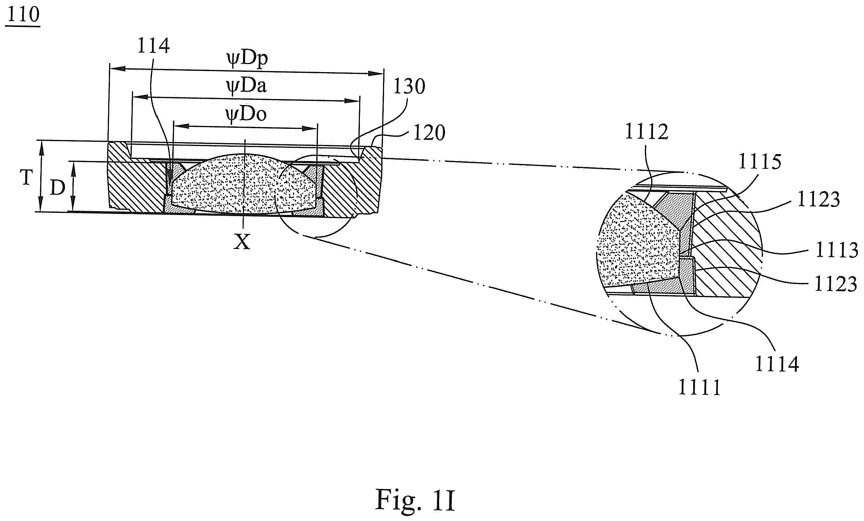

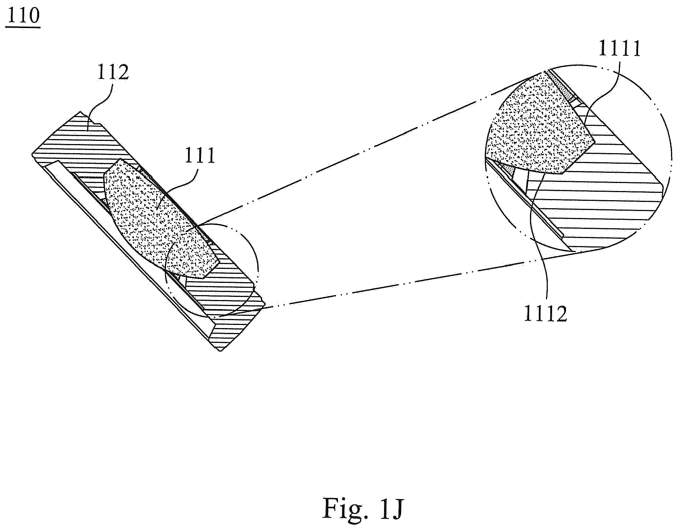

Fig. 1I is a cross-sectional view of Fig. 1F along line 11-11. Fig. 1J is a cross-sectional view of Fig. 1F along line 1J-1J. The glass effective optical portion 111 includes an object-side surface 1111, an image-side surface 1112 and a connecting surface 1113. The object-side surface 1111 faces towards an object side of the imaging lens assembly 100. The image-side surface 1112 faces towards an image side of the imaging lens assembly 100 and is disposed opposite to the object-side surface 1111. The connecting surface 1113 surrounds the optical axis X and connects the object-side surface 1111 and the image-side surface 1112. Both of the object-side surface 1111 and the image-side surface 1112 of the glass effective optical portion 111 physically contact the plastic outer peripheral portion 112. That is, there is no gap at the physically contact position. Both of the object-side surface 1111 and the image-side surface 1112 of the glass effective optical portion 111 overlap with the plastic outer peripheral portion 112 along the direction parallel to the optical axis X. A connecting position of the object-side surface 1111 and the connecting surface 1113 of the glass effective optical portion 111 has an object-side edge line 1114, and the object-side edge line 1114 defines a maximum contour of the object-side surface 1111. A connecting position of the image-side surface 1112 and the connecting surface 1113 of the glass effective optical portion 111 has an image-side edge line 1115, and the image-side edge line 1115 defines a maximum contour of the image-side surface 1112.

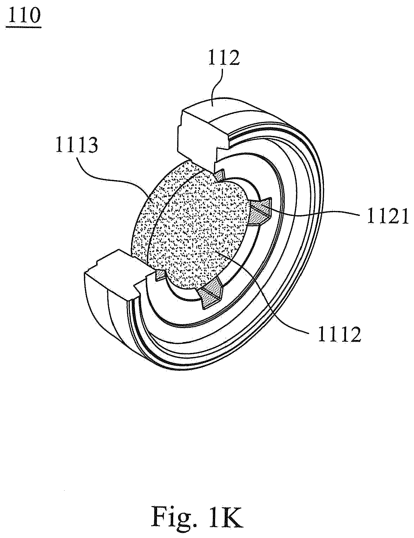

Fig. 1K is a partial cross-sectional view of the mixing optical element 110 according to Fig. 1E. Fig. 1L is an exploded view of the mixing optical element 110 according to Fig. 1E. Fig. 1M is a schematic view of a plastic outer peripheral portion 112 of the mixing optical element 110 according to Fig. 1E. It is noted that the mixing optical element 110 can be integrally formed by the glass effective optical portion 111 (which can be a glass lens) and the plastic outer peripheral portion 112, such as insert molding, but the present disclosure will not be limited thereto. In order to clearly illustrate the detail structures of the aperture hole 113 and the plastic outer peripheral portion 112 of the mixing optical element 110, the glass effective optical portion 111 and the plastic outer peripheral portion 112 of the mixing optical element 110 are shown separately in Figs. 1K to 1M, but it does not mean that the mixing optical element 110 is two-part assembled. In detail, the plastic outer peripheral portion 112 has at least three recess structures 1121 arranged and disposed along a circumference direction around the optical axis X. The recess structures 1121 extend from one of the object side and the image side of the imaging lens assembly 100 to the other thereof along a direction parallel to the optical axis X. In the 1st example of the 1st embodiment of the present disclosure, the amount of the recess structures 1121 is four, and each of the recess structures 1121 extends from the image side to the object side of the imaging lens assembly 100. In Fig. 1M, each of the recess structures 1121 includes an outer surface 1123 and two side surfaces 1122. The side surfaces 1122 connect the outer surface 1123 and the aperture hole 113. Each of the recess structures 1121 can be formed by the outer surface 1123 and the two side surfaces 1122 connecting to each other and surrounding an inner space 114, and the outer surface 1123 is a surface of the recess structures 1121 which faces towards the optical axis X.

Further, as shown in Figs. 1H and 1F, a part of the object-side edge line 1114, a part of the image-side edge line 1115 and an air gap can be exposed from the inner space 114 of each of the recess structures 1121 corresponding to observations on each of the recess structures 1121 from both of the object side and the image side of the imaging lens assembly 100 along the direction parallel to the optical axis X.

As shown in Fig. 1I, the connecting surface 1113 of the glass effective optical portion 111 is closer to the optical axis X than the outer surface 1123 of each of the recess structures 1121 to the optical axis X. The connecting surface 1113 of the glass effective optical portion 111 overlaps with the outer surface 1123 of each of the recess structures 1121 along a direction perpendicular to the optical axis X.

In Fig. 1C, the plastic outer peripheral portion 112 can further include at least one bearing structure 120 and at least one optical aligning structure 130. The bearing structure 120 is used to bear the optical elements adjacent to the bearing structure 120. The optical aligning structure 130 is used to align the optical element adjacent to the optical aligning structure 130. In detail, in the 1st example of the 1st embodiment of the present disclosure, the amount of the bearing structures 120 is four, and each of the bearing structures 120 is for bearing the lens element 102 at the object side of the mixing optical element 110, the lens barrel 101, the light blocking sheet 103 at the image side of the mixing optical element 110 and the lens element 102. The amount of the aligning structure 130 is one, and the aligning structure 130 is for aligning the lens element 102 at the image side of the mixing optical element 110.

In Figs. 1F, 1H and 1I, when a maximum thickness of the plastic outer peripheral portion 112 along the direction parallel to the optical axis X is T, a maximum depth of each of the recess structures 1121 extending along the direction parallel to the optical axis X is D; when observing on each of the recess structures 1121 from the object side or the image side of the imaging lens assembly 100 along the direction parallel to the optical axis X, an arc length of a part of the object-side edge line 1114 exposed from the inner space 114 of each of the recess structures 1121 is Ao, a sum of the arc lengths of the exposed object-side edge line 1114 is $\Sigma$Ao, an arc length of a part of the image-side edge line 1115 exposed from the inner space 114 of each of the recess structures 1121 is Ai, a sum of the arc lengths of the exposed image-side edge line 1115 is $\Sigma$Ai, a shading ratio of the object-side edge line 1114 shaded by the plastic outer peripheral portion 112 is Ro (Ro = 1 - $\Sigma$Ao/($\psi$Do$\times$$\pi$)), a shading ratio of the image-side edge line 1115 shaded by the plastic outer peripheral portion 112 is Ri (Ri = 1 - $\Sigma$Ai/($\psi$Do$\times$$\pi$)), a maximum diameter of the connecting surface 1113 of the glass effective optical portion 111 is $\psi$Do, a minimum diameter of the optical aligning structure 130 of the plastic outer peripheral portion 112 is $\psi$Da, a maximum diameter of the bearing structure 120 of the plastic outer peripheral portion 112 is $\psi$Dp, a linear expansion coefficient of the glass effective optical portion 111 is CTEg, and a linear expansion coefficient of the plastic outer peripheral portion 112 is CTEp, the following conditions of the Table 1 are satisfied.

| Table 1, 1st example of 1st embodiment | | | |
|---|---|---|---|
| D (mm) | 1.08 | $\psi$Do (mm) | 3.1 |
| T (mm) | 1.55 | $\psi$Da (mm) | 4.9 |
| D/T | 0.70 | $\psi$Dp (mm) | 5.9 |
| Ao (mm) | 0.61 | $\Sigma$Ao/($\psi$Do$\times\pi$) (%) | 25.1 |
| $\Sigma$Ao (mm) | 2.44 | $\Sigma$Ai/($\psi$Do$\times\pi$) (%) | 20.9 |
| Ai (mm) | 0.51 | Ro (%) | 74.9 |
| $\Sigma$Ai (mm) | 2.04 | Ri (%) | 79.1 |
| CTEg ($10^{-7}$/°C) | 73 | CTEp/CTEg | 8.9 |
| CTEp ($10^{-7}$/°C) | 650 | | |

Further, in the 1st example of the 1st embodiment, when a coaxality of the maximum diameter $\psi$Do of the connecting surface 1113 of the glass effective optical portion 111 and the maximum diameter $\psi$Dp of the bearing structure 120 of the plastic outer peripheral portion 112 is Co, and a coaxality of the maximum diameter $\psi$Do of the connecting surface 1113 of the glass effective optical portion 111 and the minimum diameter $\psi$Da of the optical aligning structure 130 of the plastic outer peripheral portion 112 is Co1, the following conditions are satisfied: 0 mm < Co < 0.005 mm; and 0 mm < Co1 < 0.003 mm.

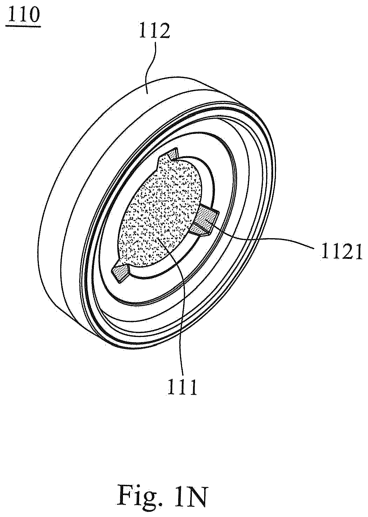

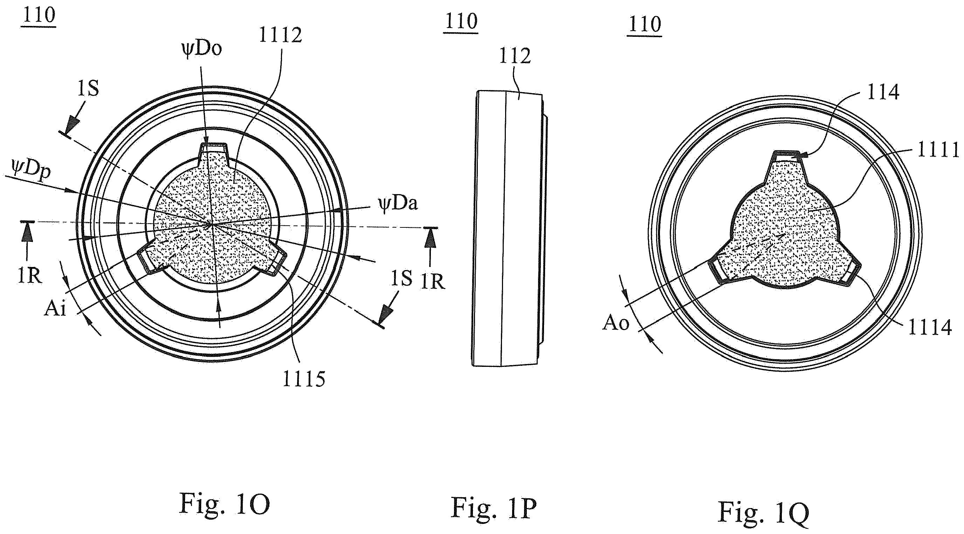

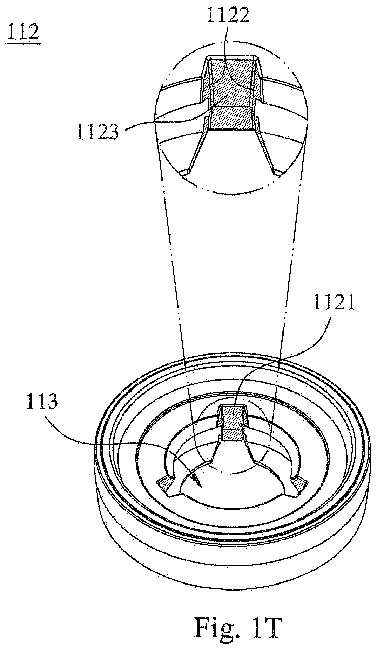

Fig. 1N is a three-dimensional view of a mixing optical element 110 of the imaging lens assembly 100 according to the 2nd example of the 1st embodiment in Fig. 1A. Fig. 1O is a plan view of an image side of the mixing optical element 110 according to Fig. 1N. Fig. 1P is a side view of the mixing optical element 110 according to Fig. 1N. Fig. 1Q is a plan view of an object side of the mixing optical element 110 according to Fig. 1N. It is noted that in the 2nd example of the 1st embodiment, only the mixing optical element 110 is different from the mixing optical element 110 disclosed in the 1st example of the 1st embodiment, and the other element structures and technical features of the imaging lens assembly 100 are the same as in the 1st example of the 1st embodiment, and are not described herein. The mixing optical element 110 includes a glass effective optical portion 111 and a plastic outer peripheral portion 112. The optical axis X passes through the glass effective optical portion 111. The plastic outer peripheral portion 112 surrounds and physically contacts the glass effective optical portion 111, and forms an aperture hole 113 (labelled in Fig. 1T).

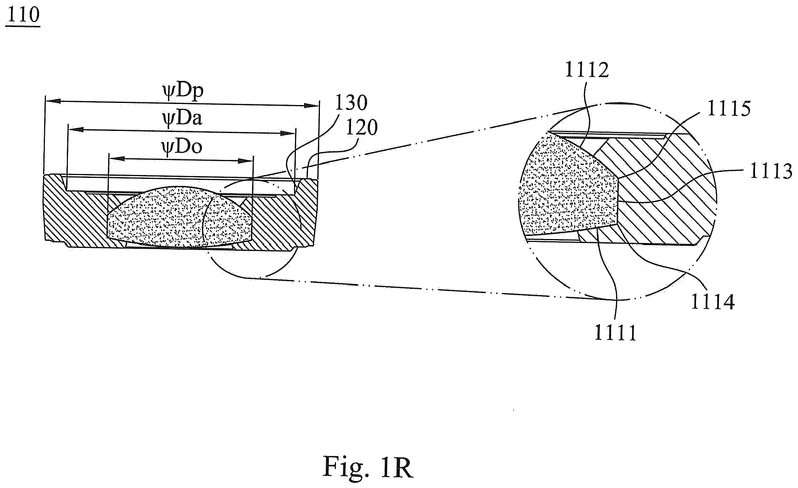

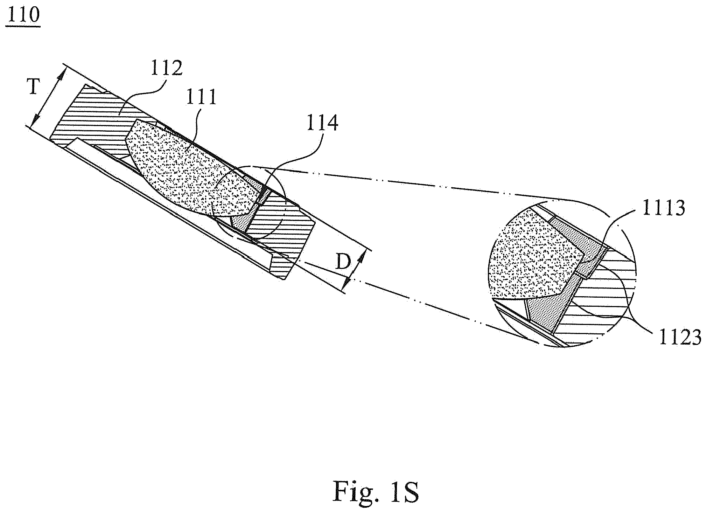

Fig. 1R is a cross-sectional view of Fig. 1O along line 1R-1R. Fig. 1S is a cross-sectional view of Fig. 1O along line 1S-1S. The glass effective optical portion 111 includes an object-side surface 1111, an image-side surface 1112 and a connecting surface 1113. The object-side surface 1111 faces towards an object side of the imaging lens assembly 100. The image-side surface 1112 faces towards an image side of the imaging lens assembly 100 and is disposed opposite to the object-side surface 1111. The connecting surface 1113 surrounds the optical axis X and connects the object-side surface 1111 and the image-side surface 1112. Both of the object-side surface 1111 and the image-side surface 1112 of the glass effective optical portion 111 physically contact the plastic outer peripheral portion 112. That is, there is no gap at the physically contact position. Both of the object-side surface 1111 and the image-side surface 1112 of the glass effective optical portion 111 overlap with the plastic outer peripheral portion 112 along the direction parallel to the optical axis X. A connecting position of the object-side surface 1111 and the connecting surface 1113 of the glass effective optical portion 111 has an object-side edge line 1114, and the object-side edge line 1114 defines a maximum contour of the object-side surface 1111. A connecting position of the image-side surface 1112 and the connecting surface 1113 of the glass effective optical portion 111 has an image-side edge line 1115, and the image-side edge line 1115 defines a maximum contour of the image-side surface 1112.

Fig. 1T is a schematic view of a plastic outer peripheral portion 112 of the mixing optical element 110 according to Fig. 1N. It is noted that the glass effective optical portion 111 is not shown in Fig. 1T in order to clearly show and illustrate the position of each structures of the plastic outer peripheral portion 112, but it does not mean that the glass effective optical portion 111 and the plastic outer peripheral portion 112 are two-part assembled. In detail, the plastic outer peripheral portion 112 has at least three recess structures 1121 arranged and disposed along a circumference direction around the optical axis X. The recess structures 1121 extend from one of the object side and the image side of the imaging lens assembly 100 to the other thereof along a direction parallel to the optical axis X. In the 2nd example of the 1st embodiment of the present disclosure, the amount of the recess structures 1121 is three, and each of the recess structures 1121 extends from the image side to the object side of the imaging lens assembly 100. Each of the recess structures 1121 includes an outer surface 1123 and two side surfaces 1122. The side surfaces 1122 connect the outer surface 1123 and the aperture hole 113. Each of the recess structures 1121 can be formed by the outer surface 1123 and the two side surfaces 1122 connecting to each other and surrounding an inner space 114 (labelled in Fig. 1Q).

The outer surface 1123 is a surface of the recess structures 1121 which faces towards the optical axis X.

Further, as shown in Figs. 1O and 1Q, a part of the object-side edge line 1114, a part of the image-side edge line 1115 and an air gap of can be exposed from the inner space 114 of each of the recess structures 1121 corresponding to observations on each of the recess structures 1121 from both of the object side and the image side of the imaging lens assembly 100 along the direction parallel to the optical axis X.

As shown in Fig. 1R, the connecting surface 1113 of the glass effective optical portion 111 is closer to the optical axis X than the outer surface 1123 of each of the recess structures 1121 to the optical axis X. The connecting surface 1113 of the glass effective optical portion 111 overlaps with the outer surface 1123 of each of the recess structures 1121 along a direction perpendicular to the optical axis X.

In Fig. 1R, the plastic outer peripheral portion 112 can further include at least one bearing structure 120 and at least one optical aligning structure 130. The bearing structure 120 is used to bear the optical elements adjacent to the bearing structure 120. The optical aligning structure 130 is used to align the optical element adjacent to the optical aligning structure 130. In the 2nd example of the 1st embodiment of the present disclosure, the amount of the bearing structure 120 and the optical aligning structure 130 and the connection relationship with adjacent optical elements may be similar to the 1st example of the 1st embodiment, and that will not be described again.

In Figs. 1O, 1Q and 1R, when observing on each of the recess structures 1121 from the object side or the image side along the direction parallel to the optical axis X, an arc length of a part of the object-side edge line 1114 exposed from the inner space 114 of each of the recess structures 1121 is Ao, a sum of the arc lengths of the exposed object-side edge line 1114 is $\Sigma$Ao, an arc length of a part of the image-side edge line 1115 exposed from the inner space 114 of each of the recess structures 1121 is Ai, a sum of the arc lengths of the exposed image-side edge line 1115 is $\Sigma$Ai, a shading ratio of the object-side edge line 1114 shaded by the plastic outer peripheral portion 112 is Ro (Ro = 1 - $\Sigma$Ao/($\psi$Do$\times\pi$)), a shading ratio of the image-side edge line 1115 shaded by the plastic outer peripheral portion 112 is Ri (Ri = 1 - $\Sigma$Ai/($\psi$Do$\times\pi$)), a maximum diameter of the connecting surface 1113 of the glass effective optical portion 111 is $\psi$Do, a minimum diameter of the optical aligning structure 130 of the plastic outer peripheral portion 112 is $\psi$Da, and a maximum diameter of the bearing structure 120 of the plastic outer peripheral portion 112 is $\psi$Dp, the following conditions of the Table 2 are satisfied. It is noted that in the 2nd example of the 1st embodiment, the definitions and values of D, T, CTEg, CTEp and CTEp/CTEg are the same as disclosed in the Table 1, and are not listed again herein.

| Table 2, 2nd example of 1st embodiment | | | |
|---|---|---|---|
| Ao (mm) | 0.61 | $\Sigma$Ao/($\psi$Do$\times\pi$) (%) | 18.8 |
| $\Sigma$Ao (mm) | 1.83 | $\Sigma$Ai/($\psi$Do$\times\pi$) (%) | 15.7 |
| Ai (mm) | 0.51 | Ro (%) | 81.2 |
| $\Sigma$Ai (mm) | 1.53 | Ri (%) | 84.3 |
| $\psi$Do (mm) | 3.1 | $\psi$Dp (mm) | 5.9 |
| $\psi$Da (mm) | 4.9 | | |

Moreover, in the 2nd example of the 1st embodiment, when a coaxality of the maximum diameter $\psi$Do of the connecting surface 1113 of the glass effective optical portion 111 and the maximum diameter $\psi$Dp of the bearing structure 120 of the plastic outer peripheral portion 112 is Co, and a coaxality of the maximum diameter $\psi$Do of the connecting surface 1113 of the glass effective optical portion 111 and the minimum diameter $\psi$Da of the optical aligning structure 130 of the plastic outer peripheral portion 112 is Co1, the following conditions are satisfied: 0 mm < Co < 0.005 mm; and 0 mm < Co1 < 0.003 mm.

<2nd embodiment>

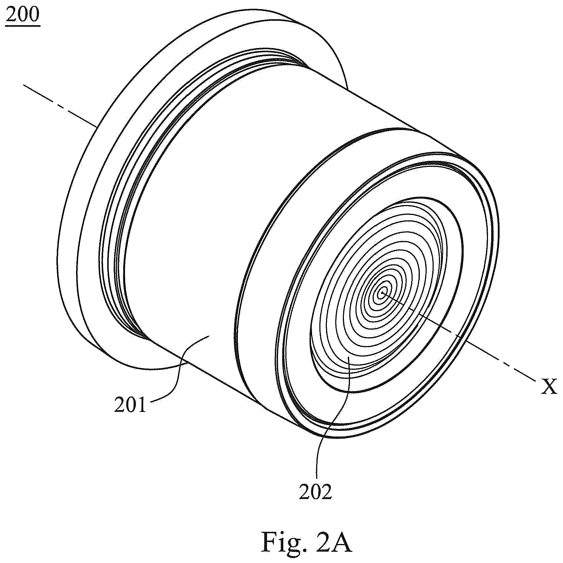

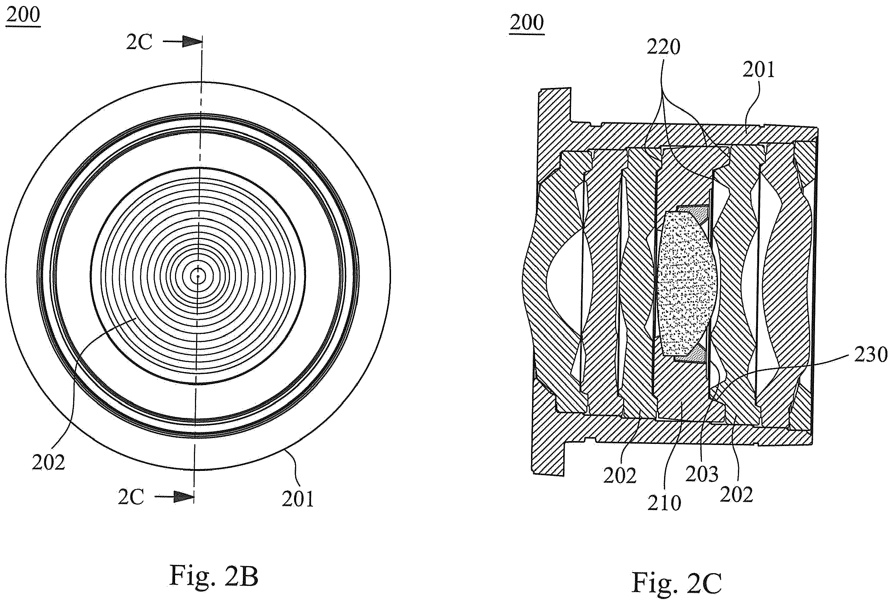

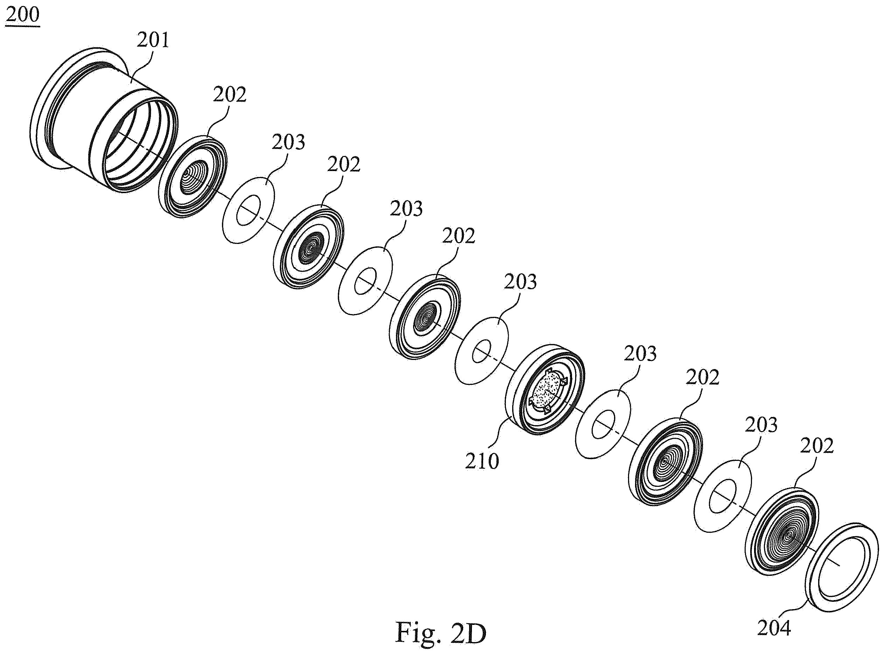

Fig. 2A is a three-dimensional schematic view of an imaging lens assembly 200 according to the 1st example of the 2nd embodiment of the present disclosure. Fig. 2B is a schematic view of an image side of the imaging lens assembly 200 according to Fig. 2A. Fig. 2C is a cross-sectional view of Fig. 2B along line 2C-2C. Fig. 2D is an exploded view of the imaging lens assembly 200 according to Fig. 2A. In Figs. 2A to 2D, the imaging lens assembly 200 includes a plurality of optical elements, and an optical axis X passing through the optical elements is defined. In the 1st example of the 2nd embodiment, the optical elements includes a lens barrel 201, five lens elements 202, a mixing optical element 210, five light blocking sheets 203 and a retainer 204. The lens elements 202, the mixing optical element 210, the light blocking sheets 203 and the retainer 204 are disposed in the lens barrel 201 along the optical axis X. In order from an object side to the image side, the imaging lens assembly 200 includes the lens element 202, the light blocking sheet 203, the lens element 202, the light blocking sheet 203, the lens element 202, the light blocking sheet 203, the mixing optical element 210, the light blocking sheet 203, the lens element 202, the light blocking sheet 203, the lens element 202, and the retainer 204. The lens barrel 201, each of the lens elements 202, each of the light blocking sheets 203 and the retainer 204 can be disposed in different structures and types according to achieve the desired optical effects, and is not described herein. Further, the optical elements in the imaging lens assembly 200 can otherwise be lens barrel, lens element, light block element, optical filter, reflecting element, lens spacer, etc., and will not be limited to the present disclosure.

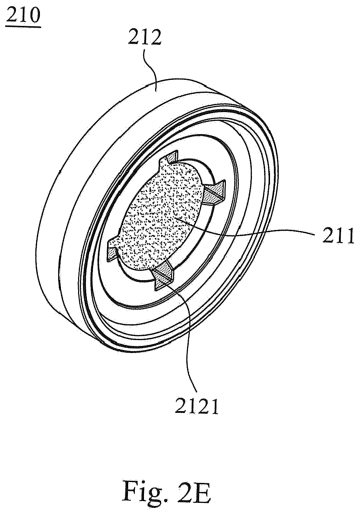

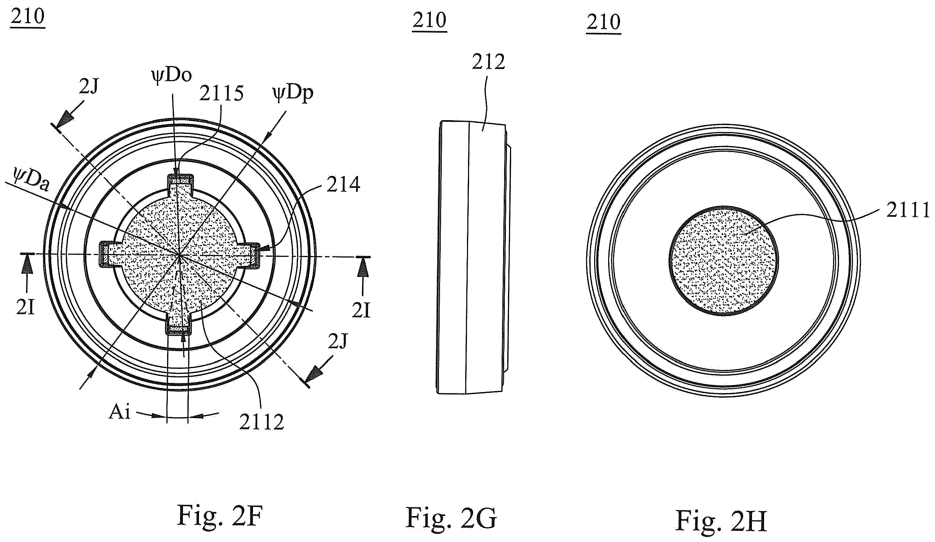

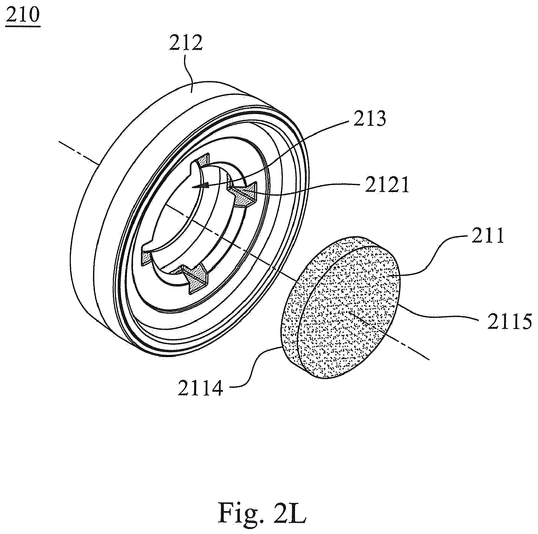

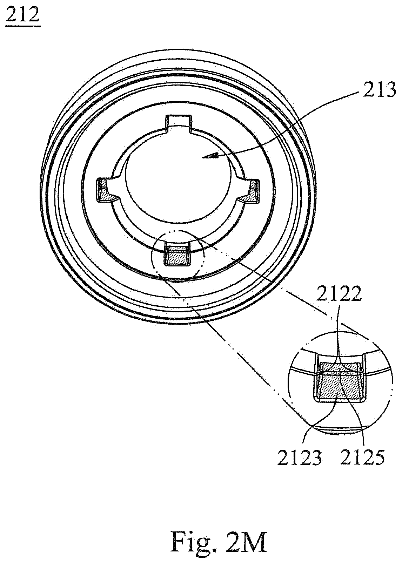

Fig. 2E is a three-dimensional view of the mixing optical element 210 of the imaging lens assembly 200 according to the 1st example of the 2nd embodiment in Fig. 2A. Fig. 2F is a plan view of an image side of the mixing optical element 210 according to Fig. 2E. Fig. 2G is a side view of the mixing optical element 210 according to Fig. 2E. Fig. 2H is a plan view of the object side of the mixing optical element 210 according to Fig. 2E. The mixing optical element 210 includes a glass effective optical portion 211 and a plastic outer peripheral portion 212. The optical axis X passes through the glass effective optical portion 211. The plastic outer peripheral portion 212 surrounds and physically contacts the glass effective optical portion 211 and forms an aperture hole 213 (labelled in Figs. 2L and 2M).

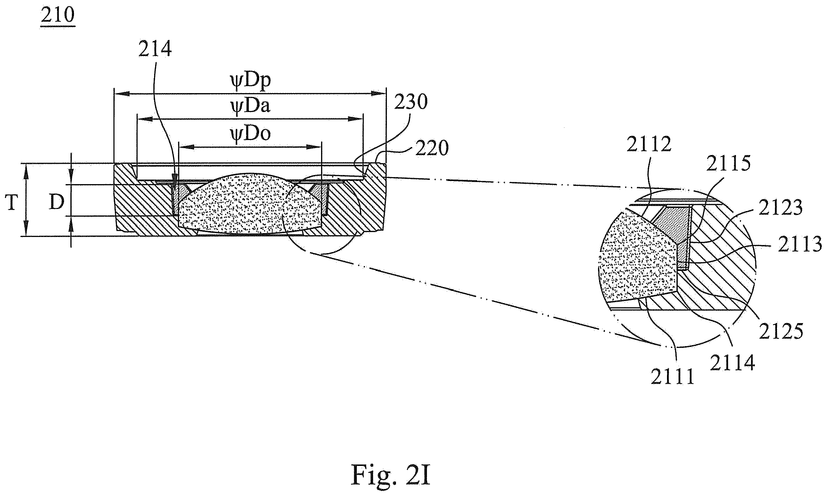

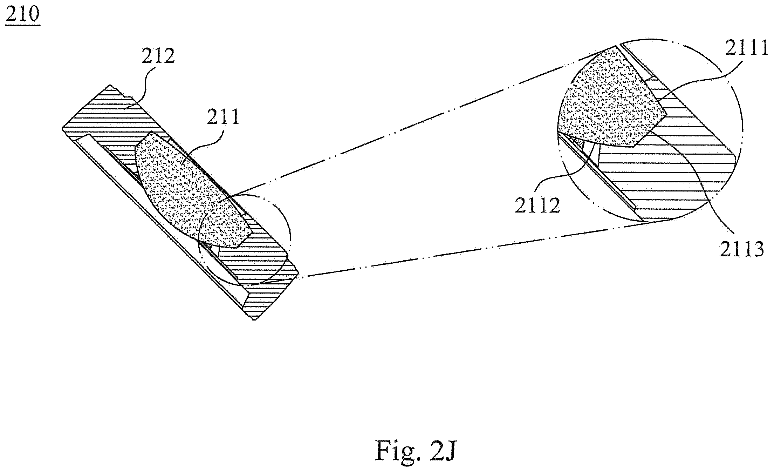

Fig. 2I is a cross-sectional view of Fig. 2F along line 2I-2I. Fig. 2J is a cross-sectional view of Fig. 2F along line 2J-2J. The glass effective optical portion 211 includes an object-side surface 2111, an image-side surface 2112 and a connecting surface 2113. The object-side surface 2111 faces towards an object side of the imaging lens assembly 200. The image-side surface 2112 faces towards an image side of the imaging lens assembly 200 and is disposed opposite to the object-side surface 2111. The connecting surface 2113 surrounds the optical axis X and connects the object-side surface 2111 and the image-side surface 2112. Both of the object-side surface 2111 and the image-side surface 2112 of the glass effective optical portion 211 physically contact the plastic outer peripheral portion 212. That is, there is no gap at the physically contact position. Both of the object-side surface 2111 and the image-side surface 2112 of the glass effective optical portion 211 overlap with the plastic outer peripheral portion 212 along the direction parallel to the optical axis X. A connecting position of the object-side surface 2111 and the connecting surface 2113 of the glass effective optical portion 211 has an object-side edge line 2114, and the object-side edge line 2114 defines a maximum contour of the object-side surface 2111. A connecting position of the image-side surface 2112 and the connecting surface 2113 of the glass effective optical portion 211 has an image-side edge line 2115, and the image-side edge line 2115 defines a maximum contour of the image-side surface 2112.

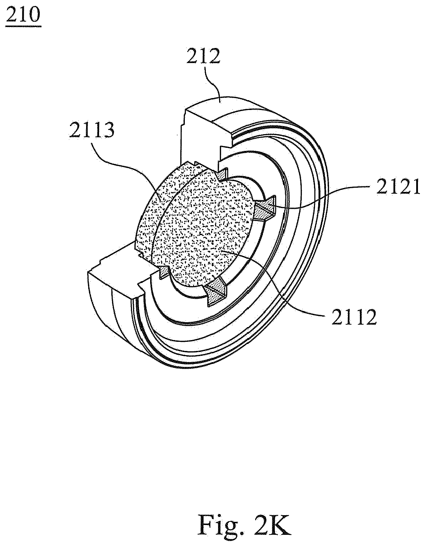

Fig. 2K is a partial cross-sectional view of the mixing optical element 210 according to Fig. 2E. Fig. 2L is an exploded view of the mixing optical element 210 according to Fig. 2E. Fig. 2M is a schematic view of a plastic outer peripheral portion 212 of the mixing optical element 210 according to Fig. 2E. It is noted that the mixing optical element 210 can be integrally formed by the glass effective optical portion 211 (which can be a glass lens) and the plastic outer peripheral portion 212, such as insert molding, but the present disclosure will not be limited thereto. In order to clearly illustrate the detail structures of the aperture hole 213 and the plastic outer peripheral portion 212 of the mixing optical element 210, the glass effective optical portion 211 and the plastic outer peripheral portion 212 of the mixing optical element 210 are shown separately in Figs. 2K to 2M, but it does not mean that the mixing optical element 210 is two-part assembled. In detail, the plastic outer peripheral portion 212 has at least three recess structures 2121 arranged and disposed along a circumference direction around the optical axis X. The recess structures 2121 extend from one of the object side and the image side of the imaging lens assembly 200 to the other thereof along a direction parallel to the optical axis X. In the 1st example of the 2nd embodiment of the present disclosure, the amount of the recess structures 2121 is four, and each of the recess structures 2121 extends from the image side to the object side of the imaging lens assembly 200. In Fig. 2M, each of the recess structures 2121 includes an outer surface 2123 and two side surfaces 2122. The side surfaces 2122 connect the outer surface 2123 and the aperture hole 213. Each of the recess structures 2121 can be formed by the outer surface 2123 and the two side surfaces 2122 connecting to each other and surrounding an inner space 214, and the outer surface 2123 is a surface of the recess structures 2121 which faces towards the optical axis X.

Further, as shown in Figs. 2F and 2I, a part of the image-side edge line 2115 and a bottom surface 2125 can be exposed from the inner space 214 of each of the recess structures 2121 corresponding to an observation on each of the recess structures 2121 from the image side of the imaging lens assembly 200 along the direction parallel to the optical axis X. In detail, each of the recess structures 2121 includes the bottom surface 2125 which is connected to the outer surface 2123 and is perpendicular to the optical axis X.

As shown in Fig. 2I, the connecting surface 2113 of the glass effective optical portion 211 is closer to the optical axis X than the outer surface 2123 of each of the recess structures 2121 to the optical axis X. The connecting surface 2113 of the glass effective optical portion 211 overlaps with the outer surface 2123 of each of the recess structures 2121 along a direction perpendicular to the optical axis X.

In Fig. 2C, the plastic outer peripheral portion 212 can further include at least one bearing structure 220 and at least one optical aligning structure 230. The bearing structure 220 is used to bear the optical elements adjacent to the bearing structure 220. The optical aligning structure 230 is used to align the optical element adjacent to the optical aligning structure 230. In detail, in the 1st example of the 2nd embodiment of the present disclosure, the amount of the bearing structures 220 is four, and each of the bearing structures 220 is for bearing the lens element 202 at the object side of the mixing optical element 210, the lens barrel 201, the light blocking sheet 203 at the image side of the mixing optical element 210 and the lens element 202. The amount of the aligning structure 230 is one, and the aligning structure 230 is for aligning the lens element 202 at the image side of the mixing optical element 210.

In Figs. 2F and 2I, when a maximum thickness of the plastic outer peripheral portion 212 along the direction parallel to the optical axis X is T, a maximum depth of each of the recess structures 2121 extending along the direction parallel to the optical axis X is D; when observing on each of the recess structures 2121 from the image side of the imaging lens assembly 200 along the direction parallel to the optical axis X, an arc length of a part of the image-side edge line 2115 exposed from the inner space 214 of each of the recess structures 2121 is Ai, a sum of the arc lengths of the exposed image-side edge line 2115 is $\Sigma$Ai, a shading ratio of the image-side edge line 2115 shaded by the plastic outer peripheral portion 212 is Ri (Ri = 1 - $\Sigma$Ai/($\psi$Do$\times\pi$)), a maximum diameter of the connecting surface 2113 of the glass effective optical portion 211 is $\psi$Do, a minimum diameter of the optical aligning structure 230 of the plastic outer peripheral portion 212 is $\psi$Da, a maximum diameter of the bearing structure 220 of the plastic outer peripheral portion 212 is $\psi$Dp, a linear expansion coefficient of the glass effective optical portion 211 is CTEg, and a linear expansion coefficient of the plastic outer peripheral portion 212 is CTEp, the following conditions of the Table 3 are satisfied.

| Table 3, 1st example of 2nd embodiment | | | |
|---|---|---|---|
| D (mm) | 0.68 | $\psi$Do (mm) | 3.1 |
| T (mm) | 1.55 | $\psi$Da (mm) | 4.9 |
| D/T | 0.44 | $\psi$Dp (mm) | 5.9 |
| Ai (mm) | 0.46 | $\Sigma$Ai/($\psi$Do$\times\pi$) (%) | 18.9 |
| $\Sigma$Ai (mm) | 1.84 | Ri (%) | 81.1 |
| CTEg ($10^{-7}$/°C) | 73 | CTEp/CTEg | 8.9 |
| CTEp ($10^{-7}$/°C) | 650 | | |

Further, in the 1st example of the 2nd embodiment, when a coaxality of the maximum diameter $\psi$Do of the connecting surface 2113 of the glass effective optical portion 211 and the maximum diameter $\psi$Dp of the bearing structure 220 of the plastic outer peripheral portion 212 is Co, and a coaxality of the maximum diameter $\psi$Do of the connecting surface 2113 of the glass effective optical portion 211 and the minimum diameter $\psi$Da of the optical aligning structure 230 of the plastic outer peripheral portion 212 is Co1, the following conditions are satisfied: 0 mm < Co < 0.005 mm; and 0 mm < Co1 < 0.003 mm.

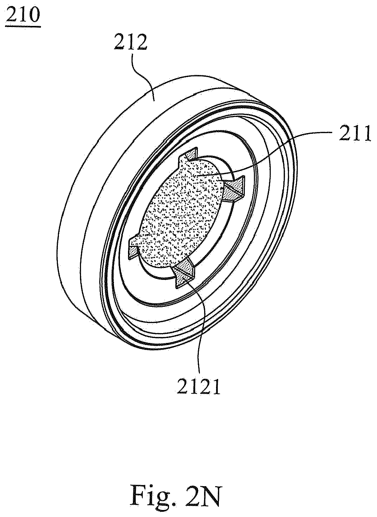

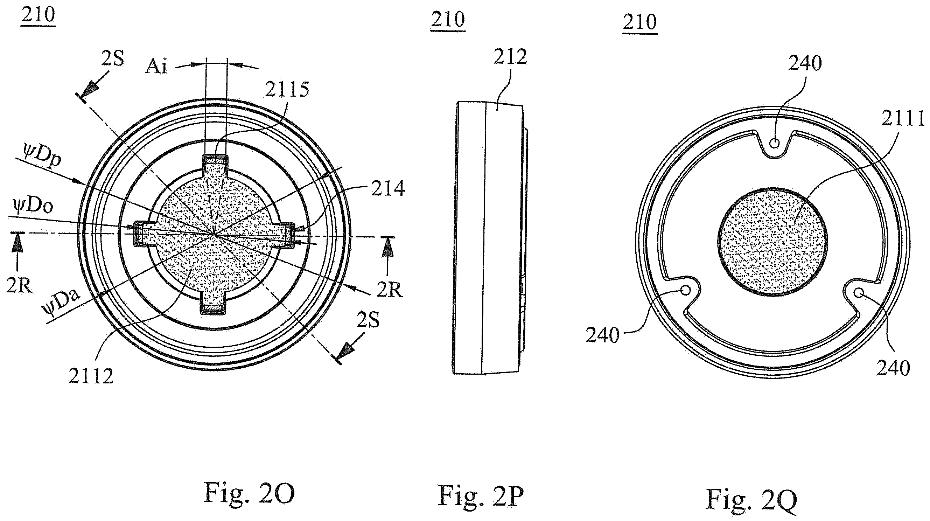

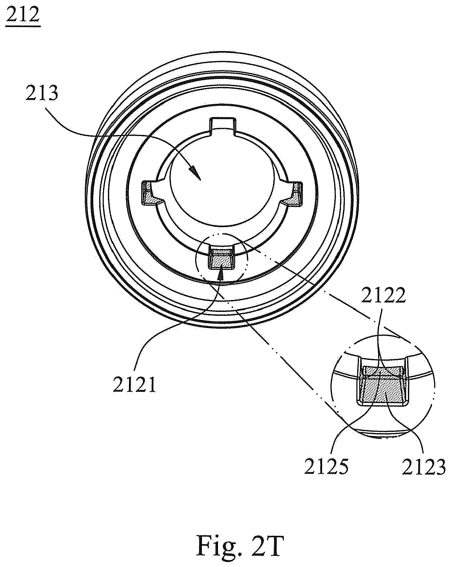

Fig. 2N is a three-dimensional view of a mixing optical element 210 of the imaging lens assembly 200 according to the 2nd example of the 2nd embodiment in Fig. 2A. Fig. 2O is a plan view of an image side of the mixing optical element 210 according to Fig. 2N. Fig. 2P is a side view of the mixing optical element 210 according to Fig. 2N. Fig. 2Q is a plan view of an object side of the mixing optical element 210 according to Fig. 2N. It is noted that in the 2nd example of the 2nd embodiment, only the mixing optical element 210 is different from the mixing optical element 210 disclosed in the 1st example of the 2nd embodiment, and the other element structures and technical features of the imaging lens assembly 200 are the same as in the 1st example of the 2nd embodiment, and are not described herein. The mixing optical element 210 includes a glass effective optical portion 211 and a plastic outer peripheral portion 212. The optical axis X passes through the glass effective optical portion 211. The plastic outer peripheral portion 212 surrounds and physically contacts the glass effective optical portion 211, and forms an aperture hole 213 (labelled in Fig. 2T).

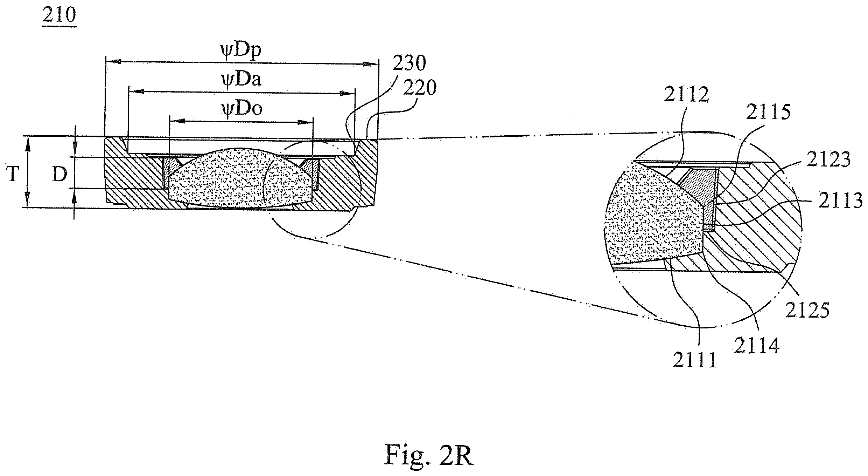

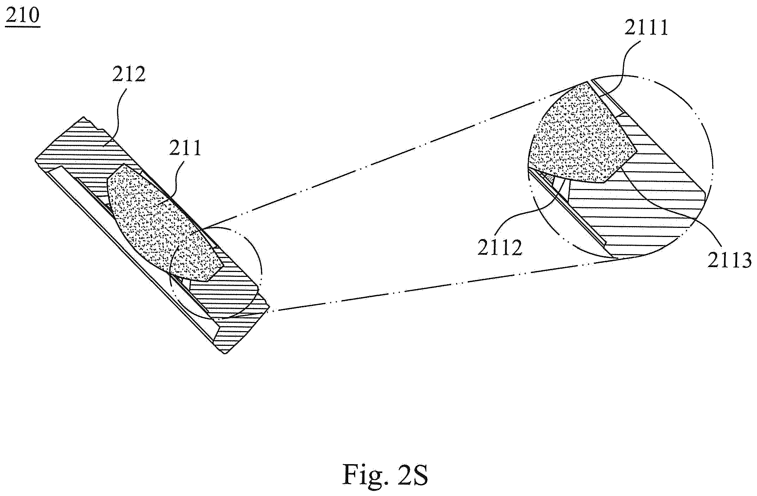

Fig. 2R is a cross-sectional view of Fig. 2O along line 2R-2R. Fig. 2S is a cross-sectional view of Fig. 2O along line 2S-2S. The glass effective optical portion 211 includes an object-side surface 2111, an image-side surface 2112 and a connecting surface 2113. The object-side surface 2111 faces towards an object side of the imaging lens assembly 200. The image-side surface 2112 faces towards an image side of the imaging lens assembly 200 and is disposed opposite to the object-side surface 2111. The connecting surface 2113 surrounds the optical axis X and connects the object-side surface 2111 and the image-side surface 2112. Both of the object-side surface 2111 and the image-side surface 2112 of the glass effective optical portion 211 physically contact the plastic outer peripheral portion 212. That is, there is no gap at the physically contact position. Both of the object-side surface 2111 and the image-side surface 2112 of the glass effective optical portion 211 overlap with the plastic outer peripheral portion 212 along the direction parallel to the optical axis X. A connecting position of the object-side surface 2111 and the connecting surface 2113 of the glass effective optical portion 211 has an object-side edge line 2114, and the object-side edge line 2114 defines a maximum contour of the object-side surface 2111. A connecting position of the image-side surface 2112 and the connecting surface 2113 of the glass effective optical portion 211 has an image-side edge line 2115, and the image-side edge line 2115 defines a maximum contour of the image-side surface 2112.

Fig. 2T is a schematic view of a plastic outer peripheral portion 212 of the mixing optical element 210 according to Fig. 2N. It is noted that the glass effective optical portion 211 is not shown in Fig. 2T in order to clearly show and illustrate the position of each structures of the plastic outer peripheral portion 212, but it does not mean that the glass effective optical portion 211 and the plastic outer peripheral portion 212 are two-part assembled. In detail, the plastic outer peripheral portion 212 has at least three recess structures 2121 arranged and disposed along a circumference direction around the optical axis X. The recess structures 2121 extend from one of the object side and the image side of the imaging lens assembly 200 to the other thereof along a direction parallel to the optical axis X. In the 2nd example of the 2nd embodiment of the present disclosure, the amount of the recess structures 2121 is four, and each of the recess structures 2121 extends from the image side to the object side of the imaging lens assembly 200. Each of the recess structures 2121 includes an outer surface 2123 and two side surfaces 2122. The side surfaces 2122 connect the outer surface 2123 and the aperture hole 213. Each of the recess structures 2121 can be formed by the outer surface 2123 and the two side surfaces 2122 connecting to each other and surrounding an inner space 214 (labelled in Fig. 2O). The outer surface 2123 is a surface of the recess structures 2121 which faces towards the optical axis X.

Further, as shown in Figs. 2R and 2T, a part of the image-side edge line 2115 and a bottom surface 2125 can be exposed from the inner space 214 of each of the recess structures 2121 corresponding to an observation on each of the recess structures 2121 from the image side of the imaging lens assembly 200 along the direction parallel to the optical axis X. In detail, each of the recess structures 2121 includes the bottom surface 2125 which is connected to the outer surface 2123 and is perpendicular to the optical axis X.

In Fig. 2R, the plastic outer peripheral portion 212 can further include at least one bearing structure 220 and at least one optical aligning structure 230. The bearing structure 220 is used to bear the optical elements adjacent to the bearing structure 220. The optical aligning structure 230 is used to align the optical element adjacent to the optical aligning structure 230. In the 2nd example of the 2nd embodiment of the present disclosure, the amount of the bearing structure 220 and the optical aligning structure 230 and the connection relationship with adjacent optical elements may be similar to the 1st example of the 2nd embodiment, and that will not be described again.

In Fig. 2Q, the mixing optical element 210 can have at least three gate traces 240. In the 2nd example of the 2nd embodiment, the amount of the gate traces is three, but the present disclosure is not limited thereto.

In Figs. 2O and 2R, when observing on each of the recess structures 2121 from the image side of the imaging lens assembly 200 along the direction parallel to the optical axis X, an arc length of a part of the image-side edge line 2115 exposed from the inner space 214 of each of the recess structures 2121 is Ai, a sum of the arc lengths of the exposed image-side edge line 2115 is $\Sigma$Ai, a shading ratio of the image-side edge line 2115 shaded by the plastic outer peripheral portion 212 is Ri (Ri = 1 - $\Sigma$Ai/($\psi$Do$\times\pi$)), a maximum diameter of the connecting surface 2113 of the glass effective optical portion 211 is $\psi$Do, a minimum diameter of the optical aligning structure 230 of the plastic outer peripheral portion 212 is $\psi$Da, and a maximum diameter of the bearing structure 220 of the plastic outer peripheral portion 212 is $\psi$Dp, the following conditions of the Table 4 are satisfied. It is noted that in the 2nd example of the 2nd embodiment, the definitions and values of D, T, CTEg, CTEp and CTEp/CTEg are the same as disclosed in the Table 3, and are not listed again herein.

| Table 4, 2nd example of 2nd embodiment | | | |
|---|---|---|---|
| Ai (mm) | 0.46 | $\psi$Do (mm) | 3.1 |
| $\Sigma$Ai (mm) | 1.84 | $\psi$Da (mm) | 4.9 |
| $\Sigma$Ai/($\psi$Do$\times\pi$) (%) | 18.9 | $\psi$Dp (mm) | 5.9 |
| Ri (%) | 81.1 | | |

Moreover, in the 2nd example of the 2nd embodiment, when a coaxality of the maximum diameter $\psi$Do of the connecting surface 2113 of the glass effective optical portion 211 and the maximum diameter $\psi$Dp of the bearing structure 220 of the plastic outer peripheral portion 212 is Co, and a coaxality of the maximum diameter $\psi$Do of the connecting surface 2113 of the glass effective optical portion 211 and the minimum diameter $\psi$Da of the optical aligning structure 230 of the plastic outer peripheral portion 212 is Co1, the following conditions are satisfied: 0 mm < Co < 0.005 mm, and 0 mm < Co1 < 0.003 mm.

<3rd embodiment>

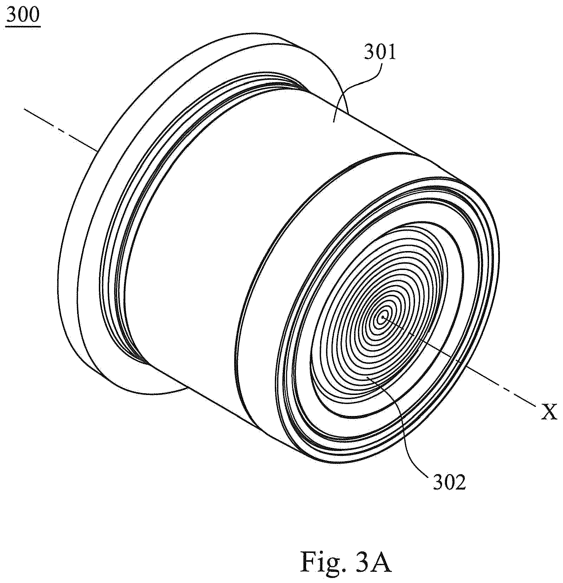

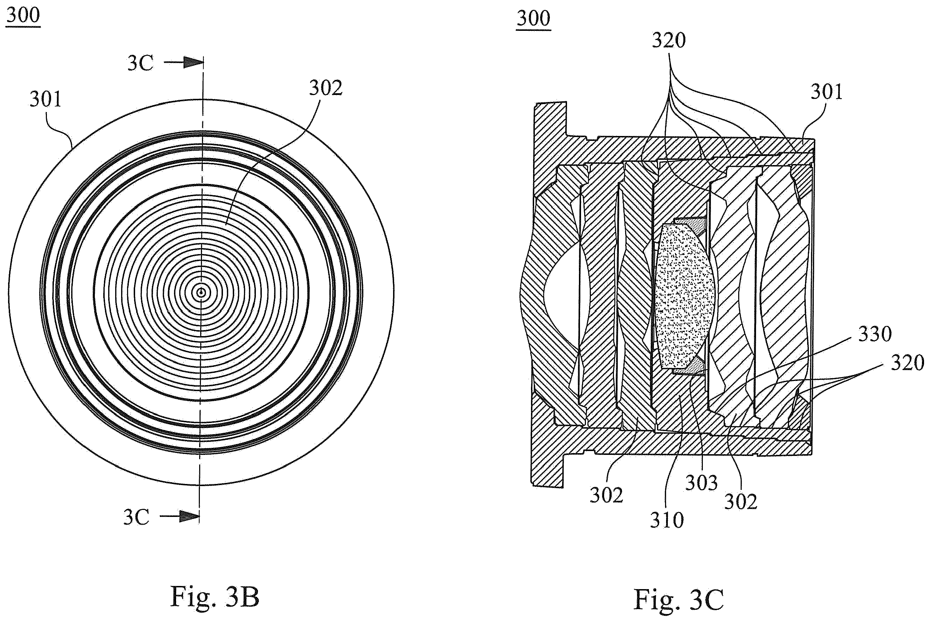

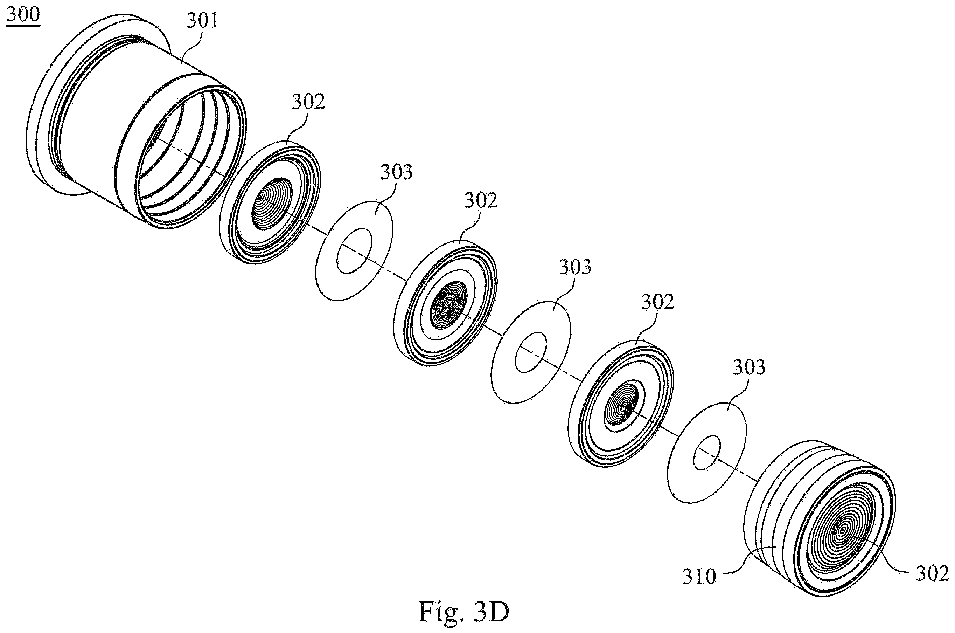

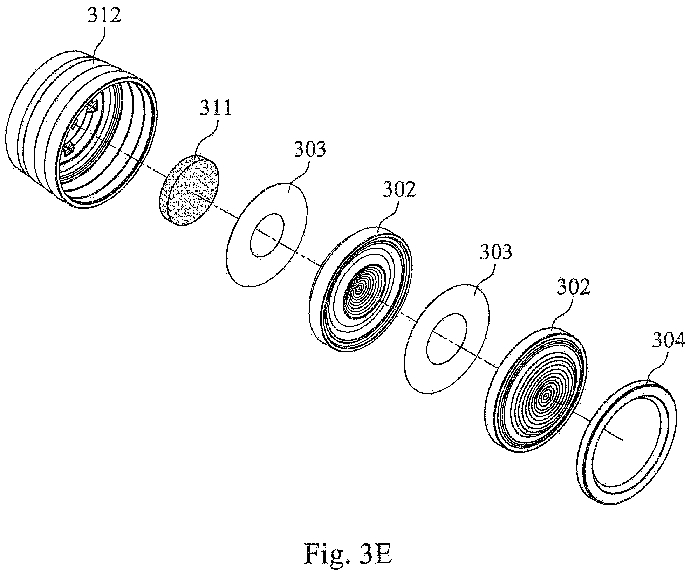

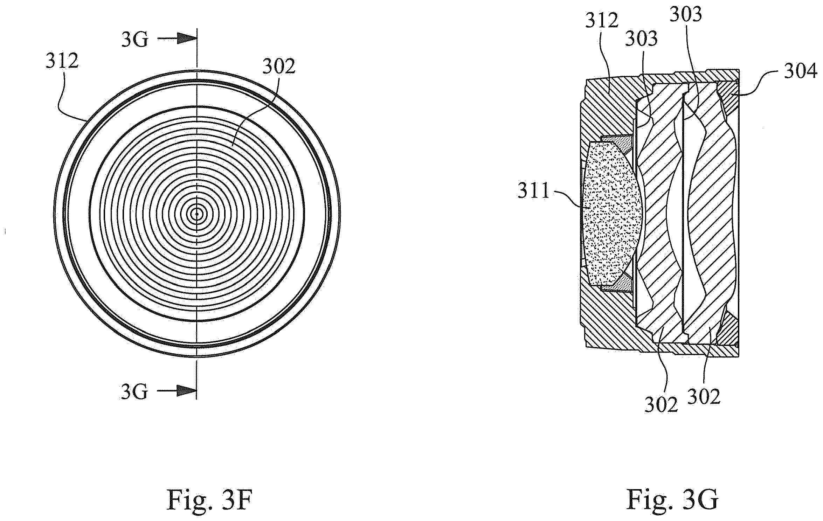

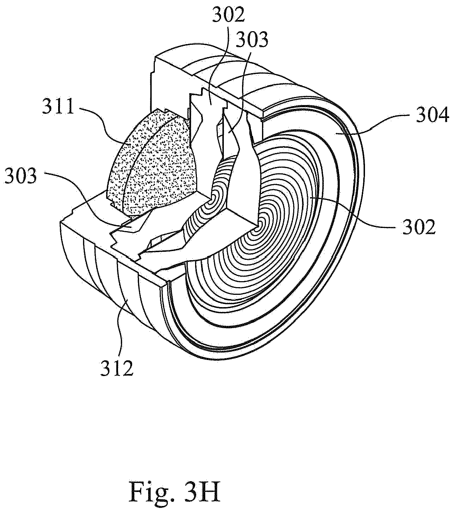

Fig. 3A is a three-dimensional schematic view of an imaging lens assembly 300 according to the 1st example of the 3rd embodiment of the present disclosure. Fig. 3B is a schematic view of an image side of the imaging lens assembly 300 according to Fig. 3A. Fig. 3C is a cross-sectional view of Fig. 3B along line 3C-3C. Fig. 3D is an exploded view of the imaging lens assembly 300 according to Fig. 3A. Fig. 3E is an exploded view of the mixing optical element 310 of the imaging lens assembly 300 according to Fig. 3D. Fig. 3F is a schematic view of an image side of the mixing optical element 310 of the imaging lens assembly 300 according to Fig. 3D. Fig. 3G is a cross-sectional view of Fig. 3F along line 3G-3G. Fig. 3H is a partial cross-sectional view of the mixing optical element 310 of the imaging lens assembly 300 according to Fig. 3D. In Figs. 3A to 3H, the imaging lens assembly 300 includes a plurality of optical elements, and an optical axis X passing through the optical elements is defined. In the 1st example of the 3rd embodiment, the optical elements includes a lens barrel 301, five lens elements 302, a mixing optical element 310, five light blocking sheets 303 and a retainer 304. The lens elements 302, the mixing optical element 310, the light blocking sheets 303 and the retainer 304 are disposed in the lens barrel 301 along the optical axis X, wherein two of the blocking sheets 303, two of the lens elements 302 and the retainer 304 are disposed in the mixing optical element 310. In detail, in Fig. 3D, in order from an object side to the image side, the imaging lens assembly 300 includes the lens element 302, the light blocking sheet 303, the lens element 302, the light blocking sheet 303, the lens element 302, the light blocking sheet 303 and the mixing optical element 310. In Figs. 3E, 3G and 3H, the mixing optical element 310 includes a glass effective optical portion 311 and a plastic outer peripheral portion 312. The light blocking sheet 303, the lens element 302, the light blocking sheet 303, the lens element 302 and the retainer 304 are sequentially disposed on the image side of the glass effective optical portion 311 from the object side to the image side of the imaging lens assembly 300, and are also disposed on the plastic outer peripheral portion 312. It is noted that the mixing optical element 310 can be integrally formed by the glass effective optical portion 311 (which can be a glass lens) and the plastic outer peripheral portion 312, such as insert molding, but the present disclosure will not be limited thereto. In order to clearly illustrate that the plastic outer peripheral portion 312 of the mixing optical element 310 can accommodate other optical elements as required, the glass effective optical portion 311 and the plastic outer peripheral portion 312 of the mixing optical element 310 are shown separately in Fig. 3E, but it does not mean that the mixing optical element 310 is two-part assembled. In the 1st example of the 3rd embodiment of the present disclosure, the lens barrel 301, each of the lens elements 302, each of the light blocking sheets 303 and the retainer 304 can be disposed in different structures and types according to achieve the desired optical effects, and is not described herein. Further, the optical elements in the imaging lens assembly 300 can otherwise be lens barrel, lens element, light block element, optical filter, reflecting element, lens spacer, etc., and will not be limited to the present disclosure.

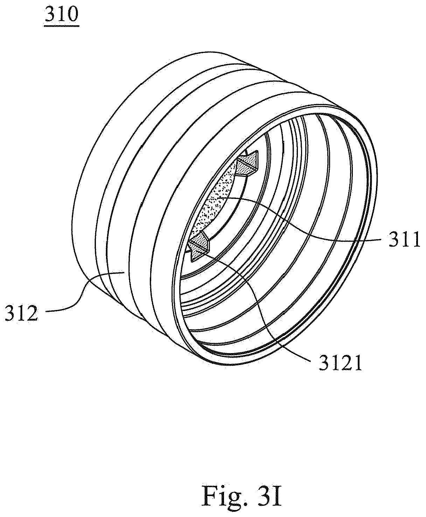

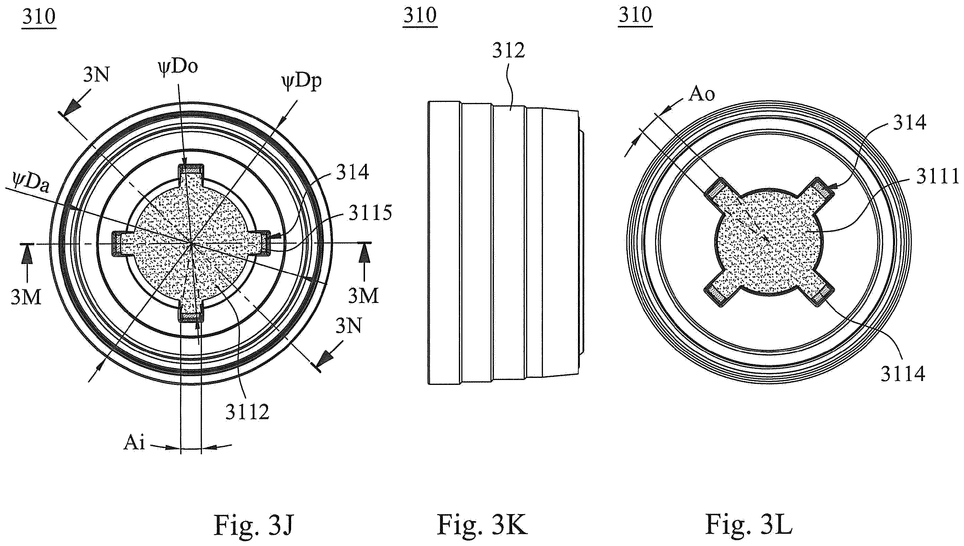

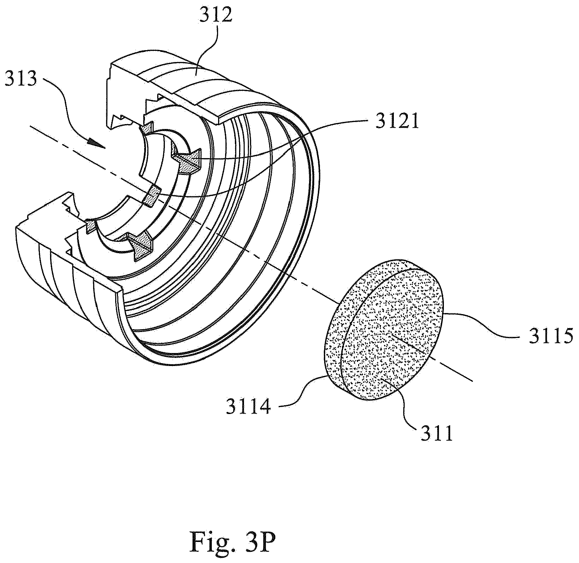

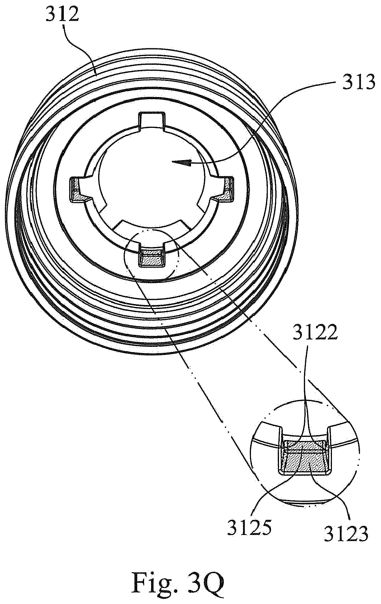

Fig. 3I is a three-dimensional view of the mixing optical element 310 of the imaging lens assembly 300 according to the 1st example of the 3rd embodiment in Fig. 3A. Fig. 3J is a plan view of an image side of the mixing optical element 310 according to Fig. 3I. Fig. 3K is a side view of the mixing optical element 310 according to Fig. 3I. Fig. 3L is a plan view of an object side of the mixing optical element 310 according to Fig. 3I. The optical axis X passes through the glass effective optical portion 311. The plastic outer peripheral portion 312 surrounds and physically contacts the glass effective optical portion 311 and forms an aperture hole 313 (labelled in Figs. 3P and 3Q).

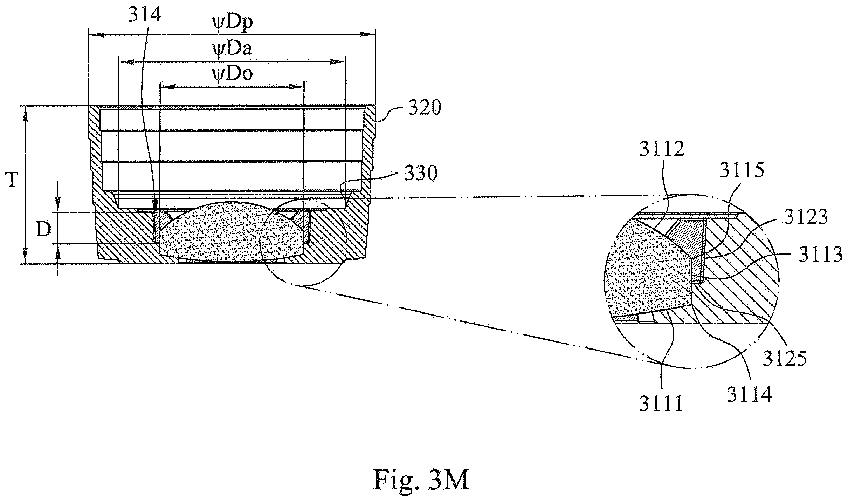

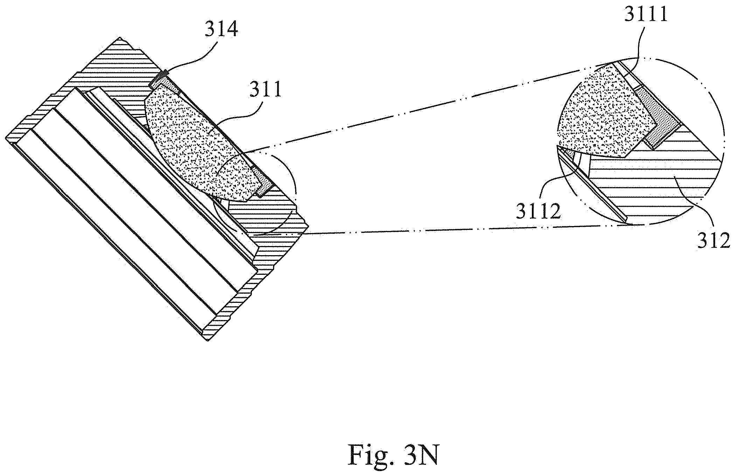

Fig. 3M is a cross-sectional view of Fig. 3J along line 3M-3M. Fig. 3N is a cross-sectional view of Fig. 3J along line 3N-3N. The glass effective optical portion 311 includes an object-side surface 3111, an image-side surface 3112 and a connecting surface 3113. The object-side surface 3111 faces towards an object side of the imaging lens assembly 300. The image-side surface 3112 faces towards an image side of the imaging lens assembly 300 and is disposed opposite to the object-side surface 3111. The connecting surface 3113 surrounds the optical axis X and connects the object-side surface 3111 and the image-side surface 3112. Both of the object-side surface 3111 and the image-side surface 3112 of the glass effective optical portion 311 physically contact the plastic outer peripheral portion 312. That is, there is no gap at the physically contact position. Both of the object-side surface 3111 and the image-side surface 3112 of the glass effective optical portion 311 overlap with the plastic outer peripheral portion 312 along the direction parallel to the optical axis X. A connecting position of the object-side surface 3111 and the connecting surface 3113 of the glass effective optical portion 311 has an object-side edge line 3114, and the object-side edge line 3114 defines a maximum contour of the object-side surface 3111. A connecting position of the image-side surface 3112 and the connecting surface 3113 of the glass effective optical portion 311 has an image-side edge line 3115, and the image-side edge line 3115 defines a maximum contour of the image-side surface 3112.

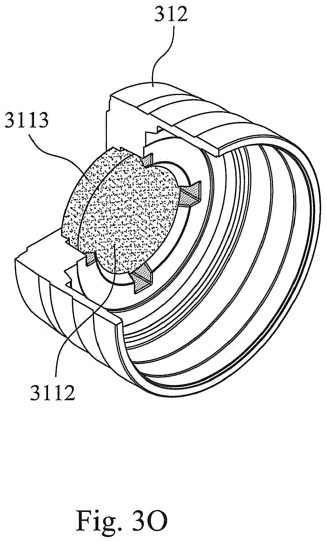

Fig. 3O is a partial cross-sectional view of the mixing optical element 310 according to Fig. 3I. Fig. 3P is an exploded view of the mixing optical element 310 according to Fig. 3I. Fig. 3Q is a schematic view of a plastic outer peripheral portion 312 of the mixing optical element 310 according to Fig. 3I. The plastic outer peripheral portion 312 has at least three recess structures 3121 arranged and disposed along a circumference direction around the optical axis X. The recess structures 3121 extend from one of the object side and the image side of the imaging lens assembly 300 to the other thereof along a direction parallel to the optical axis X. In the 1st example of the 3rd embodiment of the present disclosure, the amount of the recess structures 3121 is four, and each of the recess structures 3121 extends from the object side to the image side of the imaging lens assembly 300 or extends from the image side to the object side of the imaging lens assembly 300. In Fig. 3Q, each of the recess structures 3121 includes an outer surface 3123 and two side surfaces 3122. The side surfaces 3122 connect the outer surface 3123 and the aperture hole 313. Each of the recess structures 3121 can be formed by the outer surface 3123 and the two side surfaces 3122 connecting to each other and surrounding an inner space 314, and the outer surface 3123 is a surface of the recess structures 3121 which faces towards the optical axis X.

Further, in Figs. 3J, 3M and 3Q, a part of the image-side edge line 3115 and a bottom surface 3125 can be exposed from the inner space 314 of each of the recess structures 3121 corresponding to an observation on each of the recess structures 3121 from the image side of the imaging lens assembly 300 along the direction parallel to the optical axis X. In Fig. 3L, a part of the object-side edge line 3114 and a bottom surface (its reference numeral is omitted) can be exposed from the inner space 314 of each of the recess structures 3121 corresponding to an observation on each of the recess structures 3121 from the object side of the imaging lens assembly 300 along the direction parallel to the optical axis X. In detail, each of the recess structures 3121 includes the bottom surface 3125 which is connected to the outer surface 3123 and is perpendicular to the optical axis X.

As shown in Fig. 3M, the connecting surface 3113 of the glass effective optical portion 311 is closer to the optical axis X than the outer surface 3123 of each of the recess structures 3121 to the optical axis X. The connecting surface 3113 of the glass effective optical portion 311 overlaps with the outer surface 3123 of each of the recess structures 3121 along a direction perpendicular to the optical axis X.

In Fig. 3C, the plastic outer peripheral portion 312 can further include at least one bearing structure 320 and at least one optical aligning structure 330. The bearing structure 320 is used to bear the optical elements adjacent to the bearing structure 320. The optical aligning structure 330 is used to align the optical element adjacent to the optical aligning structure 330. In detail, in the 1st example of the 3rd embodiment of the present disclosure, the amount of the bearing structures 320 is ten, and each of the bearing structures 320 is for bearing the lens element 302 at the object side of the mixing optical element 310, the lens barrel 301, the light blocking sheet 303 at the image side of the glass effective optical portion 311 of the mixing optical element 310 and the lens element 302. The amount of the aligning structure 330 is one, and the aligning structure 330 is for aligning the lens element 302 at the image side of the glass effective optical portion 311 of the mixing optical element 310.

In Figs. 3J, 3L and 3M, when a maximum thickness of the plastic outer peripheral portion 312 along the direction parallel to the optical axis X is T, a maximum depth of each of the recess structures 3121 extending along the direction parallel to the optical axis X is D; when observing on each of the recess structures 3121 from the object side or the image side of the imaging lens assembly 300 along the direction parallel to the optical axis X, an arc length of a part of the object-side edge line 3114 exposed from the inner space 314 of each of the recess structures 3121 is Ao, a sum of the arc lengths of the exposed object-side edge line 3114 is $\Sigma$Ao, an arc length of a part of the image-side edge line 3115 exposed from the inner space 314 of each of the recess structures 3121 is Ai, a sum of the arc lengths of the exposed image-side edge line 3115 is $\Sigma$Ai, a shading ratio of the object-side edge line 3114 shaded by the plastic outer peripheral portion 312 is Ro (Ro = 1 - $\Sigma$Ao/($\psi$Do$\times\pi$)), a shading ratio of the image-side edge line 3115 shaded by the plastic outer peripheral portion 312 is Ri (Ri = 1 - $\Sigma$Ai/($\psi$Do$\times\pi$)), a maximum diameter of the connecting surface 3113 of the glass effective optical portion 311 is $\psi$Do, a minimum diameter of the optical aligning structure 330 of the plastic outer peripheral portion 312 is $\psi$Da, a maximum diameter of the bearing structure 320 of the plastic outer peripheral portion 312 is $\psi$Dp, a linear expansion coefficient of the glass effective optical portion 311 is CTEg, and a linear expansion coefficient of the plastic outer peripheral portion 312 is CTEp, the following conditions of the Table 5 are satisfied.

| Table 5, 1st example of 3rd embodiment | | | |
|---|---|---|---|
| D (mm) | 0.68 | $\psi$Do (mm) | 3.1 |
| T (mm) | 3.41 | $\psi$Da (mm) | 4.9 |
| D/T | 0.20 | $\psi$Dp (mm) | 6.2 |
| Ao (mm) | 0.48 | $\Sigma$Ao/($\psi$Do$\times\pi$) (%) | 19.7 |
| $\Sigma$Ao (mm) | 1.92 | $\Sigma$Ai/($\psi$Do$\times\pi$) (%) | 18.9 |
| Ai (mm) | 0.46 | Ro (%) | 80.3 |
| $\Sigma$Ai (mm) | 1.84 | Ri (%) | 81.1 |
| CTEg ($10^{-7}$/°C) | 73 | CTEp/CTEg | 8.9 |
| CTEp ($10^{-7}$/°C) | 650 | | |

Further, in the 1st example of the 3rd embodiment, when a coaxality of the maximum diameter $\psi$Do of the connecting surface 3113 of the glass effective optical portion 311 and the maximum diameter $\psi$Dp of the bearing structure 320 of the plastic outer peripheral portion 312 is Co, and a coaxality of the maximum diameter ψDo of the connecting surface 3113 of the glass effective optical portion 311 and the minimum diameter ψDa of the optical aligning structure 330 of the plastic outer peripheral portion 312 is Co1, the following conditions are satisfied: 0 mm < Co < 0.005 mm; and 0 mm < Co1 < 0.003 mm.

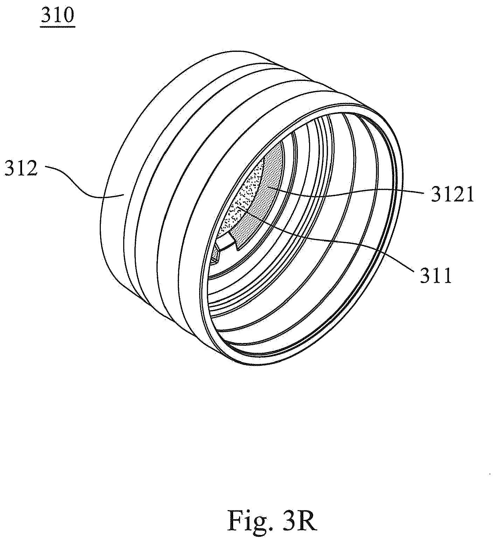

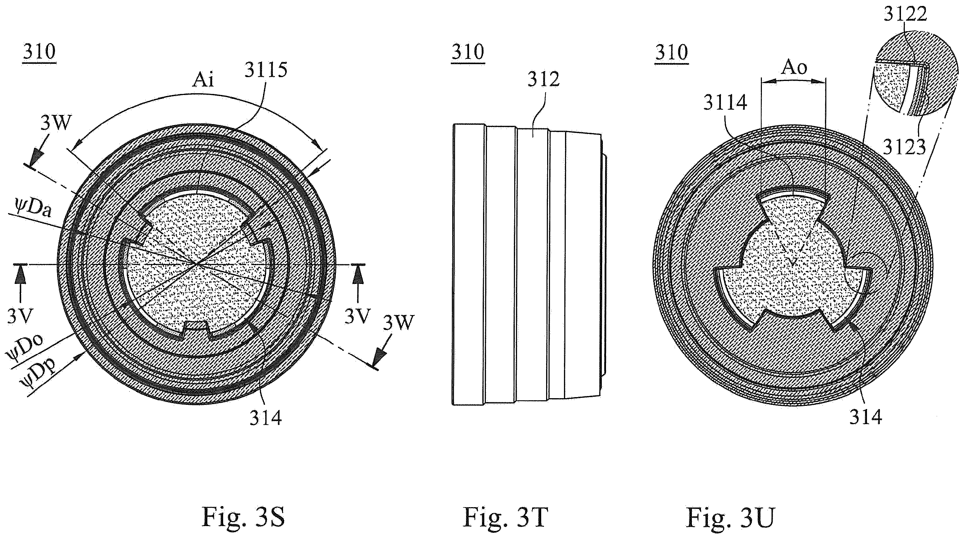

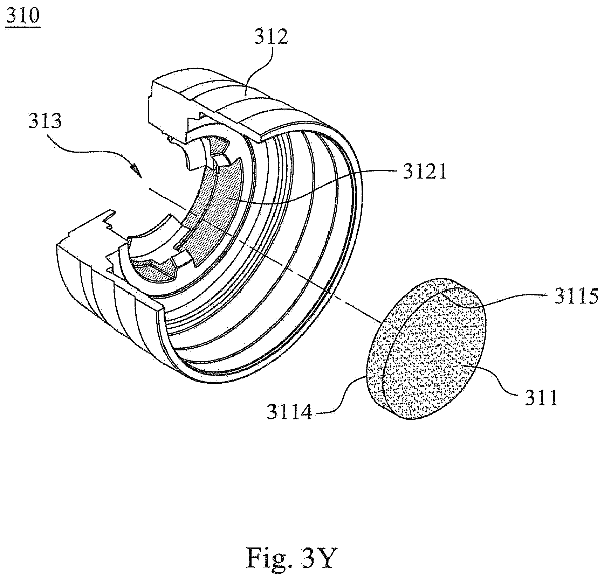

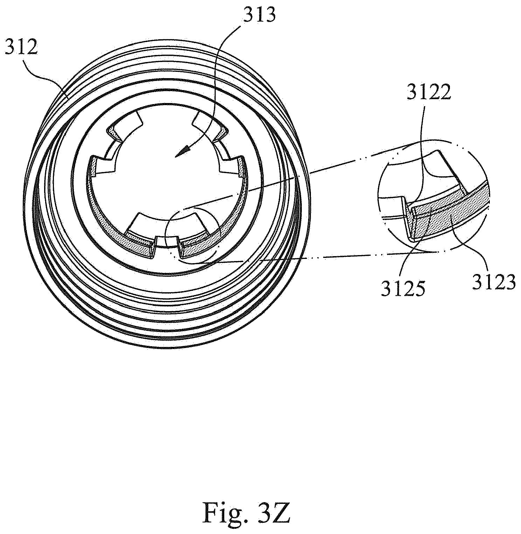

Fig. 3R is a three-dimensional view of a mixing optical element 310 of the imaging lens assembly 300 according to the 2nd example of the 3rd embodiment in Fig. 3A. Fig. 3S is a plan view of an image side of the mixing optical element 310 according to Fig. 3R. Fig. 3T is a side view of the mixing optical element 310 according to Fig. 3R. Fig. 3U is a plan view of an object side of the mixing optical element 310 according to Fig. 3R. It is noted that in the 2nd example of the 3rd embodiment, only the mixing optical element 310 is different from the mixing optical element 310 disclosed in the 1st example of the 3rd embodiment, and the other element structures and technical features of the imaging lens assembly 300 are the same as in the 1st example of the 3rd embodiment, and are not described herein. The mixing optical element 310 includes a glass effective optical portion 311 and a plastic outer peripheral portion 312. The optical axis X passes through the glass effective optical portion 311. The plastic outer peripheral portion 312 surrounds and physically contacts the glass effective optical portion 311, and forms an aperture hole 313 (labelled in Figs. 3Y and 3Z).

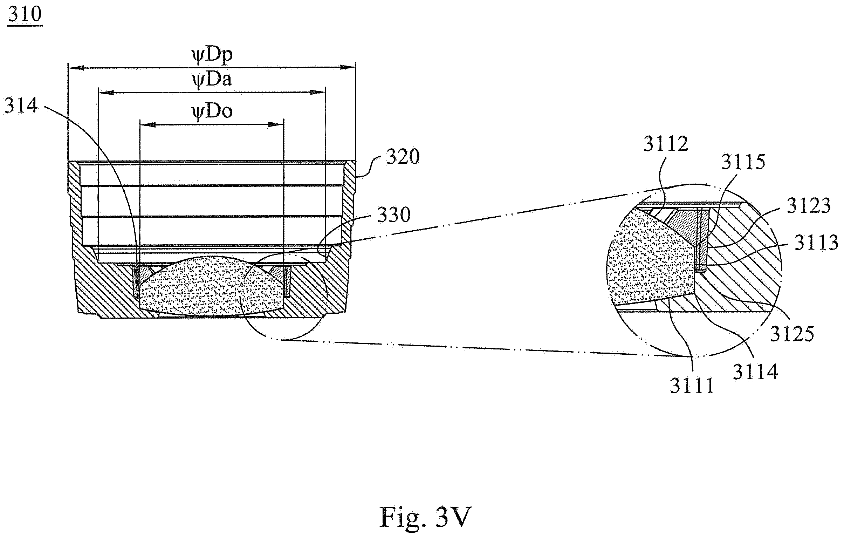

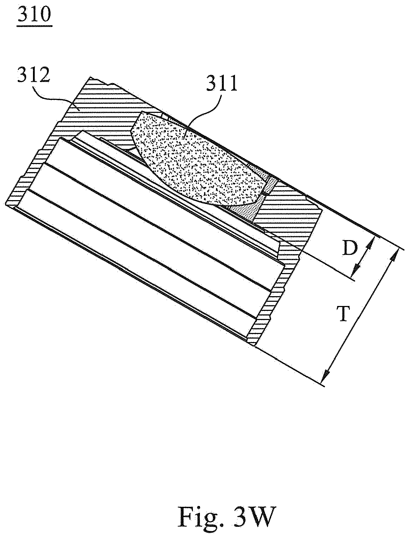

Fig. 3V is a cross-sectional view of Fig. 3S along line 3V-3V. Fig. 3W is a cross-sectional view of Fig. 3S along line 3W-3W. The glass effective optical portion 311 includes an object-side surface 3111, an image-side surface 3112 and a connecting surface 3113. The object-side surface 3111 faces towards an object side of the imaging lens assembly 300. The image-side surface 3112 faces towards an image side of the imaging lens assembly 300 and is disposed opposite to the object-side surface 3111. The connecting surface 3113 surrounds the optical axis X and connects the object-side surface 3111 and the image-side surface 3112. Both of the object-side surface 3111 and the image-side surface 3112 of the glass effective optical portion 311 physically contact the plastic outer peripheral portion 312. That is, there is no gap at the physically contact position. Both of the object-side surface 3111 and the image-side surface 3112 of the glass effective optical portion 311 overlap with the plastic outer peripheral portion 312 along the direction parallel to the optical axis X. A connecting position of the object-side surface 3111 and the connecting surface 3113 of the glass effective optical portion 311 has an object-side edge line 3114, and the object-side edge line 3114 defines a maximum contour of the object-side surface 3111. A connecting position of the image-side surface 3112 and the connecting surface 3113 of the glass effective optical portion 311 has an image-side edge line 3115, and the image-side edge line 3115 defines a maximum contour of the image-side surface 3112.

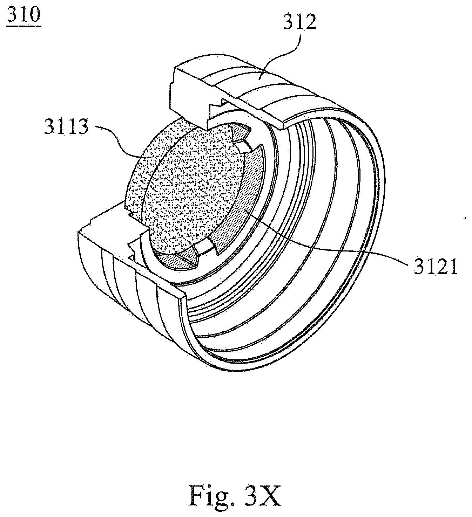

Fig. 3X is a partial cross-sectional view of the mixing optical element 310 according to Fig. 3R. Fig. 3Y is an exploded view of the mixing optical element 310 according to Fig. 3R. Fig. 3Z is a schematic view of a plastic outer peripheral portion 312 of the mixing optical element 310 according to Fig. 3R. It is noted that the mixing optical element 310 can be integrally formed by the glass effective optical portion 311 (which can be a glass lens) and the plastic outer peripheral portion 312, such as insert molding, but the present disclosure will not be limited thereto. In order to clearly illustrate the detail structures of the aperture hole 313 and the plastic outer peripheral portion 312 of the mixing optical element 310, the glass effective optical portion 311 and the plastic outer peripheral portion 312 of the mixing optical element 310 are shown separately in Figs. 3X to 3Z, but it does not mean that the mixing optical element 310 is two-part assembled. In detail, the plastic outer peripheral portion 312 has at least three recess structures 3121 arranged and disposed along a circumference direction around the optical axis X. The recess structures 3121 extend from one of the object side and the image side of the imaging lens assembly 300 to the other thereof along a direction parallel to the optical axis X. In the 2nd example of the 3rd embodiment of the present disclosure, the amount of the recess structures 3121 is three, and each of the recess structures 3121 extends from the image side to the object side of the imaging lens assembly 300. In Fig. 3Z, each of the recess structures 3121 includes an outer surface 3123 and two side surfaces 3122. The side surfaces 3122 connect the outer surface 3123 and the aperture hole 313. Each of the recess structures 3121 can be formed by the outer surface 3123 and the two side surfaces 3122 connecting to each other and surrounding an inner space 314, and the outer surface 3123 is a surface of the recess structures 3121 which faces towards the optical axis X.

Further, as shown in Figs. 3V and 3S, a part of the image-side edge line 3115 and a bottom surface 3125 can be exposed from the inner space 314 of each of the recess structures 3121 corresponding to an observation on each of the recess structures 3121 from the image side of the imaging lens assembly 300 along the direction parallel to the optical axis X. In detail, each of the recess structures 3121 includes the bottom surface 3125 which is connected to the outer surface 3123 and is perpendicular to the optical axis X.

As shown in Fig. 3V, the connecting surface 3113 of the glass effective optical portion 311 is closer to the optical axis X than the outer surface 3123 of each of the recess structures 3121 to the optical axis X. The connecting surface 3113 of the glass effective optical portion 311 overlaps with the outer surface 3123 of each of the recess structures 3121 along a direction perpendicular to the optical axis X.

In Fig. 3V, the plastic outer peripheral portion 312 can further include at least one bearing structure 320 and at least one optical aligning structure 330. The bearing structure 320 is used to bear the optical elements adjacent to the bearing structure 320. The optical aligning structure 330 is used to align the optical element adjacent to the optical aligning structure 330. In the 2nd example of the 3rd embodiment of the present disclosure, the amount of the bearing structure 320 and the optical aligning structure 330 and the connection relationship with the adjacent optical elements can be similar to those of the 1st example of the 3rd embodiment, and will not be described herein.

In Figs. 3S, 3U, 3V and 3W, when a maximum thickness of the plastic outer peripheral portion 312 along the direction parallel to the optical axis X is T, a maximum depth of each of the recess structures 3121 extending along the direction parallel to the optical axis X is D; when observing on each of the recess structures 3121 from the object side or the image side of the imaging lens assembly 300 along the direction parallel to the optical axis X, an arc length of a part of the object-side edge line 3114 exposed from the inner space 314 of each of the recess structures 3121 is Ao, a sum of the arc lengths of the exposed object-side edge line 3114 is ΣAo, an arc length of a part of the image-side edge line 3115 exposed from the inner space 314 of each of the recess structures 3121 is Ai, a sum of the arc lengths of the exposed image-side edge line 3115 is ΣAi, a shading ratio of the object-side edge line 3114 shaded by the plastic outer peripheral portion 312 is Ro (Ro = 1 - ΣAo/(ψDo×π)), a shading ratio of the image-side edge line 3115 shaded by the plastic outer peripheral portion 312 is Ri (Ri = 1 - ΣAi/(ψDo×π)), a maximum diameter of the connecting surface 3113 of the glass effective optical portion 311 is ψDo, a minimum diameter of the optical aligning structure 330 of the plastic outer peripheral portion 312 is ψDa, and a maximum diameter of the bearing structure 320 of the plastic outer peripheral portion 312 is ψDp, the following conditions of the Table 6 are satisfied. It is noted that in the 2nd example of the 3rd embodiment, the definitions and values of CTEg, CTEp and CTEp/CTEg are the same as disclosed in the Table 5, and are not listed again herein.

| Table 6, 2nd example of 3rd embodiment | | | |
|---|---|---|---|
| D (mm) | 1.08 | ψDo (mm) | 3.1 |
| T (mm) | 3.41 | ψDa (mm) | 4.9 |
| D/T | 0.32 | ψDp (mm) | 6.2 |
| Ao (mm) | 1.48 | ΣAo/(ψDo×π) (%) | 45.6 |
| ΣAo (mm) | 4.44 | ΣAi/(ψDo×π) (%) | 81.0 |
| Ai (mm) | 2.63 | Ro (%) | 54.4 |
| ΣAi (mm) | 7.89 | Ri (%) | 19.0 |

Further, in the 2nd example of the 3rd embodiment, when a coaxality of the maximum diameter ψDo of the connecting surface 3113 of the glass effective optical portion 311 and the maximum diameter ψDp of the bearing structure 320 of the plastic outer peripheral portion 312 is Co, and a coaxality of the maximum diameter ψDo of the connecting surface 3113 of the glass effective optical portion 311 and the minimum diameter ψDa of the optical aligning structure 330 of the plastic outer peripheral portion 312 is Co1, the following conditions are satisfied: 0 mm < Co < 0.005 mm; and 0 mm < Co1 < 0.003 mm.

<4th embodiment>

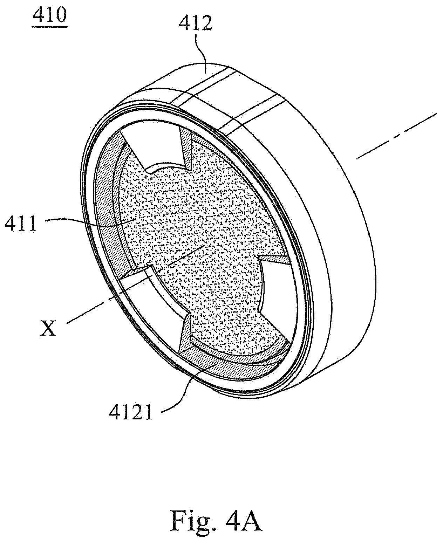

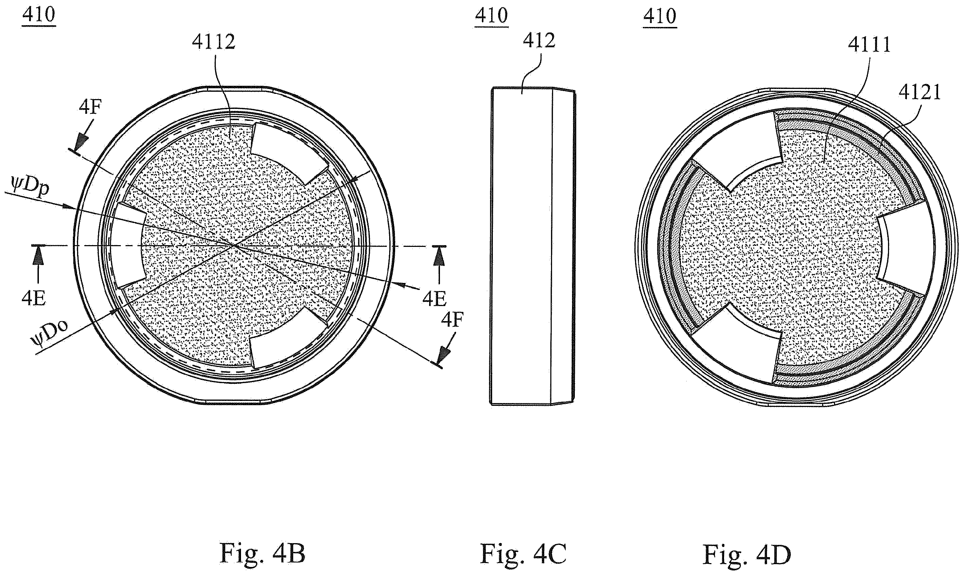

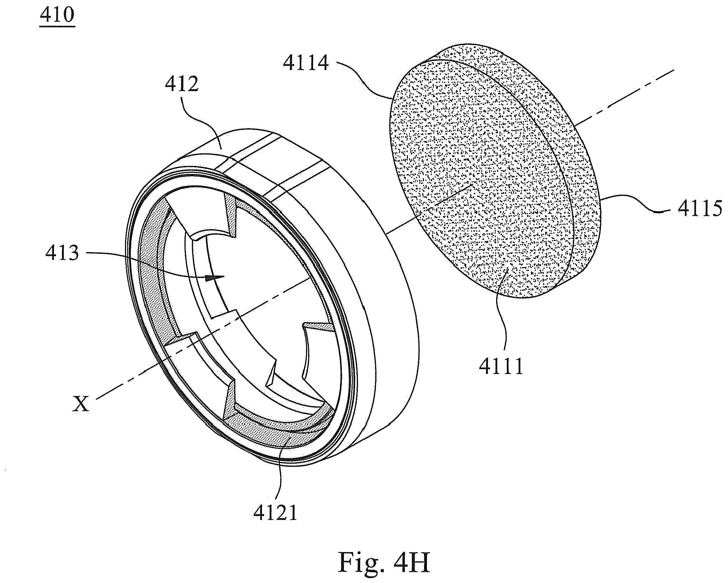

Fig. 4A is a three-dimensional view of a mixing optical element 410 of an imaging lens assembly according to the 1st example of the 4th embodiment of the present disclosure. Fig. 4B is a plan view of an image side of the mixing optical element 410 according to Fig. 4A. Fig. 4C is a side view of the mixing optical element 410 according to Fig. 4A. Fig. 4D is a plan view of the object side of the mixing optical element 410 according to Fig. 4A. In Figs. 4A to 4D, the mixing optical element 410 of the imaging lens assembly in the 1st example of the 4th embodiment includes a glass effective optical portion 411 and a plastic outer peripheral portion 412. The optical axis X passes through the glass effective optical portion 411. The plastic outer peripheral portion 412 surrounds and physically contacts the glass effective optical portion 411 and forms an aperture hole 413 (labelled in Fig. 4H). It is noted that the imaging lens assembly of the 1st example of the 4th embodiment can be composed of the mixing optical element 410 and other optical elements of any of the aforementioned examples of any of the aforementioned embodiments, and the other optical elements of the imaging lens assembly are not described herein.

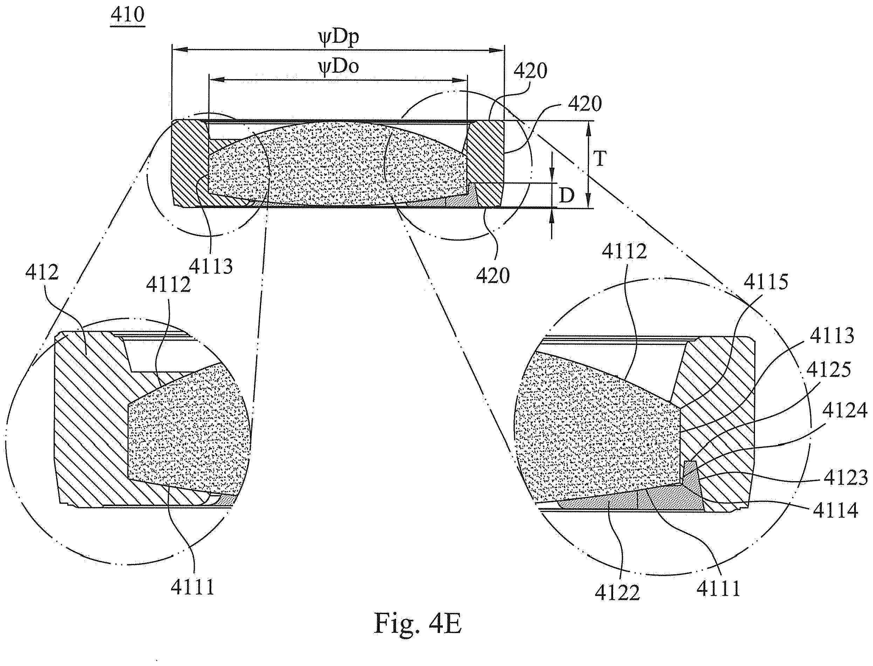

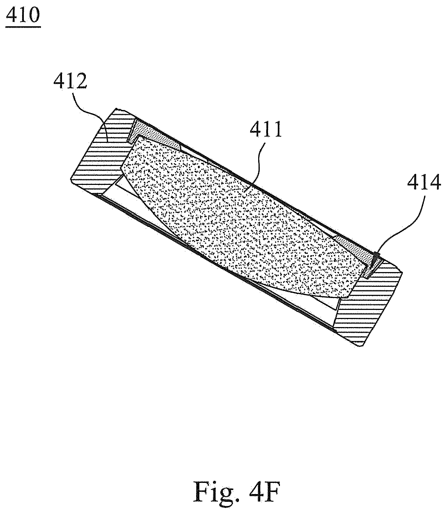

Fig. 4E is a cross-sectional view of Fig. 4B along line 4E-4E. Fig. 4F is a cross-sectional view of Fig. 4B along line 4F-4F. The glass effective optical portion 411 includes an object-side surface 4111, an image-side surface 4112 and a connecting surface 4113. The object-side surface 4111 faces towards an object side of the imaging lens assembly. The image-side surface 4112 faces towards an image side of the imaging lens assembly and is disposed opposite to the object-side surface 4111. The connecting surface 4113 surrounds the optical axis X and connects the object-side surface 4111 and the image-side surface 4112. Both of the object-side surface 4111 and the image-side surface 4112 of the glass effective optical portion 411 physically contact the plastic outer peripheral portion 412. That is, there is no gap at the physically contact position. Both of the object-side surface 4111 and the image-side surface 4112 of the glass effective optical portion 411 overlap with the plastic outer peripheral portion 412 along the direction parallel to the optical axis X. A connecting position of the object-side surface 4111 and the connecting surface 4113 of the glass effective optical portion 411 has an object-side edge line 4114, and the object-side edge line 4114 defines a maximum contour of the object-side surface 4111. A connecting position of the image-side surface 4112 and the connecting surface 4113 of the glass effective optical portion 411 has an image-side edge line 4115, and the image-side edge line 4115 defines a maximum contour of the image-side surface 4112.

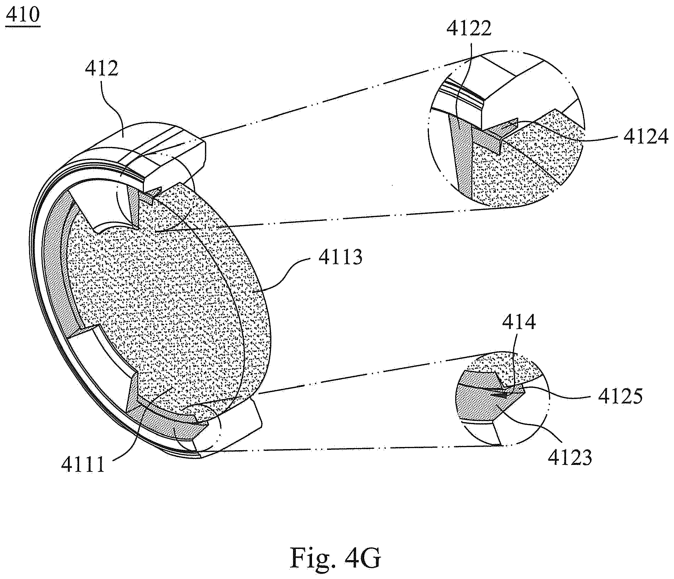

Fig. 4G is a partial cross-sectional view of the mixing optical element 410 according to Fig. 4A. Fig. 4H is an exploded view of the mixing optical element 410 according to Fig. 4A. It is noted that the mixing optical element 410 can be integrally formed by the glass effective optical portion 411 (which can be a glass lens) and the plastic outer peripheral portion 412, such as insert molding, but the present disclosure will not be limited thereto. In order to clearly illustrate the detail structures of the aperture hole 413 and the plastic outer peripheral portion 412 of the mixing optical element 410, the glass effective optical portion 411 and the plastic outer peripheral portion 412 of the mixing optical element 410 are shown separately in Figs. 4G to 4H, but it does not mean that the mixing optical element 410 is two-part assembled. The plastic outer peripheral portion 412 has at least three recess structures 4121 arranged and disposed along a circumference direction around the optical axis X. The recess structures 4121 extend from one of the object side and the image side of the imaging lens assembly to the other thereof along a direction parallel to the optical axis X. In the 1st example of the 4th embodiment of the present disclosure, the amount of the recess structures 4121 is three, and each of the recess structures 4121 extends from the object side to the image side of the imaging lens assembly. In Figs. 4E and 4G, each of the recess structures 4121 includes an outer surface 4123, an inner surface 4124 and two side surfaces 4122. The inner surface 4124 is disposed opposite to the outer surface 4123 and closer to the optical axis X than the outer surface 4123 to the optical axis X. The side surfaces 4122 connect the outer surface 4123 and the inner surface 4124. Each of the recess structures 4121 can be formed by the outer surface 4123, the inner surface 4124 and the two side surfaces 4122 connecting to each other and surrounding an inner space 414. The outer surface 4123 is a surface of the recess structures 4121 which faces towards the optical axis X. The inner surface 4124 is a surface of the recess structures 4121 which away from the optical axis X. The connecting surface 4113 of the glass effective optical portion 411 is closer to the optical axis X than the inner surface 4124 of each of the recess structures 4121 to the optical axis X. The connecting surface 4113 of the glass effective optical portion 411 overlaps with the inner surface 4124 of each of the recess structures 4121 along a direction perpendicular to the optical axis X.

In Figs. 4B, 4D and 4G, the object-side edge line 4114 and the image-side edge line 4115 of the glass effective optical portion 411 are shaded by the plastic outer peripheral portion 412 corresponding to observations on the mixing optical element 410 from both of the object side and the image side of the imaging lens assembly along the direction parallel to the optical axis X. That is, when observing the mixing optical element 410 from the object side and the image side of the imaging lens assembly along the direction parallel to the optical axis X, the object-side edge line 4114 and the image-side edge line 4115 of the glass effective optical portion 411 cannot be observed.

In Figs. 4E and 4G, a bottom surface 4125 is exposed from the inner space 414 corresponding to an observation on the inner space 414 of each of the recess structures 4121 from the object side or the image side of the imaging lens assembly along the direction parallel to the optical axis X. Specifically, in the 1st example of the 4th embodiment, the bottom surface 4125 is exposed from the inner space 414 corresponding to an observation on the inner space 414 of each of the recess structures 4121 from the object side of the imaging lens assembly along the direction parallel to the optical axis X. In detail, each of the recess structures 4121 includes the bottom surface 4125 which is connected to the outer surface 4123 and the inner surface 4124 and is perpendicular to the optical axis X.

In Fig. 4E, the plastic outer peripheral portion 412 can further include at least one bearing structure 420. The bearing structure 420 is used to bear the optical elements adjacent to the bearing structure 420. In detail, in the 1st example of the 4th embodiment of the present disclosure, the amount of the bearing structures 420 is three. The relationship between the bearing structures 420 and the adjacent optical elements can be the same as or similar to the aforementioned first to third embodiments as required, and is not described again herein.

In Figs. 4B and 4E, when a maximum thickness of the plastic outer peripheral portion 412 along the direction parallel to the optical axis X is T, a maximum depth of each of the recess structures 4121 extending along the direction parallel to the optical axis X is D, a maximum diameter of the connecting surface 4113 of the glass effective optical portion 411 is $\psi$Do, a maximum diameter of the bearing structure 420 of the plastic outer peripheral portion 412 is $\psi$Dp, a linear expansion coefficient of the glass effective optical portion 411 is CTEg, and a linear expansion coefficient of the plastic outer peripheral portion 412 is CTEp, the following conditions of the Table 7 are satisfied.

| Table 7, 1st example of 4th embodiment | | | |
|---|---|---|---|
| D (mm) | 0.53 | $\psi$Do (mm) | 5.6 |

(continued)

| Table 7, 1st example of 4th embodiment | | | |
|---|---|---|---|
| T (mm) | 1.90 | $\psi$Dp (mm) | 7.2 |
| D/T | 0.28 | CTEp ($10^{-7}$/°C) | 650 |
| CTEg ($10^{-7}$/°C) | 81 | CTEp/CTEg | 8.0 |

Further, in the 1st example of the 4th embodiment, when a coaxality of the maximum diameter $\psi$Do of the connecting surface 4113 of the glass effective optical portion 411 and the maximum diameter $\psi$Dp of the bearing structure 420 of the plastic outer peripheral portion 412 is Co, the following conditions are satisfied: 0 mm < Co < 0.005 mm.

<5th embodiment>

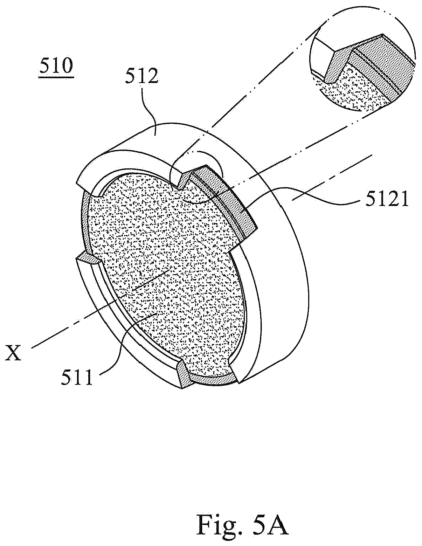

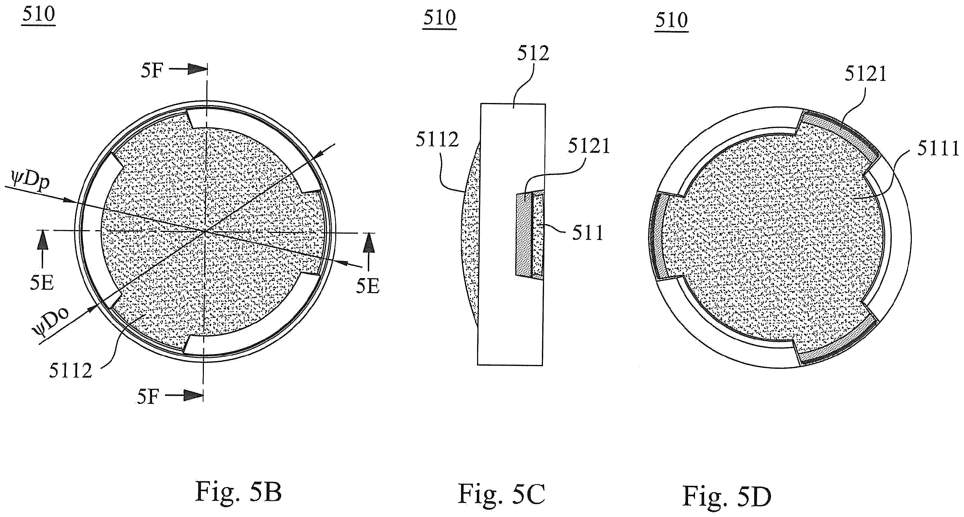

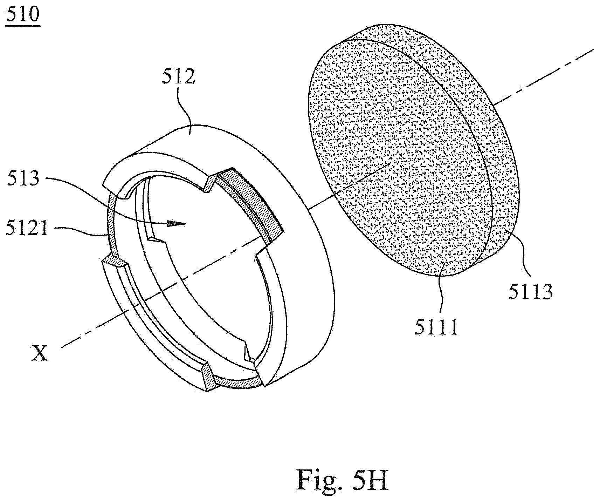

Fig. 5A is a three-dimensional view of a mixing optical element 510 of an imaging lens assembly according to the 1st example of the 5th embodiment of the present disclosure. Fig. 5B is a plan view of an image side of the mixing optical element 510 according to Fig. 5A. Fig. 5C is a side view of the mixing optical element 510 according to Fig. 5A. Fig. 5D is a plan view of the object side of the mixing optical element 510 according to Fig. 5A. In Figs. 5A to 5D, the mixing optical element 510 of the imaging lens assembly in the 1st example of the 5th embodiment includes a glass effective optical portion 511 and a plastic outer peripheral portion 512. The optical axis X passes through the glass effective optical portion 511. The plastic outer peripheral portion 512 surrounds and physically contacts the glass effective optical portion 511 and forms an aperture hole 513 (labelled in Fig. 5H). It is noted that the imaging lens assembly of the 1st example of the 5th embodiment can be composed of the mixing optical element 510 and other optical elements of any of the aforementioned examples of any of the aforementioned embodiments, and the other optical elements of the imaging lens assembly are not described herein.

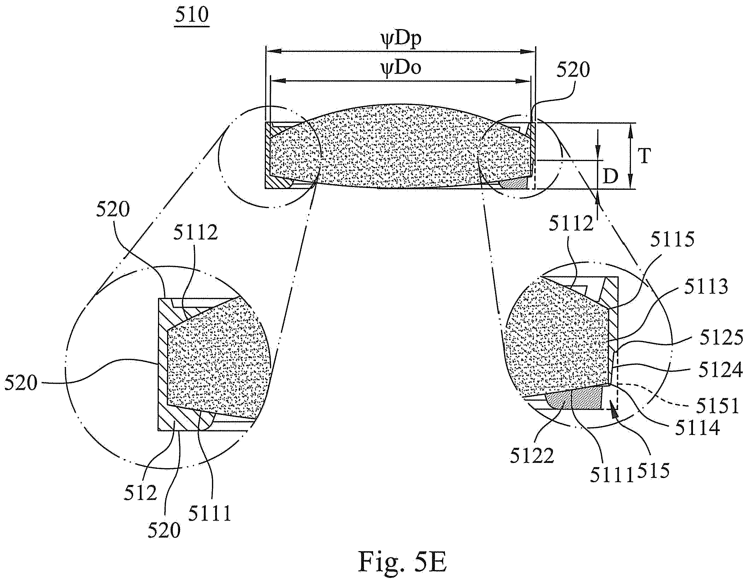

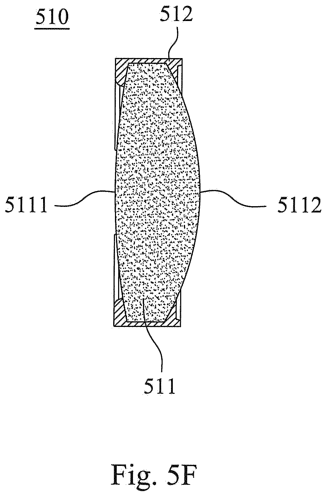

Fig. 5E is a cross-sectional view of Fig. 5B along line 5E-5E. Fig. 5F is a cross-sectional view of Fig. 5B along line 5F-5F. The glass effective optical portion 511 includes an object-side surface 5111, an image-side surface 5112 and a connecting surface 5113. The object-side surface 5111 faces towards an object side of the imaging lens assembly. The image-side surface 5112 faces towards an image side of the imaging lens assembly and is disposed opposite to the object-side surface 5111. The connecting surface 5113 surrounds the optical axis X and connects the object-side surface 5111 and the image-side surface 5112. Both of the object-side surface 5111 and the image-side surface 5112 of the glass effective optical portion 511 physically contact the plastic outer peripheral portion 512. That is, there is no gap at the physically contact position. Both of the object-side surface 5111 and the image-side surface 5112 of the glass effective optical portion 511 overlap with the plastic outer peripheral portion 512 along the direction parallel to the optical axis X. A connecting position of the object-side surface 5111 and the connecting surface 5113 of the glass effective optical portion 511 has an object-side edge line 5114, and the object-side edge line 5114 defines a maximum contour of the object-side surface 5111. A connecting position of the image-side surface 5112 and the connecting surface 5113 of the glass effective optical portion 511 has an image-side edge line 5115, and the image-side edge line 5115 defines a maximum contour of the image-side surface 5112.

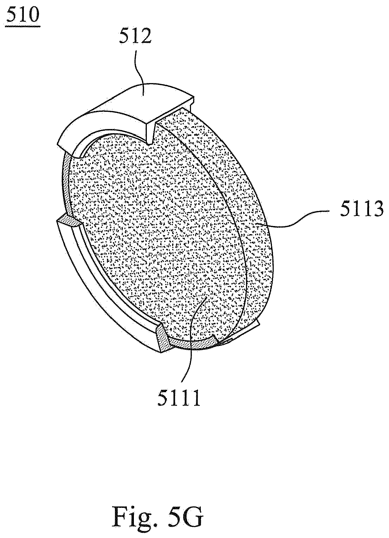

Fig. 5G is a partial cross-sectional view of the mixing optical element 510 according to Fig. 5A. Fig. 5H is an exploded view of the mixing optical element 510 according to Fig. 5A. It is noted that the mixing optical element 510 can be integrally formed by the glass effective optical portion 511 (which can be a glass lens) and the plastic outer peripheral portion 512, such as insert molding, but the present disclosure will not be limited thereto. In order to clearly illustrate the detail structures of the aperture hole 513 and the plastic outer peripheral portion 512 of the mixing optical element 510, the glass effective optical portion 511 and the plastic outer peripheral portion 512 of the mixing optical element 510 are shown separately in Figs. 5G to 5H, but it does not mean that the mixing optical element 510 is two-part assembled. The plastic outer peripheral portion 512 has at least three recess structures 5121 arranged and disposed along a circumference direction around the optical axis X. The recess structures 5121 extend from one of the object side and the image side of the imaging lens assembly to the other thereof along a direction parallel to the optical axis X. In the 1st example of the 5th embodiment of the present disclosure, the amount of the recess structures 5121 is three, and each of the recess structures 5121 extends from the object side to the image side of the imaging lens assembly. In Figs. 5A and 5E, each of the recess structures 5121 includes an inner surface 5124 and two side surfaces 5122. The side surfaces 5122 connect the inner surface 5124 and the aperture hole 513. The inner surface 5124 is a surface of the recess structures 5121 which away from the optical axis X. The connecting surface 5113 of the glass effective optical portion 511 is closer to the optical axis X than the inner surface 5124 of each of the recess structures 5121 to the optical axis X. The connecting surface 5113 of the glass effective optical portion 511 overlaps with the inner surface 5124 of each of the recess structures 5121 along a direction perpendicular to the optical axis X.

In Figs. 5B, 5D and 5G, the object-side edge line 5114 and the image-side edge line 5115 are shaded by the plastic outer peripheral portion 512 corresponding to an observation on the mixing optical element 510 from one of the object side and the image side of the imaging lens assembly along the direction parallel to the optical axis X. That is, when observing the mixing optical element 510 from the object side and the image side of the imaging lens assembly along the direction parallel to the optical axis X, the object-side edge line 5114 and the image-side edge line 5115 of the glass effective optical portion 511 cannot be observed.

In Fig. 5E, each of the recess structures 5121 is formed by the inner surface 5124 and the side surfaces 5122 connecting to each other and surrounding an outer space 515. A bottom surface 5125 is exposed from the inner space 514 corresponding to an observation on the inner space 514 of each of the recess structures 5121 from the object side or the image side of the imaging lens assembly along the direction parallel to the optical axis X. In detail, the outer space 515 is an open space surrounded and defined by the inner surface 5124 and the side surfaces 5122. In order to make the representation of the outer space 515 clearer, an imaginary line 5151 is shown in Fig. 5E. The imaginary line 5151 extends along the outer side of the plastic outer peripheral portion 512 in the direction perpendicular to the optical axis X and the position on the most object side of the side surfaces 5122 to frame a space, which is the outer space 515. Specifically, in the 1st example of the 5th embodiment, a bottom surface 5125 can be exposed from the outer space 515 corresponding to an observation on the outer space 515 of each of the recess structures 5121 from the object side of the imaging lens assembly along the direction parallel to the optical axis X. In other words, each of the recess structures 5121 includes the bottom surface 5125 which is connected to the inner surface 5124 and is perpendicular to the optical axis X.

In Fig. 5E, the plastic outer peripheral portion 512 can further include at least one bearing structure 520. The bearing structure 520 is used to bear the optical elements adjacent to the bearing structure 520. In detail, in the 1st example of the 5th embodiment of the present disclosure, the amount of the bearing structures 520 is three. The relationship between the bearing structures 520 and the adjacent optical elements can be the same as or similar to the aforementioned first to third embodiments as required, and is not described again herein.

In Figs. 5B and 5F, when a maximum thickness of the plastic outer peripheral portion 512 along the direction parallel to the optical axis X is T, a maximum depth of each of the recess structures 5121 extending along the direction parallel to the optical axis X is D, a maximum diameter of the connecting surface 5113 of the glass effective optical portion 511 is $\psi$Do, a maximum diameter of the bearing structure 520 of the plastic outer peripheral portion 512 is $\psi$Dp, a linear expansion coefficient of the glass effective optical portion 511 is CTEg, and a linear expansion coefficient of the plastic outer peripheral portion 512 is CTEp, the following conditions of the Table 8 are satisfied.

| Table 8, 1st example of 5th embodiment | | | |
|---|---|---|---|
| D (mm) | 0.62 | $\psi$Do (mm) | 5.6 |
| T (mm) | 1.44 | $\psi$Dp (mm) | 5.8 |
| D/T | 0.43 | CTEp ($10^{-7}$/°C) | 650 |
| CTEg ($10^{-7}$/°C) | 81 | CTEp/CTEg | 8.0 |

Further, in the 1st example of the 5th embodiment, when a coaxality of the maximum diameter $\psi$Do of the connecting surface 5113 of the glass effective optical portion 511 and the maximum diameter $\psi$Dp of the bearing structure 520 of the plastic outer peripheral portion 512 is Co, the following conditions are satisfied: 0 mm < Co < 0.005 mm.

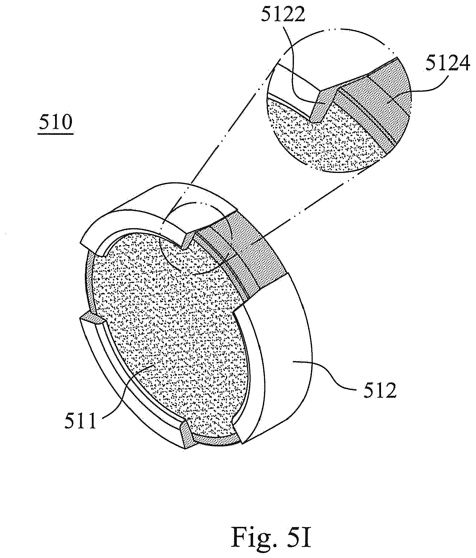

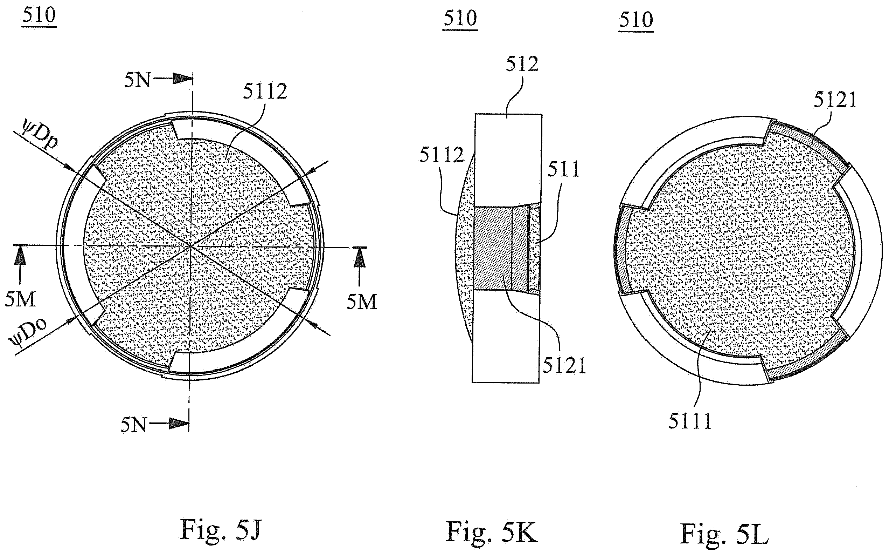

Fig. 5I is a three-dimensional view of a mixing optical element 510 of an imaging lens assembly according to the 2nd example of the 5th embodiment of the present disclosure. Fig. 5J is a plan view of an image side of the mixing optical element 510 according to Fig. 5I. Fig. 5K is a side view of the mixing optical element 510 according to Fig. 5I. Fig. 5L is a plan view of the object side of the mixing optical element 510 according to Fig. 5I. In Figs. 5I to 5L, the mixing optical element 510 of the imaging lens assembly in the 2nd example of the 5th embodiment includes a glass effective optical portion 511 and a plastic outer peripheral portion 512. The optical axis X passes through the glass effective optical portion 511. The plastic outer peripheral portion 512 surrounds and physically contacts the glass effective optical portion 511 and forms an aperture hole (its reference numeral is omitted). It is noted that the imaging lens assembly of the 2nd example of the 5th embodiment can be composed of the mixing optical element 510 and other optical elements of any of the aforementioned examples of any of the aforementioned embodiments, and the other optical elements of the imaging lens assembly are not described herein.

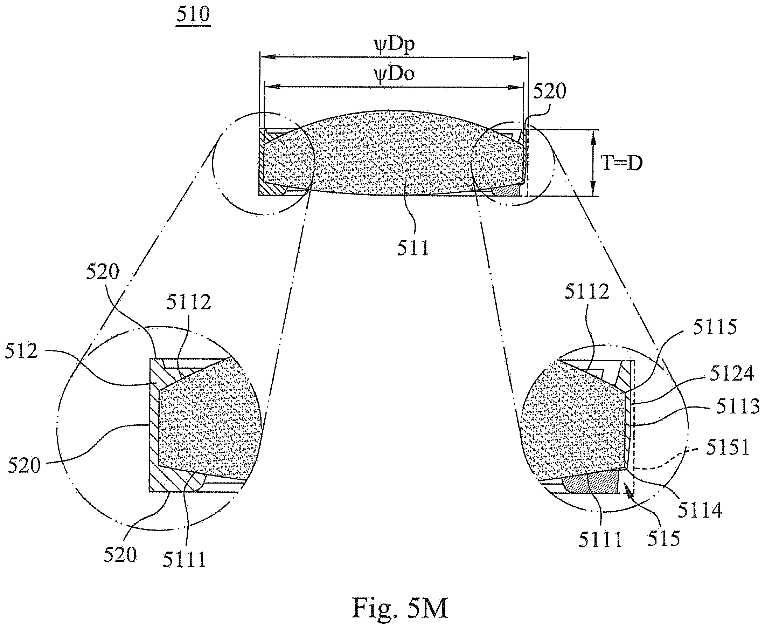

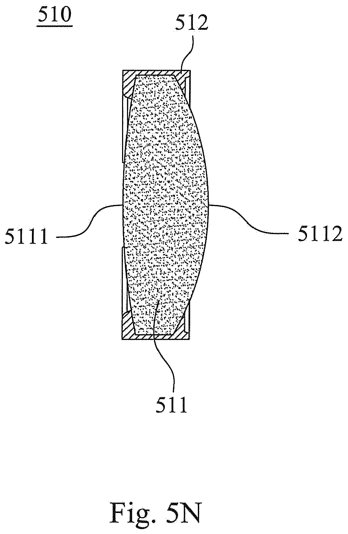

Fig. 5M is a cross-sectional view of Fig. 5J along line 5M-5M. Fig. 5N is a cross-sectional view of Fig. 5J along line 5N-5N. The glass effective optical portion 511 includes an object-side surface 5111, an image-side surface 5112 and a connecting surface 5113. The object-side surface 5111 faces towards an object side of the imaging lens assembly. The image-side surface 5112 faces towards an image side of the imaging lens assembly and is disposed opposite to the object-side surface 5111. The connecting surface 5113 surrounds the optical axis X and connects the object-side surface 5111 and the image-side surface 5112. Both of the object-side surface 5111 and the image-side surface 5112 of the glass effective optical portion 511 physically contact the plastic outer peripheral portion 512. That is, there is no gap at the physically contact position. Both of the object-side surface 5111 and the image-side surface 5112 of the glass effective optical portion 511 overlap with the plastic outer peripheral portion 512 along the direction parallel to the optical axis X. A connecting position of the object-side surface 5111 and the connecting surface 5113 of the glass effective optical portion 511 has an object-side edge line 5114, and the object-side edge line 5114 defines a maximum contour of the object-side surface 5111. A connecting position of the image-side surface 5112 and the connecting surface 5113 of the glass effective optical portion 511 has an image-side edge line 5115, and the image-side edge line 5115 defines a maximum contour of the image-side surface 5112.

The plastic outer peripheral portion 512 has at least three recess structures 5121 arranged and disposed along a circumference direction around the optical axis X. The recess structures 5121 extend from one of the object side and the image side of the imaging lens assembly to the other thereof along a direction parallel to the optical axis X. In the 2nd example of the 5th embodiment of the present disclosure, the amount of the recess structures 5121 is three, and each of the recess structures 5121 extends from the object side to the image side of the imaging lens assembly. Each of the recess structures 5121 includes an inner surface 5124 and two side surfaces 5122. The side surfaces 5122 connect the inner surface 5124 and the aperture hole. The inner surface 5124 is a surface of the recess structures 5121 which away from the optical axis X. The connecting surface 5113 of the glass effective optical portion 511 is closer to the optical axis X than the inner surface 5124 of each of the recess structures 5121 to the optical axis X. The connecting surface 5113 of the glass effective optical portion 511 overlaps with the inner surface 5124 of each of the recess structures 5121 along a direction perpendicular to the optical axis X.

In Figs. 5J, 5L and 5M, the object-side edge line 5114 and the image-side edge line 5115 are shaded by the plastic outer peripheral portion 512 corresponding to an observation on the mixing optical element 510 from one of the object side and the image side of the imaging lens assembly along the direction parallel to the optical axis X. That is, when observing the mixing optical element 510 from the object side and the image side of the imaging lens assembly along the direction parallel to the optical axis X, the object-side edge line 5114 and the image-side edge line 5115 of the glass effective optical portion 511 cannot be observed.

In Figs. 5I and 5M, each of the recess structures 5121 is formed by the inner surface 5124 and the side surfaces 5122 connecting to each other and surrounding an outer space 515. In detail, the outer space 515 is an open space surrounded and defined by the inner surface 5124 and the side surfaces 5122. In order to make the representation of the outer space 515 clearer, an imaginary line 5151 is shown in Fig. 5M. The imaginary line 5151 extends along the outer side of the plastic outer peripheral portion 512 in the direction perpendicular to the optical axis X and the position on the most object side of the side surfaces 5122 to frame a space, which is the outer space 515.

In Fig. 5M, the plastic outer peripheral portion 512 can further include at least one bearing structure 520. The bearing structure 520 is used to bear the optical elements adjacent to the bearing structure 520. In detail, in the 2nd example of the 5th embodiment of the present disclosure, the amount of the bearing structures 520 is three. The relationship between the bearing structures 520 and the adjacent optical elements can be the same as or similar to the aforementioned first to third embodiments as required, and is not described again herein.

In Figs. 5J and 5M, when a maximum thickness of the plastic outer peripheral portion 512 along the direction parallel to the optical axis X is T, a maximum depth of each of the recess structures 5121 extending along the direction parallel to the optical axis X is D, a maximum diameter of the connecting surface 5113 of the glass effective optical portion 511 is $\psi Do$, a maximum diameter of the bearing structure 520 of the plastic outer peripheral portion 512 is $\psi Dp$, a linear expansion coefficient of the glass effective optical portion 511 is CTEg, and a linear expansion coefficient of the plastic outer peripheral portion 512 is CTEp, the following conditions of the Table 9 are satisfied.

| Table 9, 2nd example of 5th embodiment | | | |
|---|---|---|---|
| D (mm) | 1.44 | $\psi Do$ (mm) | 5.6 |
| T (mm) | 1.44 | $\psi Dp$ (mm) | 5.8 |
| D/T | 1 | CTEp ($10^{-7}$/°C) | 650 |
| CTEg ($10^{-7}$/°C) | 81 | CTEp/CTEg | 8.0 |

Further, in the 2nd example of the 5th embodiment, when a coaxality of the maximum diameter $\psi Do$ of the connecting surface 5113 of the glass effective optical portion 511 and the maximum diameter $\psi Dp$ of the bearing structure 520 of the plastic outer peripheral portion 512 is Co, the following condition is satisfied: 0 mm < Co < 0.005 mm.

<6th embodiment>

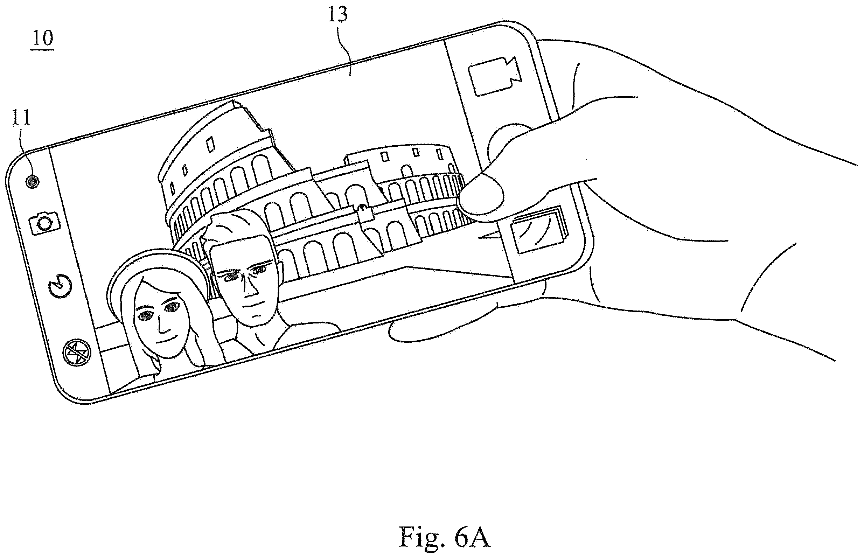

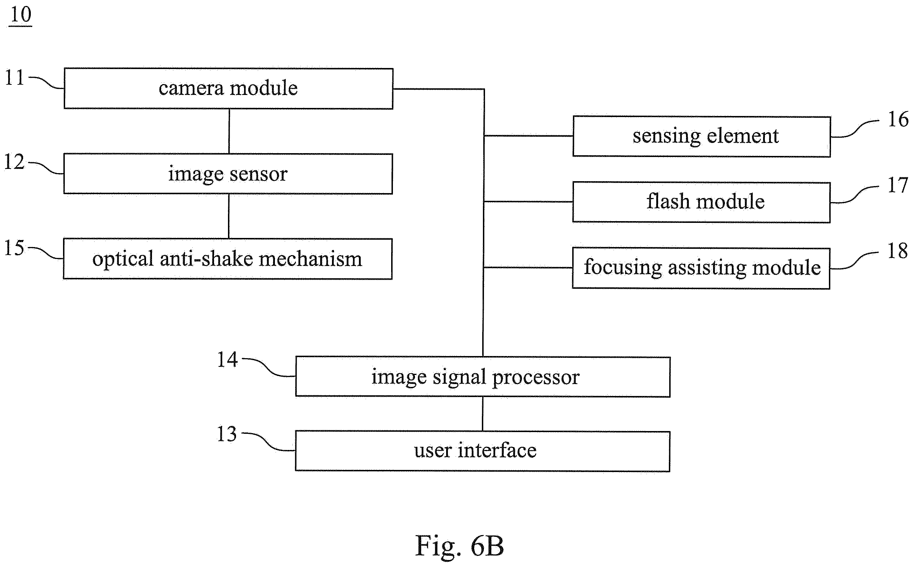

Fig. 6A is a schematic view of an electronic device 10 according to the 6th embodiment of the present disclosure. Fig. 6B is a block diagram of the electronic device 10 according to the 6th embodiment of Fig. 6A. In Figs. 6A and 6B, the electronic device 10 is a smart phone which includes a camera module 11, an image sensor 12 and a user interface 13. The image sensor 12 is disposed on an image surface of the camera module 11. The camera module 11 includes an imaging lens assembly (not shown). The camera module 11 of the 6th embodiment is disposed to a lateral area of the user interface 13, wherein the user interface 13 can be a touch screen or a display screen, but is not limited thereto. The camera module 11 can be any example of the aforementioned 1st to 5th embodiments, but is not limited thereto.

Furthermore, users enter a shooting mode via the user interface 13 of the electronic device 10. At this time, the imaging light is gathered on the image sensor 12 via the camera module 11, and an electronic signal about an image is output to an image signal processor (ISP) 14.

To meet a specification of the camera module of the electronic device 10, the electronic device 10 can further include an optical anti-shake mechanism 15, which can be an optical image stabilization (OIS). Furthermore, the electronic device 10 can further include at least one auxiliary optical element (its reference numeral is omitted) and at least one sensing element 16. According to the 6th embodiment, the auxiliary optical element is a flash module 17 and a focusing assisting module 18. The flash module 17 can be for compensating a color temperature, and the focusing assisting module 18 can be an infrared distance measurement component, a laser focus module, etc. The sensing element 16 can have functions for sensing physical momentum and kinetic energy, such as an accelerator, a gyroscope, a Hall Effect Element, to sense shaking or jitters applied by hands of the user or external environments. Accordingly, an auto-focusing mechanism and the optical anti-shake mechanism 15 disposed on the camera module 11 of the electronic device 10 can be enhanced to achieve the superior image quality. Furthermore, the electronic device 10 according to the present disclosure can have a capturing function with multiple modes, such as taking optimized selfies, high dynamic range (HDR) under a low light condition, 4K resolution recording, etc. Furthermore, the users can visually see a captured image of the camera through the touch screen and manually operate the view finding range on the touch screen to achieve the autofocus function of what you see is what you get.

In addition, the electronic device 10 can further include, but not limited to the display unit, the control unit, the storage unit, the RAM, the ROM or other combinations.

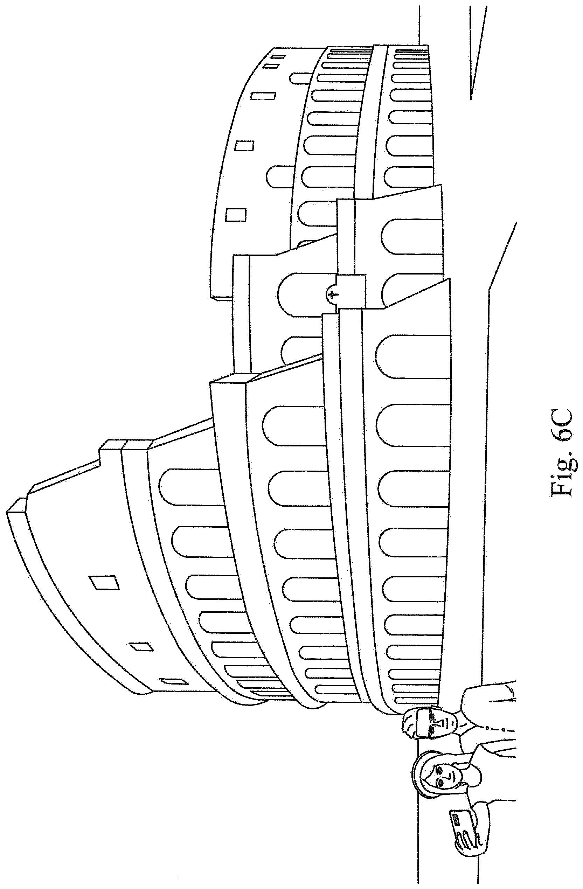

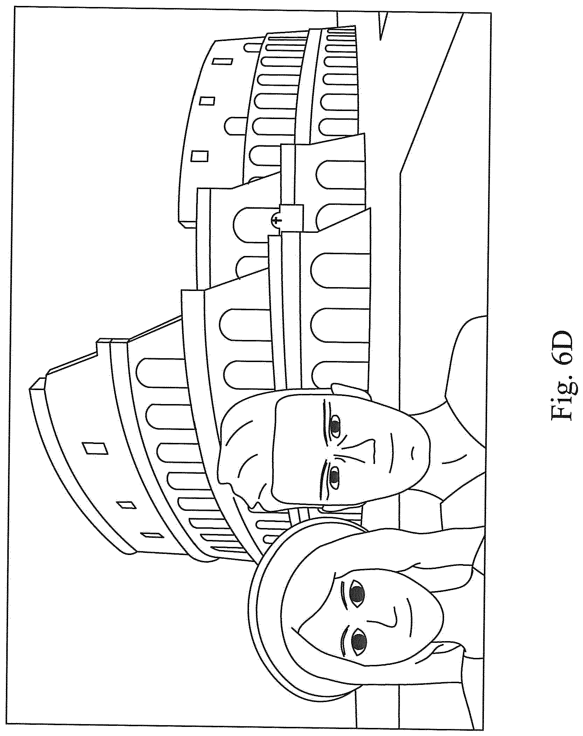

Fig. 6C is a schematic view of selfie scene according to the 6th embodiment of Fig. 6A. Fig. 6D is a schematic view of shot image according to the 6th embodiment of Fig. 6A. From Fig. 6A to Fig. 6D, the camera module 11 and the user interface 13 face towards the users. When proceeding selfie or live streaming, the users can watch a captured image and operate an interface at the same time, and the capture image as Fig. 6D can be obtained after shooting. Therefore, better shooting experience can be provided via the camera module 11 of the present disclosure.

**Claims**

1. An imaging lens assembly (100) **characterized in** comprising a plurality of optical elements, and defining an optical axis (X) passing through the optical elements, the optical elements comprising at least one mixing optical element (110), the at least one mixing optical element (110) comprising:

   a glass effective optical portion (111), the optical axis (X) passing through the glass effective optical portion (111), and the glass effective optical portion (111) comprising:

   an object-side surface (1111) facing towards an object side of the imaging lens assembly (100);
   an image-side surface (1112) facing towards an image side of the imaging lens assembly (100) and disposed opposite to the object-side surface (1111); and
   a connecting surface (1113) surrounding the optical axis (X) and connecting the object-side surface (1111) and the image-side surface (1112); and

   a plastic outer peripheral portion (112) surrounding and physically contacting the glass effective optical portion (111), and forming an aperture hole (113), the plastic outer peripheral portion (112) having at least three recess structures (1121) arranged and disposed along a circumference direction around the optical axis (X), the at least three recess structures (1121) extending from one of the object side and the image side of the imaging lens assembly (100) to the other thereof along a direction parallel to the optical axis (X), each of the recess structures (1121) comprising:

   an outer surface (1123);

an inner surface (4124) disposed opposite to the outer surface (1123) and closer to the optical axis (X) than the outer surface (1123) to the optical axis (X); and

two side surfaces (1122) connecting the outer surface (1123) and the inner surface (4124);

wherein the connecting surface (1113) of the glass effective optical portion (111) is closer to the optical axis (X) than the inner surface (4124) of each of the recess structures (1121) to the optical axis (X);

wherein the connecting surface (1113) of the glass effective optical portion (111) overlaps with the inner surface (4124) of each of the recess structures (1121) along a direction perpendicular to the optical axis (X);

wherein a maximum thickness of the plastic outer peripheral portion (112) along the direction parallel to the optical axis (X) is T, a maximum depth of at least one of the recess structures (1121) extending along the direction parallel to the optical axis (X) is D, and the following condition is satisfied:

$$0.1 < D/T < 0.8.$$

2. The imaging lens assembly (100) of claim 1, wherein each of the recess structures (1121) is formed by the outer surface (1123), the inner surface (4124) and the two side surfaces (1122) connecting to each other and surrounding an inner space (114).

3. The imaging lens assembly (100) of claims 1 or 2, wherein a connecting position of the object-side surface (1111) and the connecting surface (1113) of the glass effective optical portion (111) has an object-side edge line (1114), and the object-side edge line (1114) defines a maximum contour of the object-side surface (1111).

4. The imaging lens assembly (100) of any one of claims 1 to 3, wherein a connecting position of the image-side surface (1112) and the connecting surface (1113) of the glass effective optical portion (111) has an image-side edge line (1115), and the image-side edge line (1115) defines a maximum contour of the image-side surface (1112).

5. The imaging lens assembly (100) of any one of claims 1 to 4, wherein the object-side edge line (1114) and the image-side edge line (1115) are shaded by the plastic outer peripheral portion (112) corresponding to observations on the at least one mixing optical element (110) from both of the object side and the image side of the imaging lens assembly (100) along the direction parallel to the optical axis (X).

6. The imaging lens assembly (100) of any one of claims 1 to 5, wherein a bottom surface (2125) is exposed from the inner space (114) corresponding to an observation on the inner space (114) of each of the recess structures (1121) from the object side or the image side of the imaging lens assembly (100) along the direction parallel to the optical axis (X).

7. The imaging lens assembly (100) of any one of claims 1 to 6, wherein both of the object-side surface (1111) and the image-side surface (1112) of the glass effective optical portion (111) physically contact the plastic outer peripheral portion (112).

8. The imaging lens assembly (100) of any one of claims 1 to 7, wherein both of the object-side surface (1111) and the image-side surface (1112) of the glass effective optical portion (111) overlap with the plastic outer peripheral portion (112) along the direction parallel to the optical axis (X).

9. The imaging lens assembly (100) of any one of claims 1 to 8, wherein a linear expansion coefficient of the glass effective optical portion (111) is CTEg, a linear expansion coefficient of the plastic outer peripheral portion (112) is CTEp, and the following condition is satisfied:

$$1 < CTEp/CTEg < 50.$$

10. The imaging lens assembly (100) of any one of claims 1 to 9, wherein the linear expansion coefficient of the glass effective optical portion (111) is CTEg, the linear expansion coefficient of the plastic outer peripheral portion (112) is CTEp, and the following condition is satisfied:

$$5 < CTEp/CTEg < 25.$$

11. An imaging lens assembly (100) **characterized in** comprising a plurality of optical elements, and defining an optical axis (X) passing through the optical elements, the optical elements comprising at least one mixing optical element (110), the at least one mixing optical element (110) comprising:

a glass effective optical portion (111), the optical axis (X) passing through the glass effective optical portion (111), and the glass effective optical portion (111) comprising:

an object-side surface (1111) facing towards an object side of the imaging lens assembly (100);
an image-side surface (1112) facing towards an image side of the imaging lens assembly (100) and disposed opposite to the object-side surface (1111); and
a connecting surface (1113) surrounding the optical axis (X) and connecting the object-side surface (1111) and the image-side surface (1112); and

a plastic outer peripheral portion (112) surrounding and physically contacting the glass effective optical portion (111), and forming an aperture hole (113), the plastic outer peripheral portion (112) having at least three recess structures (1121) arranged and disposed along a circumference direction around the optical axis (X), the at least three recess structures (1121) extending from one of the object side and the image side of the imaging lens assembly (100) to the other thereof along a direction parallel to the optical axis (X), each of the recess structures (1121) comprising:

an outer surface (1123); and
two side surfaces (1122) connecting the outer surface (1123) and the aperture hole (113);

wherein the connecting surface (1113) of the glass effective optical portion (111) is closer to the optical axis (X) than the outer surface (1123) of each of the recess structures (1121) to the optical axis (X);
wherein the connecting surface (1113) of the glass effective optical portion (111) overlaps with the outer surface (1123) of each of the recess structures (1121) along a direction perpendicular to the optical axis (X);
wherein a maximum thickness of the plastic outer peripheral portion (112) along the direction parallel to the optical axis (X) is T, a maximum depth of at least one of the recess structures (1121) extending along the direction parallel to the optical axis (X) is D, and the following condition is satisfied:

$$0.1 < D/T < 0.95.$$

12. The imaging lens assembly (100) of claim 11, wherein each of the recess structures (1121) is formed by the outer surface (1123) and the two side surfaces (1122) connecting to each other and surrounding an inner space (114).

13. The imaging lens assembly (100) of claims 11 or 12, wherein a connecting position of the object-side surface (1111) and the connecting surface (1113) of the glass effective optical portion (111) has an object-side edge line (1114), and the object-side edge line (1114) defines a maximum contour of the object-side surface (1111).

14. The imaging lens assembly (100) of any one of claims 11 to 13, wherein a connecting position of the image-side surface (1112) and the connecting surface (1113) of the glass effective optical portion (111) has an image-side edge line (1115), and the image-side edge line (1115) defines a maximum contour of the image-side surface (1112).

15. The imaging lens assembly (100) of any one of claims 11 to 14, wherein corresponding to an observation on each of the recess structures (1121) from the object side or the image side along the direction parallel to the optical axis (X), an arc length of a part of the object-side edge line (1114) exposed from the inner space (114) of each of the recess structures (1121) is Ao, a sum of the arc lengths of the object-side edge line (1114) exposed from the inner space (114) of each of the recess structures (1121) is $\Sigma$Ao, an arc length of a part of the image-side edge line (1115) exposed from the inner space (114) of each of the recess structures (1121) is Ai, a sum of the arc lengths of the image-side edge line (1115) exposed from the inner space (114) of each of the recess structures (1121) is $\Sigma$Ai, a shading ratio of the object-side edge line (1114) shaded by the plastic outer peripheral portion (112) is Ro, a shading ratio of the image-side edge line (1115) shaded by the plastic outer peripheral portion (112) is Ri, a maximum diameter of the connecting surface (1113) of the glass effective optical portion (111) is $\psi Do$, and at least one of the following conditions is satisfied:

$$30\% < Ro, \text{ wherein } Ro = 1 - \Sigma Ao/(\psi Do \times \pi);$$

and

$$10\% < Ri < 95\%, \text{ wherein } Ri = 1 - \Sigma Ai/(\psi Do \times \pi).$$

16. The imaging lens assembly (100) of any one of claims 11-15, wherein a part of the object-side edge line (1114), a part of the image-side edge line (1115) and an air gap are exposed from the inner space (114) of each of the recess structures (1121) corresponding to observations on each of the recess structures (1121) from both of the object side and the image side of the imaging lens assembly (100) along the direction parallel to the optical axis (X).

17. The imaging lens assembly (100) of any one of claims 11 to 16, wherein a part of the object-side edge line (1114) and a bottom surface (2125) are exposed from the inner space (114) of each of the recess structures (1121) corresponding to an observation on each of the recess structures (1121) from the object side of the imaging lens assembly (100) along the direction parallel to the optical axis (X).

18. The imaging lens assembly (100) of any one of claims 11 to 17, wherein a part of the image-side edge line (1115) and a bottom surface (2125) are exposed from the inner space (114) of each of the recess structures (1121) corresponding to an observation on each of the recess structures (1121) from the image side of the imaging lens assembly (100) along the direction parallel to the optical axis (X).

19. The imaging lens assembly (100) of any one of claims 11 to 18, wherein both of the object-side surface (1111) and the image-side surface (1112) of the glass effective optical portion (111) physically contact the plastic outer peripheral portion (112).

20. The imaging lens assembly (100) of any one of claims 11 to 19, wherein both of the object-side surface (1111) and the image-side surface (1112) of the glass effective optical portion (111) overlap with the plastic outer peripheral portion (112) along the direction parallel to the optical axis (X).

21. The imaging lens assembly (100) of any one of claims 11 to 20, wherein the plastic outer peripheral portion (112) further comprises:

at least one bearing structure (120) used to bear at least one of the optical elements adjacent to the bearing structure (120); and
at least one optical aligning structure (130) used to align the at least one optical element adjacent to the optical aligning structure (130).

22. The imaging lens assembly (100) of any one of claims 11 to 21, wherein a maximum diameter of the connecting surface (1113) of the glass effective optical portion (111) is $\psi Do$, a minimum diameter of the optical aligning structure (130) of the plastic outer peripheral portion (112) is $\psi Da$, a maximum diameter of the at least one bearing structure (120) of the plastic outer peripheral portion (112) is $\psi Dp$, and the following condition is satisfied:

$$\psi Do < \psi Da < \psi Dp.$$

23. The imaging lens assembly (100) of any one of claims 11 to 22, wherein a coaxality of the maximum diameter $\psi Do$ of the connecting surface (1113) of the glass effective optical portion (111) and the maximum diameter $\psi Dp$ of the at least one bearing structure (120) of the plastic outer peripheral portion (112) is Co, and the following condition is satisfied:

$$0 \text{ mm} < Co < 0.005 \text{ mm}.$$

24. The imaging lens assembly (100) of any one of claims 11 to 23, wherein a coaxality of the maximum diameter $\psi$Do of the connecting surface (1113) of the glass effective optical portion (111) and the minimum diameter $\psi$Da of the optical aligning structure (130) of the plastic outer peripheral portion (112) is Co1, and the following condition is satisfied:

$$0 \text{ mm} < Co1 < 0.003 \text{ mm}.$$

25. The imaging lens assembly (100) of any one of claims 11 to 24, wherein the at least one mixing optical element (110) has at least three gate traces (240).

26. An imaging lens assembly (100) **characterized in** comprising a plurality of optical elements, and defining an optical axis (X) passing through the optical elements, the optical elements comprising at least one mixing optical element (110), the at least one mixing optical element (110) comprising:
a glass effective optical portion (111), the optical axis (X) passing through the glass effective optical portion (111), and the glass effective optical portion (111) comprising:

an object-side surface (1111) facing towards an object side of the imaging lens assembly (100);
an image-side surface (1112) facing towards an image side of the imaging lens assembly (100) and disposed opposite to the object-side surface (1111); and
a connecting surface (1113) surrounding the optical axis (X) and connecting the object-side surface (1111) and the image-side surface (1112); and

a plastic outer peripheral portion (112) surrounding and physically contacting the glass effective optical portion (111) and forming an aperture hole (113), the plastic outer peripheral portion (112) having at least three recess structures (1121) arranged and disposed along a circumference direction around the optical axis (X), the at least three recess structures (1121) extending from one of the object side and the image side of the imaging lens assembly (100) to the other thereof along a direction parallel to the optical axis (X), each of the recess structures (1121) comprising:

an inner surface (4124); and
two side surfaces (1122) connecting the inner surface (4124) and the aperture hole (113);

wherein the connecting surface (1113) of the glass effective optical portion (111) is closer to the optical axis (X) than the inner surface (4124) of each of the recess structures (1121) to the optical axis (X);
wherein the connecting surface (1113) of the glass effective optical portion (111) overlaps with the inner surface (4124) of each of the recess structures (1121) along a direction perpendicular to the optical axis (X);
wherein a maximum thickness of the plastic outer peripheral portion (112) along the direction parallel to the optical axis (X) is T, a maximum depth of at least one of the recess structures (1121) extending along the direction parallel to the optical axis (X) is D, and the following condition is satisfied:

$$0.1 < D/T \leq 1.$$

27. The imaging lens assembly (100) of claim 26, wherein each of the recess structures (1121) is formed by the inner surface (4124) and the two side surfaces (1122) connecting to each other and surrounding an outer space (515).

28. The imaging lens assembly (100) of claims 26 or 27, wherein a connecting position of the object-side surface (1111) and the connecting surface (1113) of the glass effective optical portion (111) has an object-side edge line (1114), and the object-side edge line (1114) defines a maximum contour of the object-side surface (1111).

29. The imaging lens assembly (100) of any one of claims 26 to 28, wherein a connecting position of the image-side surface (1112) and the connecting surface (1113) of the glass effective optical portion (111) has an image-side edge line (1115), and the image-side edge line (1115) defines a maximum contour of the image-side surface (1112).

30. The imaging lens assembly (100) of any one of claims 26 to 29, wherein the object-side edge line (1114) and the image-side edge line (1115) are shaded by the plastic outer peripheral portion (112) corresponding to an observation on the at least one mixing optical element (110) from one of the object side and the image side of the imaging lens assembly (100) along the direction parallel to the optical axis (X).

31. The imaging lens assembly (100) of any one of claims 26 to 30, wherein a bottom surface (2125) is exposed from the outer space (515) corresponding to an observation on the outer space (515) of each of the recess structures (1121) from the object side or the image side of the imaging lens assembly (100) along the direction parallel to the optical axis (X).

32. The imaging lens assembly (100) of any one of claims 26 to 31 wherein an air gap is exposed from the outer space (515) corresponding to observations on the outer space (515) of each of the recess structures (1121) from both of the object side and the image side of the imaging lens assembly (100) along the direction parallel to the optical axis (X).

33. The imaging lens assembly (100) of any one of claims 26 to 32, wherein both of the object-side surface (1111) and the image-side surface (1112) of the glass effective optical portion (111) physically contact the plastic outer peripheral portion (112).

34. The imaging lens assembly (100) of any one of claims 26 to 33, wherein both of the object-side surface (1111) and the image-side surface (1112) of the glass effective optical portion (111) overlap with the plastic outer peripheral portion (112) along the direction parallel to the optical axis (X).

35. A camera module (11), **characterized in** comprising:
the imaging lens assembly (100) of any one of claims 1 to 34.

36. An electronic device (10), **characterized in** comprising:

the camera module (11) of claim 35; and
an image sensor (12) disposed on an image surface of the camera module (11).

EP 4 235 246 A1

Fig. 1A

## 100

Fig. 1B

## 100

Fig. 1C

EP 4 235 246 A1

Fig. 1D

EP 4 235 246 A1

Fig. 1E

Fig. 1H

Fig. 1G

Fig. 1F

Fig. 1I

EP 4 235 246 A1

EP 4 235 246 A1

110

112

1111

111

1112

Fig. 1J

110

112

1121

1112

1113

Fig. 1K

Fig. 1L

EP 4 235 246 A1

112

113

1121

1122

Fig. 1M

Fig. 1N

110

ψDo  1112

1S

ψDp

ψDa

1S  1R

1R

Ai

1115

110

112

110

114

1111

Ao

1114

Fig. 1O

Fig. 1P

Fig. 1Q

EP 4 235 246 A1

Fig. 1R

EP 4 235 246 A1

Fig. 1S

Fig. 1T

EP 4 235 246 A1

Fig. 2A

Fig. 2B

Fig. 2C

EP 4 235 246 A1

Fig. 2D

EP 4 235 246 A1

Fig. 2E

Fig. 2H

Fig. 2G

Fig. 2F

Fig. 2I

210

212

211

2111

2112

2113

Fig. 2J

210

2121

2112

212

2113

Fig. 2K

Fig. 2L

Fig. 2M

EP 4 235 246 A1

EP 4 235 246 A1

210

212

211

2121

Fig. 2N

210

2S    Ai

2115

$\psi Dp$

$\psi Do$

214

2R

$\psi Da$

2S

2112

**Fig. 2O**

210

212

**Fig. 2P**

210

240

2111

240

240

**Fig. 2Q**

EP 4 235 246 A1

EP 4 235 246 A1

Fig. 2R

Fig. 2S

EP 4 235 246 A1

Fig. 2T

Fig. 3A

Fig. 3B

Fig. 3C

EP 4 235 246 A1

Fig. 3D

Fig. 3E

Fig. 3F

Fig. 3G

EP 4 235 246 A1

Fig. 3H

EP 4 235 246 A1

Fig. 3I

310

$\psi Do$

$\psi Dp$

$\psi Da$

3N

314

3115

3M

3M

3N

3112

Ai

Fig. 3J

310

312

Fig. 3K

310

Ao

314

3111

3114

Fig. 3L

EP 4 235 246 A1

Fig. 3M

Fig. 3N

Fig. 30

Fig. 3P

EP 4 235 246 A1

Fig. 3Q

310

3121

311

312

Fig. 3R

Fig. 3S        Fig. 3T        Fig. 3U

Fig. 3V

EP 4 235 246 A1

310

312        311

D

T

Fig. 3W

310

312

3113

3121

Fig. 3X

Fig. 3Y

3123

3122

3125

313

312

Fig. 3Z

410

412

411

X

4121

Fig. 4A

Fig. 4D

Fig. 4C

Fig. 4B

Fig. 4E

410

412

411

414

Fig. 4F

410

412

4122

4124

4113

4111

414

4125

4123

Fig. 4G

EP 4 235 246 A1

4114

412

4115

413

X

4111

4121

Fig. 4H

EP 4 235 246 A1

Fig. 5A

EP 4 235 246 A1

5F

ψDp

5E                                    5E

ψDo

5112

5F

Fig. 5B

512

5112        5121

511

Fig. 5C

5121

5111

Fig. 5D

Fig. 5E

510

512

5112

5111

511

Fig. 5F

512

5113

5111

Fig. 5G

EP 4 235 246 A1

5113

5111

512

513

5121

X

510

Fig. 5H

Fig. 5I

Fig. 5J

Fig. 5K

Fig. 5L

Fig. 5M

EP 4 235 246 A1

Fig. 5N

Fig. 6A

EP 4 235 246 A1

Fig. 6B

10

11 camera module

12 image sensor

15 optical anti-shake mechanism

16 sensing element

17 flash module

18 focusing assisting module

14 image signal processor

13 user interface

Fig. 6C

Fig. 6D

Europäisches
Patentamt

European
Patent Office

Office européen
des brevets

# EUROPEAN SEARCH REPORT

Application Number

EP 23 15 6644

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2019 095463 A (FUJIFILM CORP) 20 June 2019 (2019-06-20)<br><br>* paragraphs [0004], [0017], [0050] – [0060], [0086], [0087]; figures 1,2,7 *<br>----- | 1-4,6, 9-14,17, 18, 26-29, 31,35,36 | INV.<br>G02B7/02<br>G03B17/12 |
| X | US 2019/302393 A1 (SHIROTORI TOSHIO [JP]) 3 October 2019 (2019-10-03)<br><br>* paragraphs [0038] – [0059]; figures 3-9 *<br>----- | 1-8, 11-24, 26-36 | |
| X | JP 2015 045750 A (KYOCERA CORP) 12 March 2015 (2015-03-12)<br><br>* paragraphs [0016] – [0027]; figures 2, 3 *<br>----- | 11-14, 21-24, 26-29, 35,36 | |
| X | JP 2001 051176 A (FUJI PHOTO FILM CO LTD) 23 February 2001 (2001-02-23)<br><br>* paragraphs [0014] – [0028]; figures 4,6 *<br>----- | 11-14, 17-20, 26-31, 33-36 | TECHNICAL FIELDS SEARCHED (IPC)<br><br>G03B<br>G02B |
| X | US 2018/088297 A1 (KOMIYAMA TADASHI [JP] ET AL) 29 March 2018 (2018-03-29)<br><br>* paragraphs [0045] – [0061]; figures 1, 2A, 2B, 2C *<br>----- | 1-5,7,8, 11-14, 19-30, 33-36 | |

The present search report has been drawn up for all claims

| Place of search | Date of completion of the search | Examiner |
|---|---|---|
| Munich | 12 July 2023 | Rückerl, Ralph |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 15 6644**

This annex lists the patent family members relating to the patent documents cited in the above-mentioned European search report.
The members are as contained in the European Patent Office EDP file on
The European Patent Office is in no way liable for these particulars which are merely given for the purpose of information.

**12-07-2023**

| Patent document cited in search report | | Publication date | Patent family member(s) | | Publication date |
|---|---|---|---|---|---|
| JP 2019095463 | A | 20-06-2019 | JP | 2019095463 A | 20-06-2019 |
| | | | WO | 2017168959 A1 | 05-10-2017 |
| US 2019302393 | A1 | 03-10-2019 | CN | 110320629 A | 11-10-2019 |
| | | | CN | 209674087 U | 22-11-2019 |
| | | | JP | 7103818 B2 | 20-07-2022 |
| | | | JP | 2019179075 A | 17-10-2019 |
| | | | US | 2019302393 A1 | 03-10-2019 |
| JP 2015045750 | A | 12-03-2015 | JP | 6262962 B2 | 17-01-2018 |
| | | | JP | 2015045750 A | 12-03-2015 |
| JP 2001051176 | A | 23-02-2001 | NONE | | |
| US 2018088297 | A1 | 29-03-2018 | CN | 107884901 A | 06-04-2018 |
| | | | EP | 3301493 A1 | 04-04-2018 |
| | | | JP | 2018054922 A | 05-04-2018 |
| | | | US | 2018088297 A1 | 29-03-2018 |

EPO FORM P0459

For more details about this annex : see Official Journal of the European Patent Office, No. 12/82